(19) **Europäisches Patentamt**

**European Patent Office**

**Office européen des brevets**

(11) **EP 1 375 628 A2**

(12) **EUROPEAN PATENT APPLICATION**

(43) Date of publication:
**02.01.2004 Bulletin 2004/01**

(51) Int Cl.⁷: **C10J 3/18, H05H 1/36, H05H 1/44, F23G 5/08, F23G 5/10, F23J 15/00, H01M 8/06**

(21) Application number: **03077553.0**

(22) Date of filing: **21.01.2000**

(84) Designated Contracting States:
**AT BE CH CY DE DK ES FI FR GB GR IE IT LI LU MC NL PT SE**

(62) Document number(s) of the earlier application(s) in accordance with Art. 76 EPC:
**00911620.3 / 1 248 827**

(71) Applicant: **INTEGRATED ENVIRONMENTAL TECHNOLOGIES, LLC.**
**Carle Place, NY 11514 (US)**

(72) Inventors:
• **Titus, Charles H.**
**Newtown Square, PA 19073 (US)**

• **Surma, Jeffrey E.**
**Richland, Washington 99352 (US)**

(74) Representative: **Greenwood, John David et al**
**Graham Watt & Co.**
**St. Botolph's House**
**7-9 St. Botolph's Road**
**Sevenoaks Kent TN13 3AJ (GB)**

Remarks:
This application was filed on 14 - 08 - 2003 as a divisional application to the application mentioned under INID code 62.

(54) **Methods and apparatus for treating waste**

(57)    Methods and apparatus for treating waste are provided. Waste is converted in an arc plasma-joule heated melter system (21) utilizing one or more arc plasma electrodes (27) and a plurality of joule heating electrodes (24). The arc plasma electrode(s) (27) can be configured for operation utilizing the AC or DC power, or for switching between AC and DC power. The arc plasma electrodes (27) can also be configured for independent arc voltage and arc current control. The joule heating circuits are configured for simultaneous operation with the arcing electrodes, but without detrimental interaction with the arcing electrodes. The systems provide stable, non-leachable products and a gaseous fuel. The gaseous fuel can be utilized in a combustion or non-combustion process to generate electricity.

FIG.8E

EP 1 375 628 A2

**Description**

**CROSS-REFERENCE TO RELATED APPLICATIONS**

This application is a continuation-in-part application of U.S. Serial No. 08/693,425, filed August 7, 1996, now pending and which is a continuation-in-part application of U.S. Serial Nos. 08/621,424 and 08/622,762, both filed March 25, 1996, both now pending and both of which are continuations-in-part applications of U.S. Serial No. 08/492,429, filed June 19, 1995, now pending and which is a continuation-in-part application of U.S. Serial No. 08/382,730, filed February 2, 1995, now U.S. Patent No. 5,666,891; all of which are incorporated herein by reference.

**TECHNICAL FIELD**

The present invention generally relates to methods and apparatus for the treatment of waste and more particularly to methods and apparatus for the treatment of waste using arc plasma - joule heated melter systems.

**BACKGROUND OF THE INVENTION**

The disposal of municipal solid waste (MSW) and other waste has become a major issue over the past few decades due to space limitations for landfills and problems associated with siting new incinerators. In addition, increased environmental awareness has resulted in a major concern of many large metropolitan areas and to the country as a whole to ensure that the disposal of solid waste is properly handled. *See e.g.,* USA EPA, The Solid Waste Dilemma: An Agenda for Action, EPA/530-SW-89-019, Washington, D.C. (1989).
Attempts have been made to reduce the volume and recover the energy content of MSW through incineration and cogeneration. The standard waste-to-energy incinerator will process the solid combustible fraction of the waste stream, produce steam to drive a steam turbine, and as a result of the combustion process produce a waste ash material. Typically, the ash is buried in a municipal landfill. Current trends and recent rulings, however, may require such material to be shipped to landfills permitted for hazardous waste. This will substantially increase ash disposal costs. Moreover, there is increased public concern about gaseous emissions from landfills and the possibility of contamination of groundwater. Another disadvantage associated with incinerator systems is the production of large quantities of gaseous emissions resulting in the need for costly air pollution control systems in an attempt to decrease emission levels to comply with requirements imposed by regulatory agencies.
In order to overcome the shortcomings associated with incinerator systems, attempts have been made in the prior art to utilize arc plasma torches to destroy toxic wastes. The use of arc plasma torches provides an advantage over traditional incinerator or combustion processes under certain operating conditions because the volume of gaseous products formed from the plasma arc torch may be significantly less than the volume produced during typical incineration or combustion, fewer toxic materials are in the gaseous products, and under some circumstances the waste material can be glassified.
For example, U.S. Patent No. 5,280,757 to Carter *et al.* discloses the use of a plasma arc torch in a reactor vessel to gasify municipal solid waste. A product having a medium quality gas and a slag with a lower toxic element leachability is produced thereby.
U.S. Patent No. 4,644,877 to Barton *et al.* relates to pyrolytic destruction of polychlorinated biphenyls (PCBs) using a plasma arc torch. Waste materials are atomized and ionized by a plasma arc torch and are then cooled and recombined into gas and particulate matter in a reaction chamber. U.S. Patent No. 4,431,612 to Bell *et al.* discusses a hollow graphite electrode transfer arc plasma furnace for treatment of hazardous wastes such as PCBs.
A process for remediation of lead-contaminated soil and waste battery material is disclosed in U.S. Patent No. 5,284,503 to Bitler *et al.* A vitrified slag is formed from the soil. Combustible gas and volatized lead, which are formed from the waste battery casings, are preferably transferred to and used as a fuel for a conventional smelting furnace.
The systems proposed by Barton *et al,* Bell *et al,* Carter *et al,* and Bitler *et al* have significant disadvantages. For example, such disadvantages include insufficient heating, mixing and residence time to ensure high quality, nonleachable glass production for a wide range of waste feeds. Additionally, hearth size and feeder design are significantly limited since furnace walls must be relatively close to the arc plasma which is the only heat source. High thermal stress on the walls of the furnace often occurs as a result of the limitation on the hearth size.
Prior art arc plasma furnaces with metal electrodes further may be limited by short electrode lifetime when used at higher DC current. Therefore, to achieve higher power output, the arc potential must be raised by lengthening the arc. This results in radiative thermal losses to the furnace side walls and leads to metal electrode (torch) ineffectiveness. In addition, there are often difficulties associated with prior art transfer arc plasmas in start-up and restarting of such arc plasma systems when cold, nonelectrically conducting material is being processed.

Another disadvantage associated with prior art systems is the inefficient use of combustible gases produced during conversion of waste materials. For example, combustion of gases often does not result in a high conversion rate and is thus inefficient. In addition, the combustion of such gases frequently results in the emission of pollutants such as oxides of nitrogen ($NO_x$) in amounts that render the process environmentally unattractive.

Thus, while such prior art attempts have been useful, there remains a need in the art for a robust, easy to operate waste conversion system which minimizes hazardous gaseous emissions and which maximizes conversion of a wide range of solid waste into useful energy and produces a product stream which is in a safe, stable form for commercial use or which does not require special hazardous waste considerations for disposal.

It would therefore be desirable to provide robust, user friendly and highly flexible methods and apparatus for processing and converting a wide range of waste materials into useful energy and stable products while minimizing hazardous gaseous emissions, thereby overcoming the shortcomings associated with the prior art.

**SUMMARY OF THE INVENTION**

The present invention provides methods and apparatus for increased conversion of solid waste materials such as municipal and industrial waste to useful energy with greatly reduced air pollution. The present invention additionally provides methods and apparatus for converting a wide range of waste materials to useful commercial products or to safe, stable products which are suitable for disposal. For example, the systems of the present invention are capable of processing municipal solid waste (MSW), industrial waste or other waste forms into stable nonleachable products (*e.g.* crystalline and noncrystalline products) which are suitable for use commercially or which can be disposed of without risk to the environment. The systems also minimize air emissions and maximize production of a useful gas product for the production of electricity. The present invention further provides compact waste-to-energy processing systems that have the advantage of complete or substantially complete conversion of waste materials into a useful gas and a product stream at a single location.

The methods and apparatus of the present invention for converting waste materials employ combinations of an independently controllable arc plasma or plasmas and a joule heated melter as an integrated system. In a preferred embodiment of the invention, a fully integrated joule heated melter and arc plasma or plasmas are utilized for the conversion of waste materials. The joule heated melter and arc plasma or plasmas are configured for simultaneous operation with a common molten pool without detrimental interaction of the power supplies and with independent control of the power to each of the joule heated melter portion of the system and the arc plasma portion of the system.

As stated above, the products formed from the conversion process of the invention are useful commercial products or stable products suitable for disposal. In addition, the present invention allows the use of fast pyrolysis, thereby providing a high purity gas suitable for use in combustion and non-combustion processes. For example, the gases produced in accordance with the invention can be used to generate electricity using a small, highly efficient gas turbine or internal combustion engine. In some embodiments, the waste conversion units of the invention can be self-powered or can provide a given level of electricity for outside use. This may be accomplished by utilizing an auxiliary fuel, such as natural gas, diesel or some other fuel, in varying amounts in the gas turbine or internal combustion engine.

In alternative embodiments of the invention, environmentally attractive low emission internal combustion engine-generator systems (or gas turbine systems) for waste treatment units are provided to greatly improve efficiency and pollution reduction. This is accomplished by utilizing multi-fuel (e.g. hydrogen-rich gas, natural gas, diesel oil) operation of the spark ignition engine at ultra lean ratios of fuel to air. Ultra lean operation is made possible by the fast flame front characteristic of the hydrogen in the hydrogen-rich gas produced by the waste treatment unit. In addition, very high compression ratios could be used in the internal combustion engine. Variable fuel operation is made possible by control and fuel processing systems that ensure that ultra lean, high compression ratio engine requirements for smooth burn ignition and lack of knock are met under continually varying fuel conditions.

It is expected that the high efficiency, low emission internal combustion engine-generator systems could increase the efficiency of conversion of gaseous fuel to electricity by up to approximately 40% (for example from 30 to 42%). It is also expected that by operating at ultra lean conditions such systems can reduce $NO_x$ emission by factors of more than ten relative to standard internal combustion engine-generator systems. An additional objective of the invention is to provide an option to utilize such systems to reduce carbon monoxide and hydrocarbon emissions by factors of more than ten by using highly robust and simple oxidation catalysts. For example, the invention provides environmentally attractive systems designed to utilize spark ignition internal combustion engines at ultra lean ratios of fuel to air (in the range of about 0.4-0.7 relative to stoichiometric ratios) and at very high compression ratios, *e.g.* r in the range from about 12 to 15, or for operating turbines at ultra lean ratios of fuel to air so as to significantly reduce levels of $NO_x$ production.

In another embodiment of the invention, the off-gas from the waste conversion unit can be employed in a non-combustion process. This can be accomplished by integrating the waste conversion units with fuel cell systems for the efficient and environmentally favorable production of electrical energy from waste processed in the waste conversion unit. For example, a molten carbonate fuel cell (MCFC) can be used in conjunction with the waste conversion units of the present invention to produce electricity from the waste conversion unit off-gases in a non-combustion process provided that the off-gases are sufficiently clean for use with the fuel cell. This may be desirable for example when composition of the waste is such that the furnace off gas produced by the waste will be compatible with the fuel cell, thereby permitting the DC power output of the fuel cell to be converted to three phase AC power for sale to a utility company or for use in powering the waste conversion unit.

The combination of the arc plasma furnace and the joule heated melter as an integrated system with gas turbine, internal combustion engine or fuel cell generating equipment provides waste treatment and power production facilities which are capable of being deployed in modular units and which can be easily scaled to handle large volumes of municipal solid waste.

The primary processing unit preferably includes a DC or AC electrode arc plasma or plasmas for heating waste material and which also has joule heating capability for the melt pool. In a preferred embodiment, the electrode arc or arcs is a DC electrode arc or arcs with electrodes formed of graphite. The use of a DC or AC arc electrode(s) in combination with the appropriate electrical circuit ensures simultaneous independent control of the arc plasma(s) and the joule heated melter systems. The primary mode of operation of the arc plasma and joule heated melter is pyrolysis (*i.e.* oxygen starved operation). In a preferred embodiment, the system is operated such that fast pyrolysis occurs, thereby producing a gas with higher purity as compared with other methods of pyrolysis.

Preferably, the arc plasma and joule heated melter components are fully integrated with a common molten pool such that the system is capable of simultaneous independently controllable, *i.e.* tunable, operation of these components. The arc plasma(s) occurs between a graphite electrode or electrodes and the molten material. It should be appreciated, however, that other metallics elements such as tungsten or the like may be utilized as the electrode material rather than graphite.

The tunable fully integrated systems of the present invention employ electrical and mechanical design features to maximize flexibility and effectiveness. In this manner, high processing rates for vitrification of a large variety of materials into high quality, stable, non-leachable glass and reduced volume requirements due to the integrated system can be expected. The arc plasma(s) provides the necessary radiant surface heating for processing feed material in a highly efficient manner and at significantly higher rates than other technologies. The joule heated melter provides deep volume heating and is capable of maintaining a constant temperature throughout the melt pool with uniform mixing characteristics, thereby resulting in a high quality, homogenous glass product.

Simultaneous independently controllable operation of the arc plasma(s) and joule heated melter is provided by predetermined arc melter configurations and electrical circuits. While not meant to be limiting, the arc plasma preferably is operated by a DC arc or arcs and the joule heated melter is operated by AC power. The DC arc(s) and AC powered joule heated melter arrangement ensures the ability to independently control and operate each component. In alternative embodiments, however, both the arc(s) and the joule heated melter portions can be operated with AC power while maintaining the ability to independently control and operate each component or portion.

The present invention provides DC and AC arc circuits which allow independent arc voltage and current control. These circuits can be designed for operation with one arc electrode or, in the alternative, with a plurality of arc electrodes. These circuits can also be designed for switching between AC and DC, as such power is desired. The present invention also provides joule heating circuits that can be operated simultaneously and independently of the arc plasma or plasmas.

The use of the melter in combination with the arc plasma(s) provides more uniform heating than prior art techniques. In addition, utilizing deep volume heating provided by the joule heated glass melter facilitates ease of operation. It also provides the constant heat source necessary to maintain sufficient electrical conductivity in the waste material for rapid restart of the arc plasma which uses or can use an electrical conduction path through the waste material. Additionally, the fully integrated system allows the furnace walls to be further from the arc plasma(s) since there is an additional heat source provided. The increase in wall distance from the arc plasma increases feed options and reduces thermal stress on the furnace lining. Consequently, thermally sensitive, highly durable, long-life refractory linings can be employed. The present invention further allows the use of electrodes having a long life and a very wide range of arc plasma and joule heater power levels.

The independent control of the arc plasma and the joule heated melter power provides a continuously tunable mix of surface and deep volume heating, which can be optimized for different phases of operation. For example, additional heating may be desired or required for pouring glass or maintaining the glass pool temperature while additional surface heating may be necessary during the initiation of waste feed. In addition, different mixes of surface and volume heating are appropriate for different waste streams. The ratio of surface to deep volume heating may be less for municipal waste, for example, than for industrial waste containing large amounts of metals and high temperature materials. The control of power to each of the arc plasma(s) and joule heated melter portions can be adjusted (manually or automatically) during processing and operation to account for such different phases of operation.

The high quality, vitrified products produced in accordance with the present invention may be used in a variety of applications. For example, the vitrified products may be crushed and incorporated into asphalt for use in roads and the like. Alternatively, the vitrified products may be utilized to replace cinder in cinder or building blocks, thereby minimizing absorption of water within the block. Further, the vitrified products may be solidified to a final form which exhibits substantial volume reduction over prior art vitrification products. The products formed in accordance with the present invention can also be of a crystalline structure or a combination of crystalline and non-crystalline structures. The solidified forms are suitable for disposal without health risks or risks to the environment.

The foregoing has outlined some of the more pertinent objects of the present invention. These objects should be construed to be merely illustrative of some of the more prominent features and applications of the invention. Many other beneficial results can be attained by applying the disclosed invention in a different manner of modifying the invention as will be described. Accordingly, other objects and a fuller understanding of the invention may be had by referring to the following Detailed Description of the Preferred Embodiments.

## BRIEF DESCRIPTION OF THE DRAWINGS

For a fuller understanding of the present invention, reference is had to the following description taken in conjunction with the accompanying drawings, in which:

**FIG. 1A** shows an embodiment of the arc plasma furnace and joule heated melter according to the present invention in which the furnace and melter are formed as a fully integrated system with a common molten bath;

**FIG. 1B** shows a fully integrated arc plasma furnace and melter in which the melter portion electrodes are positioned at an angle relative to the vertical portion of the arc plasma-melter unit;

**FIG. 1C** shows the fully integrated system of **FIG. 1B** with magnetic coils for inductive heating and mixing in accordance with the present invention;

**FIG. 1D** illustrates the fully integrated system of **FIG. 1C** having a secondary thermal boost in accordance with an alternative embodiment of the invention;

**FIGS. 1E-1G** show an alternative arrangement for the fully integrated arc plasma-joule heated melter;

**FIGS. 1H-1J** show plan views of another alternative arrangement for the fully integrated arc plasma-joule heated melter;

**FIG. 1K** shows an exemplary feed system for use in the present invention;

**FIG. 1L** illustrates an exemplary exit conduit suitable for use with the units of the present invention;

**FIG. 2** illustrates a fully integrated arc plasma furnace and joule heated melter system with independently controllable power delivery systems;

**FIGS. 3A and 3B** respectively show an AC power system and a DC power system for use with the fully integrated systems of the invention;

**FIGS. 4A-4D** show plan views for electrode configurations and geometries for use in accordance with the present invention;

**FIG. 5** illustrates a circuit diagram having the ability to use a common trans-former secondary winding to supply AC power to the joule heating electrodes and DC power to the arc electrodes without causing undesirable electrical interaction in the common molten bath;

**FIG. 6** illustrates an alternative DC arc circuit diagram suitable for use in the present invention;

**FIGS. 7A** and **7B** illustrate additional alternative DC arc circuit diagrams suitable for use in the present invention;

**FIG. 8A** illustrates a DC arc circuit with independent arc voltage and arc current control for use in systems of the present invention in which there is one arc electrode;

**FIG. 8B** illustrates a DC arc circuit with independent arc voltage and arc current control for use in systems of the present invention in which there are two arc electrodes;

**FIGS. 8C-8E** illustrate DC arc circuits with independent arc voltage and arc current control for use in systems of the present invention in which there are three arc electrodes;

**FIG. 9A** illustrates an AC arc circuit with independent arc voltage and arc current control for use in systems of the present invention in which there is one arc electrode;

**FIGS. 9B-9C** illustrate AC arc circuits with independent arc voltage and arc current control for use in systems of the present invention in which there are two arc electrodes;

**FIG. 9D** illustrates an AC arc circuit with independent arc voltage and arc current control for use in systems of the present invention in which there are three arc electrodes;

**FIG. 9E** illustrates an AC arc circuit with independent arc voltage and arc current control for use in systems of the present invention in which there are four arc electrodes;

**FIG. 10A** illustrates an AC or DC arc circuit with independent arc voltage and arc current control for use in systems of the present invention in which there is one arc electrode;

**FIGS. 10B-10C** illustrate AC or DC arc circuits with independent arc voltage and arc current control for use in systems of the present invention in which there are two arc electrodes;

**FIGS. 10D-10E** illustrate AC or DC arc circuits with independent arc voltage and arc current control for use in systems of the present invention in which there are three arc electrodes;

**FIG. 10F** illustrates an AC or DC arc circuit for use in systems of the present invention in which there are three arc electrodes;

**FIGS. 11A-11B** illustrate AC joule heating electrical systems for use in systems of the present invention in which there are two joule heating electrodes;

**FIGS. 11C-11D** illustrate AC joule heating electrical systems for use in systems of the present invention in which there are three joule heating electrodes;

**FIGS. 11E-11F** illustrate AC joule heating electrical systems for use in systems of the present invention in which there are four joule heating electrodes;

**FIGS. 11G-11H** illustrate AC joule heating electrical systems for use in systems of the present invention in which there are six joule heating electrodes;

**FIG. 11I** illustrates another embodiment for providing joule heat in accordance with the present invention;

**FIG. 12** illustrates an alternative embodiment of the invention which is suitable for processing metals, non-glass forming waste, and low-ash producing organics;

**FIG. 13A** shows a furnace and molten oxide pool for processing metals, non-glass forming waste, and low-ash producing organics in accordance with the invention;

**FIG. 13B** shows a furnace and molten oxide pool for processing metals in accordance with the invention;

**FIGS. 14A** and **14B** show furnaces and molten oxide pools for processing non-glass forming waste and low-ash producing organics in accordance with the invention;

**FIG. 15** illustrates an energy conversion system which reduces $NO_x$ emissions during the generation of electricity from waste conversion units in accordance with the present invention;

**FIG. 16** illustrates an energy conversion system which reduces $NO_x$ emissions during the generation of electricity from waste conversion units in accordance with an alternative embodiment of the present invention;

**FIG. 17** illustrates automatic control logic for use in conjunction with the production of low $NO_x$ emissions during the generation of electricity from waste conversion units in accordance with the present invention; and

**FIGS. 18-19** show systems for using a fuel cell in conjunction with a waste conversion unit of the present invention.

## DETAILED DESCRIPTION OF THE PREFERRED EMBODIMENTS

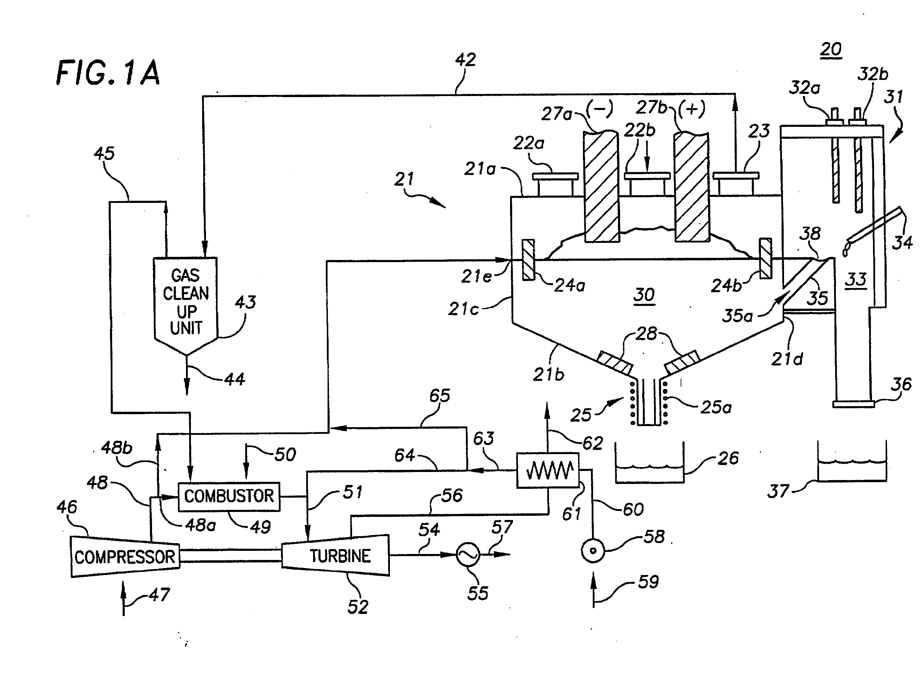

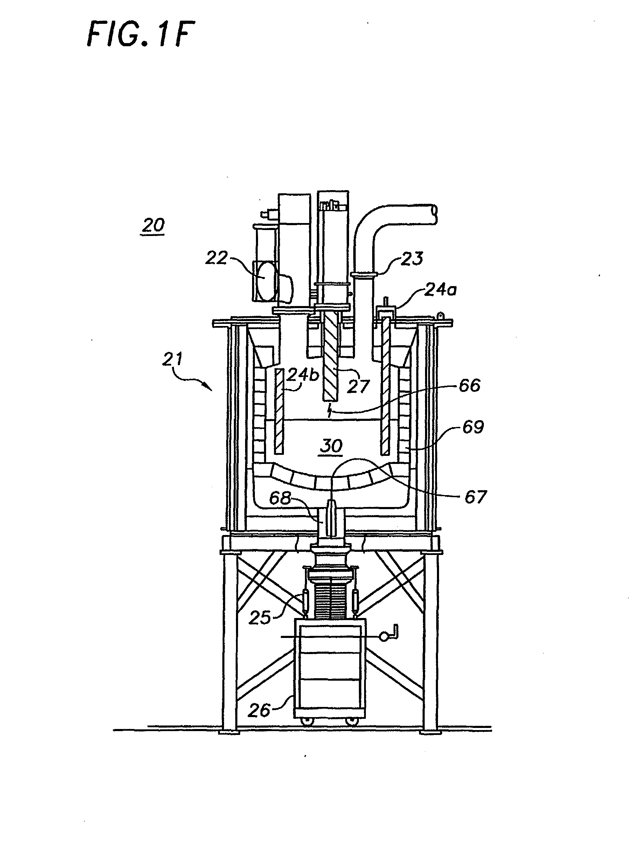

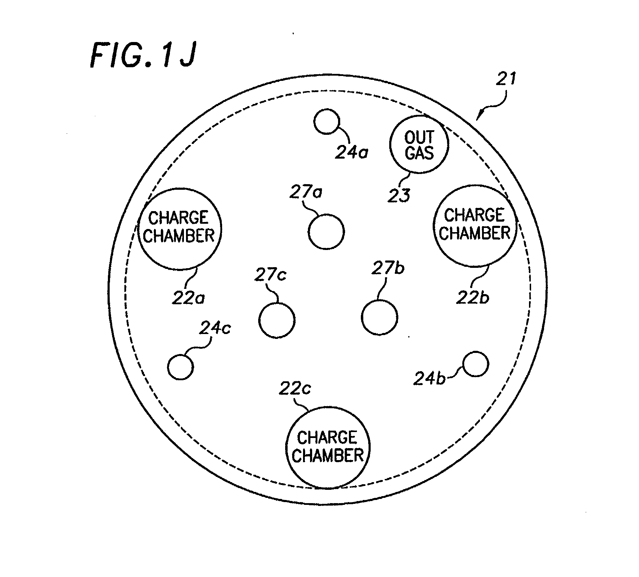

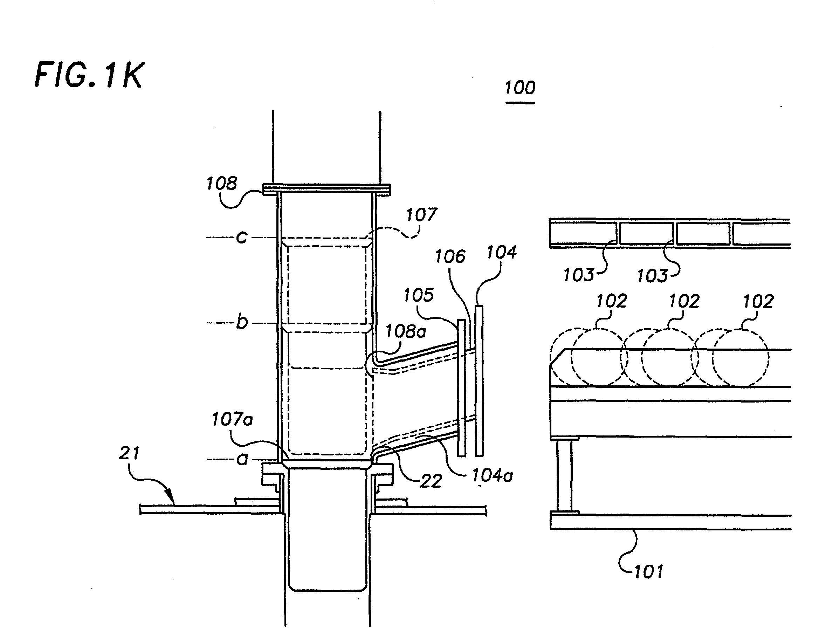

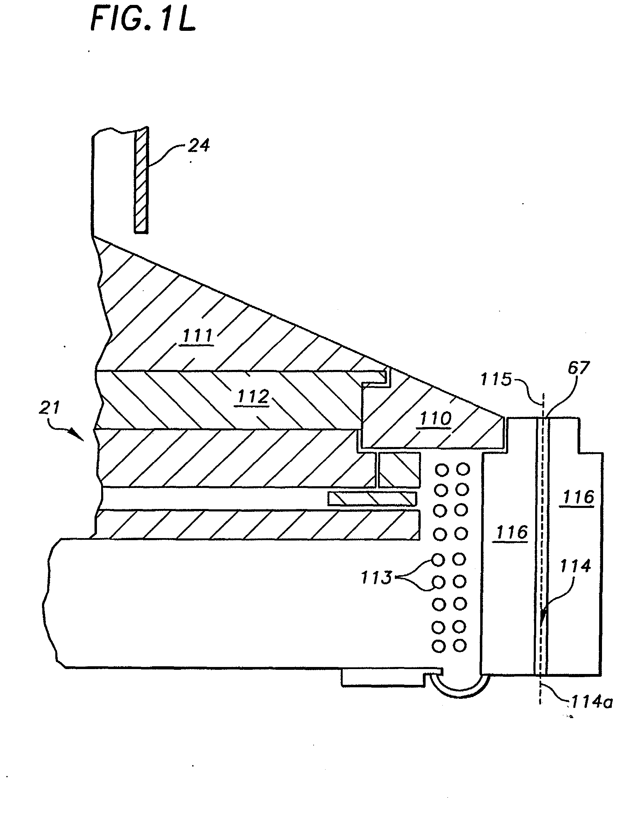

Referring now to **FIGS. 1A-1D**, several arc plasma-joule heated melters suitable for use in the invention are illustrated. As discussed herein, these embodiments utilize DC or AC arc(s) and AC joule heated electrical systems that are fully integrated and operated simultaneously in a single glass melt, but are isolated electrically from one another through the use of a special power delivery circuits. The arc plasma-melter combinations are thus integrated both thermally and electrically.

The fully integrated plasma-melter systems in accordance with the present invention provide the advantage of having continuously tunable proportions of power between the plasma heating and the glass melter heating such that adjustments can be made during processing. For example, the continuously tunable independent powering is useful when it is desirable to utilize one portion of the system, *e.g.* the arc plasma or the melter. The continuously tunable independent powering capabilities provide robustness and facilitate ease of operation under changing conditions. The continuously tunable independent powering capabilities additionally improve efficiency and maximize environmental attractiveness by providing additional control over solid waste products, e.g. glass and off-gas generation.

Continuously tunable independent operation of the arc plasma and melter allows the user to select various types of heating. For example, the arc plasma (or plasmas) provides radiative surface heating. Large amounts of plasma power may be used at the initiation of feeding. Somewhat lower, but still substantial amounts of plasma power may be used during continuous feeding. High surface waste temperature heating facilitates high throughput processing as well as fast pyrolysis to produce high quality combustible gas. High surface heating is also needed for processing where the material is difficult to melt or where the material is highly conductive, thereby limiting the effectiveness of joule heating with glass in the absence of arc plasma.

Joule heating with glass melter electrodes provides deep, volumetric heating. This type of heating ensures production of high quality glass by promoting mixing in the entire melt pool. It also provides conductive material for more stable transfer arc operation. Independent use of volumetric heating may also be utilized to maintain the waste in a molten state at low power requirements when there is no feed. Volumetric heating is also important for glass pouring.

Continuously tunable independent powering of plasma heating and glass melter heating facilitates the use of extra volumetric heating for purposes of glass pouring or improved glass production without increasing the adverse effects of only plasma heating such as excessive volatilization of material and thermal stressing of the furnace wall. There may also be less heat loss from one container than from two containers.

In addition to continuously tunable independent powering during processing of a given type of waste stream, the tunable features of the integrated plasma melter units may be used to optimize processing of different types of waste streams. For example, municipal waste streams may generally require lower relative amounts of plasma power than would streams that have high melting temperature materials and larger amounts of metals such as hazardous and industrial wastes composed largely of inorganic substances.

The use of volumetric melter heating also facilitates a greater range of options for plasma electrode configurations. Because volumetric melter heating maintains material in a substantially molten and conductive state, more than one plasma electrode may readily be utilized. This is in part due to the molten material providing the conducting path between the electrodes. It is thus readily possible to continuously tune operation for the use of one or more plasma electrodes. The increased flexibility may be used to optimize production of combustible gas, minimize particulate emission and reduce electrode wear.

Continuously tunable independent powering of the plasma and melter heating systems thus provides a greatly expanded amount of temperature control. Spatial and temporal control of temperature which had not been previously available may be used to improve the practicality and environmental attractiveness of combined arc plasma and melter vitrification systems. There may also be less heat loss from one container than from two containers (*e.g.* if the arc plasma and joule heating technologies were separately employed).

As discussed herein, the full integration of a joule heated melter with the arc plasma in accordance with the present invention also facilitates the use of an elongated melt chamber with two or more arc plasma electrodes. The molten material is capable of providing a conducting or current path between the two or more arc plasma electrodes. This configuration significantly increases flexibility of waste feed and slag tapping and increases arc plasma electrode life and robustness. The two arc plasma electrode-elongated chamber arrangement is facilitated by the joule heated melter because the joule heated melter is capable of providing the necessary heat to maintain a conducting path between the two arc plasma electrodes during idle furnace periods and also provides uniform heating in the elongated melt chamber.

The embodiments of the invention shown herein include a circuit arrangement which allows passage of the joule heating AC power through the melt using partially submerged electrodes, and which also allows simultaneous operation of a DC arc plasma circuit(s) through the melt between upper movable electrodes or, if desired, between these electrodes and/or a submerged counter electrode. The type of waste and the character of the molten slag will determine the preferred operating mode. In some alternative embodiments, the systems of the present invention can be configured for operation with an AC-AC arrangement, *i.e.,* the arc(s) is operated with an AC power supply(ies) and the joule heated melter is operated with an AC power supply.

The integrated arc plasma-melter systems **20** shown in **FIGS. 1A-1D** include reaction vessel **21**. It should be appreciated that the joule heated melter facilitates production of a high quality pyrolysis gas using the minimum energy input to the process. This situation exists because energy input to the arc does not need to be greater than that required to pyrolyze and melt the material in the arc zone. The molten bath below the unmelted feed material is maintained at a desired temperature using joule heating as opposed to using only an arc plasma furnace. The energy requirements to maintain the slag at the proper temperature are equal to the heat losses from the melter outer surface. This is expected to be very low, *i.e.* about 20-30 KW/m$^2$ of slag or glass surface area for a properly designed melt chamber. Air/oxygen and/or a combination of air and steam can be added to eliminate char from the melt surface and adjust the redox state of the glass. The joule heated melter provides energy *(i.e.* hot glass) near the sides of the bath where the gas/steam mixture is introduced. Unit **21** may also include auxiliary heater **31**, connected as shown in **FIGS. 1A-1D.**

Reaction vessel **21** includes top **21a**, bottom **21b**, and sides **21c** and **21d**. Bottom **21b** may have a generally V-shaped configuration as illustrated in **FIGS. 1A-1D**. Reaction vessel **21** further includes at least one port or opening **22a** for introducing waste material **29** into reaction vessel **21**. In a preferred embodiment, reaction vessel **21** includes a plurality of ports or openings **22a** and **22b** as shown in **FIGS. 1A-1D**. Ports **22a** and **22b** may include a flow control valve or the like to control the flow of waste material **29** into vessel **21** and to prevent air from entering vessel **21** therethrough. It is also preferred that such ports **22a** and **22b** be capable of being controlled such that one or more can be selectively utilized separately or simultaneously with one or another. Ports **22a** and **22b** may also be used with a feed mechanism such as that shown in **FIG. 1K**.

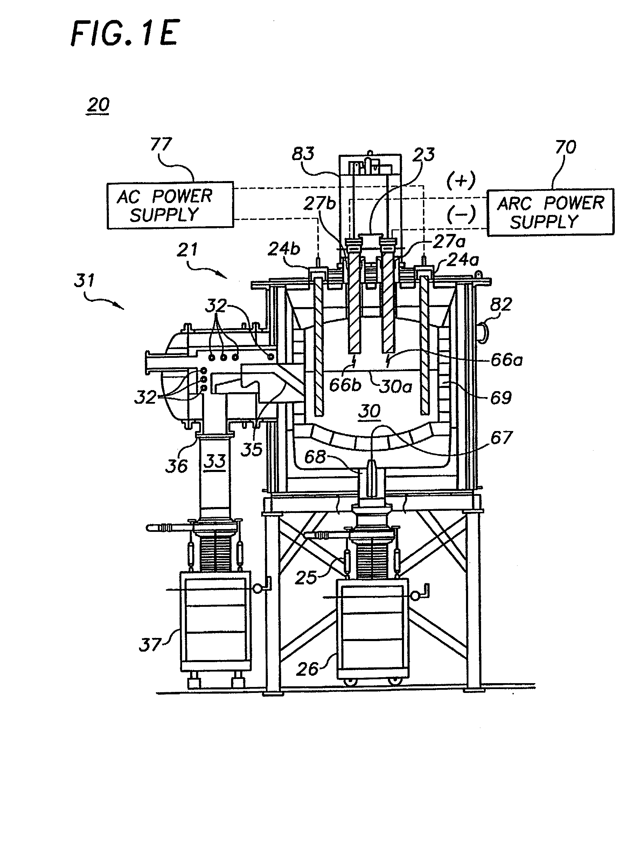

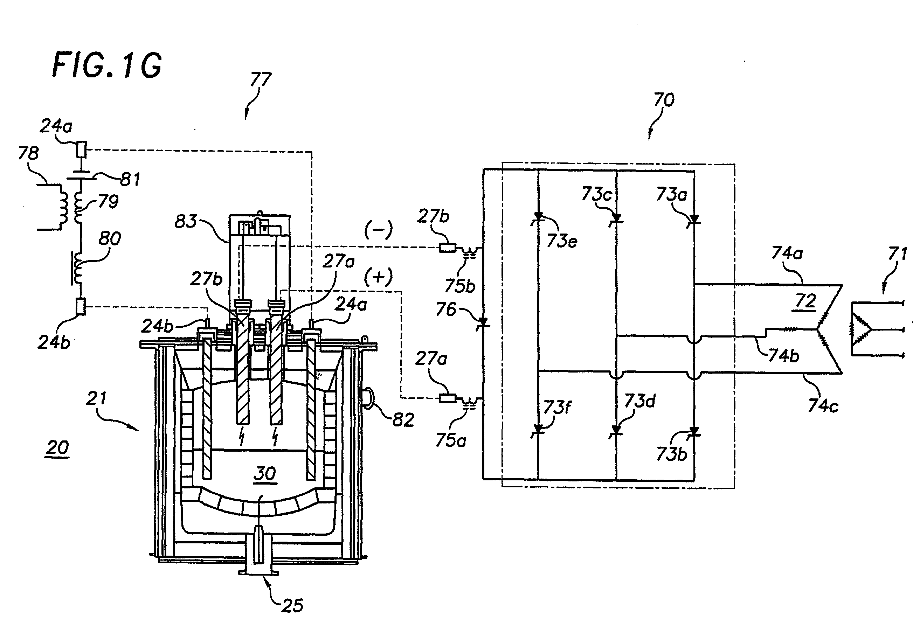

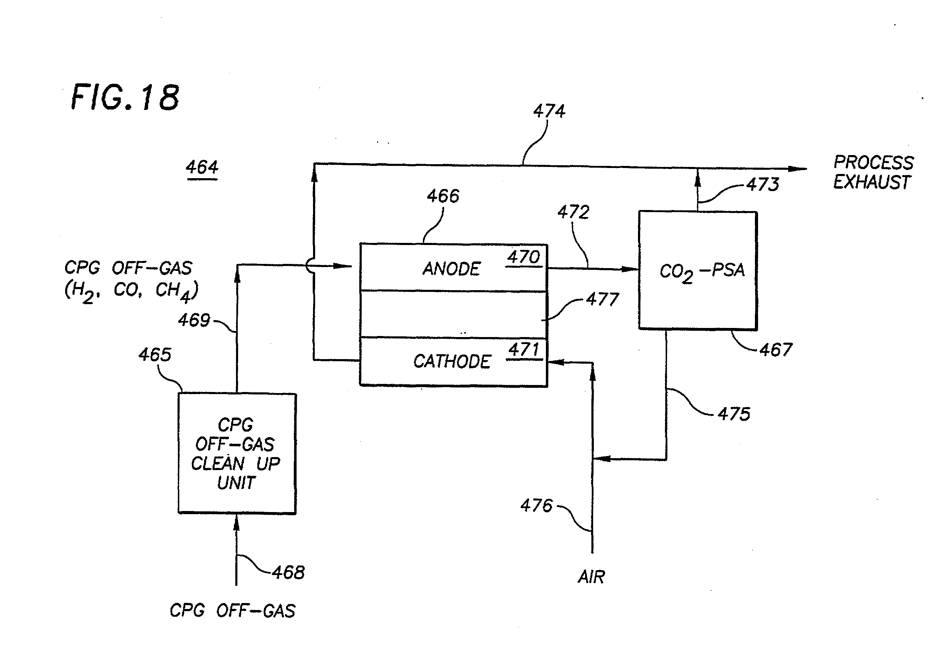

Reaction vessel **21** also includes gas port or opening **23** and metal/slag pouring port or opening **25.** Opening or gas discharge port **23** may be formed of any conventional material which allows controlled discharge of a combustible gas. For example and while not meant to be limiting, gas discharge from furnace **21** may be controlled by a flow control valve or the like at opening **23.** As shown in **FIG. 1A**, gas discharge port **23** can be positioned at or near top **21a** of furnace **21**. Gases exiting from port **23** will enter line **42** and will be sent to a scrubber, turbine or the like for further processing. As discussed above, the gases generated in the waste conversion unit may also be utilized in a non-combustion process such as that shown in **Figs. 18-19.** An emergency off gas port may also be provided in unit **21** *(e. g.* near the top of the unit or at a sufficiently high distance on a side of the unit) in the event port 23 becomes inoperable *(see e.g.,* **FIGS 1E** and **1G**). This may be desirable to prevent pressure from becoming too high in the unit. An air relief device can be provided in the unit to ensure that the pressure within the unit is within proper range.

The primary mode of operation in unit **21** is pyrolysis. However, operation in a partial oxidation mode may be required to assist in the processing of large quantities of combustible or carbonaceous materials.

Heat from the arc(s) and the specific gravity of metals present in waste material results in the formation of three phases or layers in furnace **21**: a metal layer, a slag layer and a gaseous layer. Furnace **21** operates in a temperature range of about 1200-2000°C. Depending on the composition of the waste feed, furnace **21** may operate in the range of about 1550-1600°C. The arc plasma generally operates in a temperature range of greater than about 3500°C.

A metal layer (not shown) accumulates by gravimetric separation in the bottom of furnace hearth **21** until a sufficient quantity is collected. Metal is then discharged into a separate container through discharge port **25**. Discharge port **25** is constructed in any manner which is capable of controlling the discharge of molten metal material from furnace **21**. For example, a flow control valve or equipment may be used to control flow through discharge port **25** to metal collector or container **26**. Alternatively, metals discharge port **25** may include heating coils **25a** as shown in **FIGS. 1A-1D**. Metals discharge port **25** may also be constructed as shown in **FIG. 1L** and heated with a circuit as shown in **FIG. 1M**.

In particular, port **25** is designed to have a flow control valve or the like such that metal and/or slag may be removed and introduced into metal/slag collector or container **26** at predetermined periods of time during the process. When hazardous waste is being processed, it may be desirable to have collector or container **26** sealably connected to port **25** in a manner such that air and/or gases do not enter or exit the system therethrough.

Waste material entry ports **22a** and **22b** are positioned such that waste material **29** is fed from a waste feed system through ports **22a** and **22b** to furnace **21** in a controlled manner. While not to be construed as limiting, ports **22a** and **22b** may include a flow control valve or the like to monitor the feed rate of waste material **29**. The feed system may be any conventional type of feed system which is capable of feeding municipal solid waste or other waste such as hazardous waste, hospital waste, ash from an incinerator or the like to furnace **21** so long as the feed system does not allow air to enter the furnace through the feed system. The feed mechanism illustrated in **FIG. 1L** may also be used for feeding waste to unit **21**.

As also shown in **FIG. 1A**, furnace 21 may include additional ports such as air or gas entry port **21e**. Air or gas entry port **21e** includes flow control, such as a flow control valve or the like. Preferably, port **21e** is positioned to enter through the furnace wall at a level proximate to slag material **30** as shown in **FIG. 1A.** In this manner, air **48b** (which may contain a predetermined amount of steam **65**), can be injected into furnace **21** at a controlled rate and time during the conversion process to control the composition of the gas exiting the furnace. In addition, air and/or steam may be introduced through opening **21e** to ensure that any carbon in the feed material has been converted to carbon-containing gases such as CO, $CO_2$, $H_2$, $CH_4$ and the like. This reduces the amount of charring during the process which may result when carbon is not completely converted to carbon-containing gases.

As further illustrated in **FIG. 1A**, system **20** also includes turbine **52**, generator **55**, and the necessary equipment required to couple the arc furnace-melter unit thereto. For example, system **20** preferably includes hot gas cleaning equipment **43**, waste heat recovery unit **61**, and air **47** and water **59** injection systems. While not shown in **FIG. 1A**, a feed conditioning process for the waste material in feed system may also be utilized prior to being fed to furnace **21**. In addition to the units shown in **FIG. 1A**, it may be desirable to incorporate an off-gas scrubbing process for gases exiting clean-up unit **43** or the gas fired turbine to remove any acid gases therefrom. Preferably, the only gas conditioning required for the gases exiting arc furnace **21** is gas-solid separation in hot gas clean-up unit 43 to minimize the amount of particulates entering turbine **52**.

The gases produced in furnace **21** are combustible gases formed as a result of fast pyrolysis. As discussed herein, fast pyrolysis generally results in at least 65% conversion of waste material to a useful gas for combustion. Arc furnace **21** utilized in accordance with the present invention is thus expected to provide a gas containing about: 2% carbon dioxide, 44% carbon monoxide, 43% hydrogen, 2% methane and the balance being light hydrocarbons, depending on the composition of the waste feed. The gas produced in furnace **21** is transported through line **42** to hot gas clean up unit **43** where ash **44** is removed and thus separated from fuel gas **45.**

Intake air **47** enters compressor **46** and air **48** exiting compressor **46** may be divided into several delivery streams. For example, air flow **48a** can be fed to combustor **49** and air flow **48b** may be fed to furnace **21**.

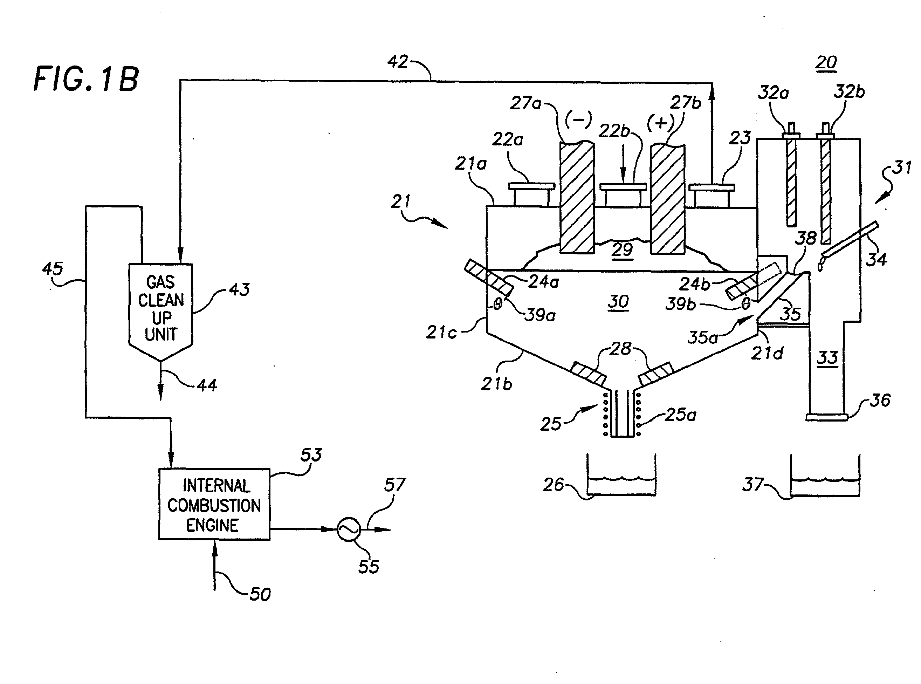

Fuel gas **45** enters combustor **49** and combines with air **48a.** Hot gases and steam **51** produced in combustor **49** drive turbine **52** which is connected to generator **55** via **54** such that electricity **57** is thereby generated. Turbine **52** may be a high efficient steam-injected gas turbine. Such turbines are commercially available. For self-powered operation, especially during startup, a varying amount of natural gas or other type of fuel **50** may be fed to combustor **49** (or internal combustion engine **53** as shown in **FIG. 1B**). During operation, fuel gas **45** and auxiliary fuel **50** may be combined in combustor **49**.

Water **59** enters system **20** through pump **58** to heat recovery steam system **61**, *i.e.* a heat exchanger where heat from hot turbine exit gas **56** exchanges to flow **60**. Exhaust **62** is kept separate from steam **63** in heat recovery steam system **61**. Steam **63** may be recycled as steam **64** to turbine **52** and as steam **65** to air flow **48b**, as shown in **FIG. 1A** respectively.

Referring now to **FIG. 1B**, a process similar to that shown in **FIG. 1A** is illustrated except that compressor **46**, combustor **49** and gas turbine **52** are replaced by an internal combustion engine **53**. Internal combustion engine **53** may be easier to utilize and may be more cost efficient than a compressor-gas turbine, especially for small tunable plasma-melter electroconversion units. Air and auxiliary fuel **50** may be fed to internal combustion engine **53** in a predetermined manner based on the composition of fuel gas **45**. Preferably, the efficiency of engine **53** provides sufficient electricity for all or substantially all of the electrical power required for the tunable plasma-melter electroconversion unit.

Spark ignition internal combustion engines can be advantageous in that such engines are less expensive for very small units than turbines. To facilitate production of a desired level of electrical power, particularly during startup, an auxiliary power such as hydrogen-rich gas, propane, natural gas or diesel fuel may be used to power the internal combustion engine. The amount of auxiliary fuel may vary depending on the composition of the waste stream, *i.e.* the heating value of the incoming waste material and the amount of combustible material in the waste material and the power requirements for waste processing.

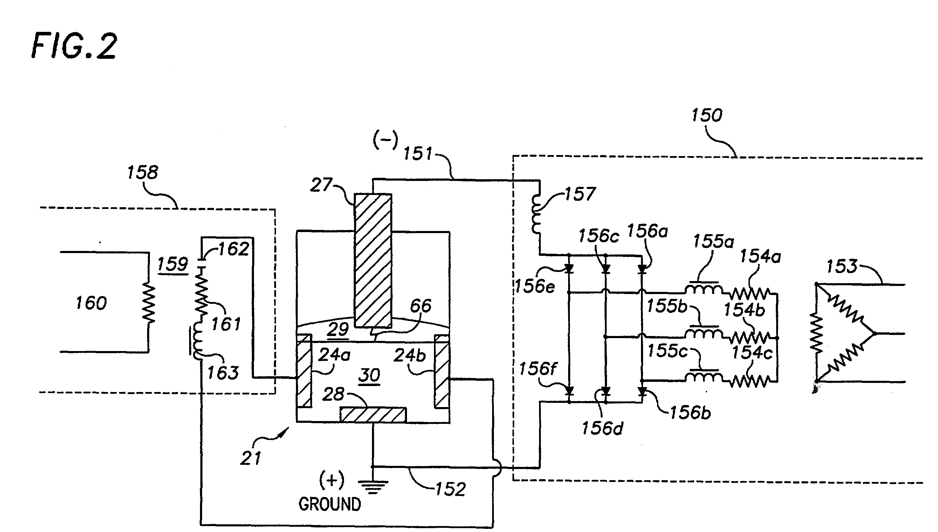

Chamber **31** includes auxiliary heaters **32a** and **32b**. Chamber **31** may also include plasma torch **34**. Due to differences in specific gravity, metal in metal/slag layer **30** moves toward bottom **21b** in vessel **21**. Slag in metal/slag layer **30** exits through opening or port **35a** into conduit **35**. It should be appreciated that conduit **35** may be positioned similar to any of the configurations as shown and described above with reference to conduit **98** shown **in FIGS. 2A-2E** in copending U.S. Serial No. 08/492,429. The flow of slag from vessel **21** to the auxiliary heater system **31** can also be controlled by controlling the pressure in melter **21** and auxiliary heater system **31**. In particular, the differential pressure may be used to control the flow of slag to heater system **31**.

Slag **38** is heated further by or auxiliary heaters **32a** and **32b** for a time sufficient to provide a homogeneous slag product. Alternatively or in addition to heaters **32a** and **32b**, the temperature of slag **38** may be maintained by plasma torch **34** in order to enhance flow into the receptacle for certain viscous types of waste. Plasma torch **34** can be positioned to provide additional heat to material in conduit **35**. Slag **38** then passes through slag pouring conduit **33** and port **36**, thereby exiting chamber **31** into slag collector or container **37**. When hazardous waste is being processed, it may be desirable to have collector or container **37** sealably connected to port **36** in a manner such that air and/or gases do not enter or exit the system therethrough. Port **36** may include a flow control valve or the like to control the discharge of slag **38** from heat system **31**. Auxiliary heater system **31** is utilized when it is desirable to decrease the viscosity of the slag in order to maintain the slag level in the melter. The auxiliary heater system also compensates for heat loss as the slag approaches the slag discharge prior to dropping into the slag container.

As also shown in **FIG. 1A,** DC electrodes **27a** and **27b** are provided within reaction vessel **21** as shown in **FIGS. 1A-1D**. Reaction vessel **21** also includes a plurality of AC joule heating electrodes **24a** and **24b.** As further shown in **FIG. 1A**, electrodes **24a** and **24b** may be positioned across from one another on sides **21c** and **21d**, respectively. In addition, electrodes **24a-24b** are positioned so as to be partially submerged in the slag **30** when the process is in use. One or more additional electrodes **28** may be provided as shown in **FIGS. 1A-1D**.

**FIG. 1B** illustrates an alternative arrangement for the positioning of electrodes **24a** and **24b** in accordance with the present invention. The positioning of electrodes **24a** and **24b** as illustrated in **FIG. 1B** facilitates replacement of the electrodes. In particular, this type of arrangement allows replacement of electrodes without the necessity of draining the furnace hearth. Draining the furnace hearth is undesirable as it often degrades the lining of the furnace. Accordingly, placing electrodes **24a** and **24b** at angles **39a** and **39b** respectively, while simultaneously preventing the escape or release of gas facilitates the replacement of electrodes as needed. While not to be construed as limiting, angles **39a** and **39b** of electrodes **24a** and **24b** relative to the respective interior sides of the furnace can be between about 30°- 45° to the vertical axis. It may be desirable to utilize metallic electrodes or coated graphite electrodes for the joule heated melter. Electrode(s) **24** may be positioned at any angle (including vertically) so long as they are positioned on an interior face of the furnace cavity. The arc plasma electrode or electrodes are preferably formed of graphite. The portion of the electrode length just above the melt line on of the electrode may be coated to decrease the rate of erosion which may be caused by oxidation and/or the injection of steam.

As further shown in **FIG. 1B**, AC powered joule heating electrodes **24a** and **24b** can be inserted through sides **21c** and **21d** of furnace **21**, respectively. The top end of each electrode preferably extends outside the metallic furnace enclosure and may be capped with an electrical connection which will be electrically insulated from the electrically grounded furnace shell. The bottom end of each electrode is immersed beneath the molten bath to a desired depth. By selecting the proper location of the point of entry of the electrode below the surface of the melt, it may minimize the portion of the electrode exposed to the DC arc or radiation from this arc, thereby increasing the life of this electrode.

When it is necessary to replace electrode **24a** and/or **24b**, the spent electrode is withdrawn from the molten bath. If a new electrode is inserted into the bath without preheating the electrode, the cold electrode may cause the viscosity of the molten bath to increase where the electrode contacts the molten bath, thereby making it difficult to insert this new electrode into the molten bath. Accordingly, it may be desirable to also electrically energize this electrode by using a special electrically isolated, current limited power supply which will safely provide additional heat at the junction of the bath and the electrode to fully permit immersing the new electrode into the bath. In a preferred embodiment, suitable electrical and thermal insulation may also be provided to each electrode so that each electrode will be insulated both thermally and electrically from the metallic furnace enclosure during normal operation.

In an alternative embodiment, the partially immersed joule heating electrodes can be replaced by removing the electrode(s) vertically as shown in **FIGS. 1E-1G**. For example, the joule heating electrodes are positioned vertically and can also be replaced without draining the furnace hearth.

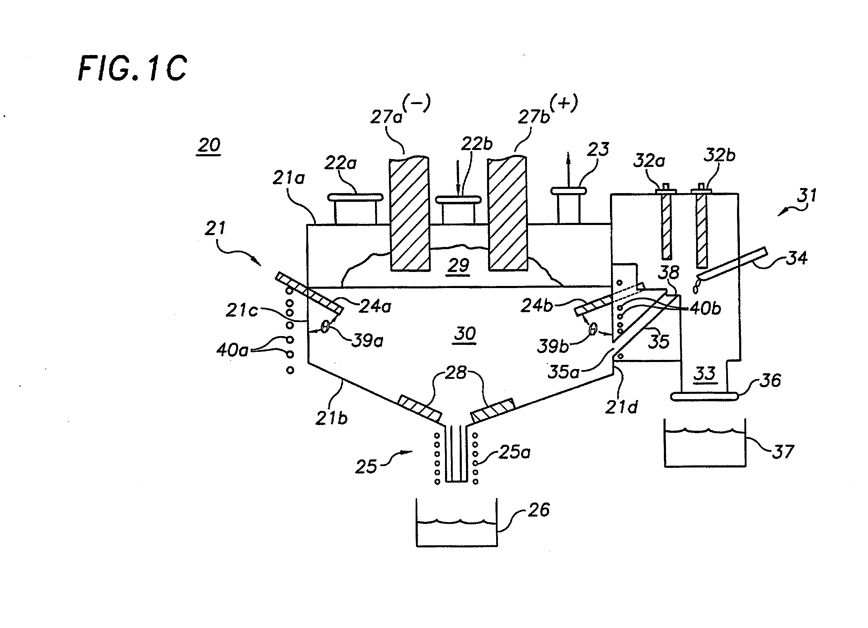

**FIG. 1C** illustrates another embodiment of the present invention in which magnetic coils **40a** and **40b** may be utilized for inductive heating and/or mixing to provide additional heating and/or mixing in the melt pool. In order to provide the optimum rate of melting commensurate with the particular waste stream being introduced into the combined arc plasma-melter, additional stirring or mixing beyond that normally produced by the melter portion of the furnace and the arc portion of the furnace may be desirable. This may be accomplished by the addition of strategically placed magnetic coils such as coils **40a** and **40b** to create greater J x B forces which in turn causes additional mixing and/or heating in the molten bath. Coils **40a** and **40b** may be positioned within the metal shell of the furnace, but behind the refractory lining of the melt pool. Alternatively, if the furnace shell is fabricated of non-magnetic stainless steel, the coils may be placed on the exterior of the shell. Coils **40a** and **40b** are connected to an AC power supply source. This enhancement of bath mixing is an example of the type of "tuning" which may increase furnace electrode life and waste throughput.

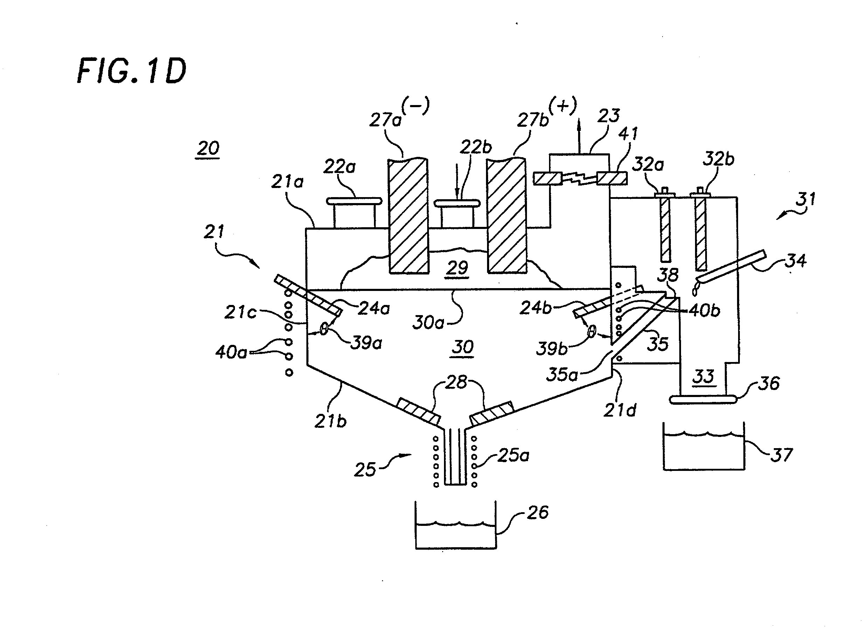

**FIG. 1D** illustrates another embodiment of the present invention in which an alternative configuration of the plasma melter process incorporates a secondary thermal boost system **41.** This system may be an arc plasma in a chamber to provide additional thermal energy to further crack condensable fractions exiting the primary plasma-melter process. As shown in **FIG. 1D** for example, secondary thermal boost system **41** may be placed proximate to or within port **23.**

Conversion of waste to electrical energy for the plasma melter process depends on maximum conversion of solid and liquid wastes to gaseous product gas. In pyrolysis processes, a portion of the exiting gas may contain condensables that are light to medium weight oils. If the gas exiting the primary plasma-melter chamber is allowed to cool, liquefaction of a portion of the off-gas may result due to the condensables present at furnace temperatures. The secondary plasma off-gas chamber ensures that these oils are converted to noncondensable combustible gases resulting in an enhanced recovery of energy value from the incoming waste materials.

When secondary plasma chamber **41** is positioned as shown in **FIG. 1D,** the gas exiting the primary furnace chamber does not decrease in temperature before entering the secondary plasma chamber **41** because the two systems are directly coupled. This minimizes the overall energy requirements for the cracking and gasification processes.

Because condensable species exiting the furnace are converted to a combustible gas in the secondary plasma chamber, secondary waste generation is minimized. It should be appreciated that the plasma off-gas chamber may not always be required, but may be independently controlled during the process.

Electrode or electrodes **24a** and **24b** preferably are positioned in the furnace **21** at a sufficient distance from the walls **21a-21d** such that feed material **29** can shield or protect the walls from thermal radiation. This facilitates the use of a wide variety of materials as refractory furnace lining.

It is preferred to use graphite as electrode material rather than metal since graphite electrodes simplify the process and have much higher current capability than those used in a metal torch. In addition, graphite electrodes require less maintenance relative to the frequent tip replacements of the metal torch systems. Due to the anticipated conditions in the furnace plenum involving both partial oxidizing environments and conditions promoting the water-gas reaction:

$$C + H_2O \rightarrow CO + H_2 \text{ at } 600\text{-}1000°C,$$

there may be unacceptable consumption of graphite without special provisions. Therefore, graphite electrode(s) **27** is preferably coated with a suitable material such as silicon carbide, boron nitride or another protective coating to minimize graphite consumption and prolong useful life. For example, when municipal solid waste containing carbonaceous material is fed to furnace **21**, a highly endothermic reaction occurs, which may require additional energy to convert carbonaceous material to fuel gas and noncarbonaceous material to slag.

The conditions within the waste conversion units of the present invention can be continuously monitored (manually or by automated systems) during waste processing such that temperature profiles, current in the molten bath, voltage and the like can be obtained. This ensures that desired processing characteristics of the molten bath and gases exiting the units are satisfied. For example, the composition of gases exiting the waste conversion units can be monitored during processing using devices such as those disclosed in U.S. Patent Nos. *5,479,254* (issued December 26, 1995) and 5,671,045 (issued September 23, 1997) both by Woskov *et al.* The entire contents of U.S. Patent Nos.

5,479,254 and 5,671,045 are incorporated herein by reference. In addition, a thermocouple, an infrared temperature device, a radiometer such as that disclosed in U.S. Patent No. 5,573,339 (issued November 12, 1996) by Woskov *et al.* and entitled Active Radiometer for Self-Calibrated Furnace Temperature Measurements or a pyrometer such as that disclosed in WO 97/13128 (International Application No. PCT/US96/15997, published April 10, 1997 and entitled Active Pyrometer for Self-Calibrated Furnace Temperature Measurements) could be inserted into the chamber. The entire contents of U.S. Patent No. 5,573,339 and WO 97/13128 are incorporated herein by reference. *See also,* Woskov *et al, New Temperature and Metals Emissions Monitoring Technologies for Furnaces,* Proceedings of the International Symposium on Environmental Technologies, Plasma Systems and Applications, Atlanta, Georgia (October 8-11, 1995), the entire contents of which are hereby incorporated by reference.

Referring now to **FIGS. 1E-1G**, another alternative embodiment of the present is illustrated. In this embodiment, unit **21** includes two arcing electrodes, **27a** and **27b**, and two or more joule heating electrodes, **24a** and **24b**. Preferably, arcing electrodes **27a** and **27b** are operated with a DC power supply **70** while the partially immersed non-arcing electrodes **24a** and **24b** are operated with AC power supply **77**. Unit **21** also includes an exhaust port or vessel **23** (which may be insulated to prevent heat loss) and preferably includes an emergency off gas vessel **82** to ensure the maintenance of proper pressure within the chamber. Waste feed may be fed from a feed mechanism and charge port(s) **22** into the unit **21**. The feed mechanism may be a gravity-type feed mechanism, and may be constructed such as that shown in **FIG. 1K.** The unit may also include a plurality of feed mechanisms spaced around the unit in predetermined positions and aligned with the charge ports of the chamber. A non-graphite refractory hearth **69** can be used to line the unit **21.** Hearth **21.** may be formed from a variety of refractory materials.

Arcing electrodes **27a** and **27b** are used to generate arcs **66a** and **66b**, respectively, and decompose at least a portion of waste fed into unit **21.** The waste forms a gaseous layer and a molten bath. Due to differences in specific gravity, the molten bath separates into a slag layer and a metal layer(s). The level of melt line **30a** can be controlled by removing at least a portion of the slag and/or metal(s) from the unit. For example, molten material such as slag can be removed by discharge conduit **35** to slag container **37** while metals(s) may be removed from the bath by discharge conduit opening **67** and then through discharge conduit **68** to metals container **26**. The discharge conduit **68** may be heated utilizing heating coils as discussed hereinabove *(see also* **FIGS. 1L** and **1M**).

The rate at which molten material (e.g. slag) flows through discharge conduit **35** to auxiliary heating system **31** can be controlled by a flow control valve or the like. In one embodiment, the flow of molten material from unit **21** to the auxiliary heater system **31** can be controlled by controlling the pressure in unit **21** and auxiliary heater system **31**. The differential pressure may then be used to control the flow of molten material to heater system **31**.

A plurality of auxiliary heaters and/or plasma torch(es) **32** can be employed in auxiliary heating system **31** as discussed in accordance with previous embodiments. Molten material exits the auxiliary heating system **31** through discharge port **36** to slag container **37**.

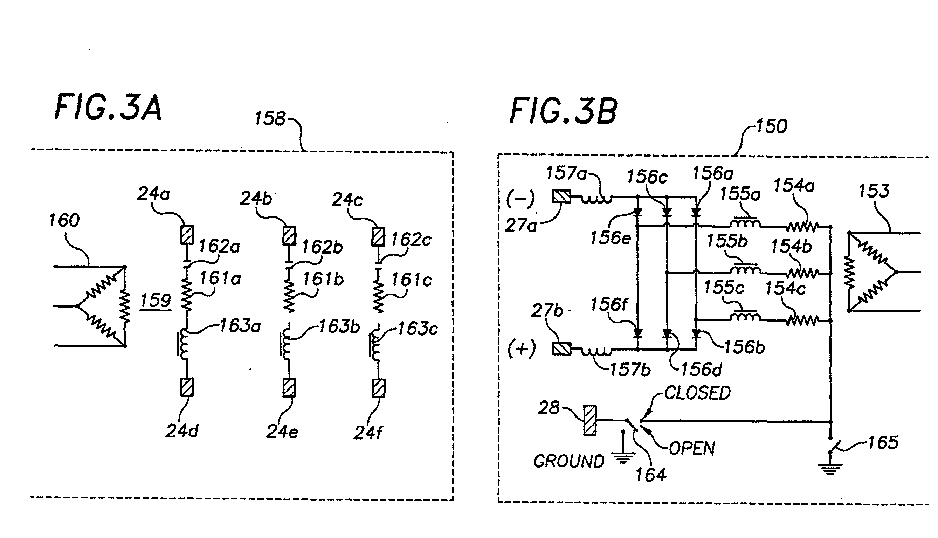

The arcing electrodes in this embodiment are connected to a DC power supply such as **77**. Power supply **77** is similar to that shown in **FIG. 3A** of copending U.S. Serial Nos. 08/382,730 and 08/492,429 and includes primary winding **71** and secondary windings **72**. Thyristors **73a-73f** respectively rectify phases **74a-74c**. Alternatively, the three phase diode bridge rectifier with saturable reactor control shown in **FIG. 3B** in copending U.S. Serial Nos. 08/382,730 and 08/492,429 can be utilized instead of DC supply **70**. In this embodiment, the function of the saturable reactors is to vary the impedance of the AC current path between the transformer and the AC input to the diode rectifier, thereby providing a means to maintain the desired amount of DC current in the arc even though the arc voltage may be varying rather rapidly.

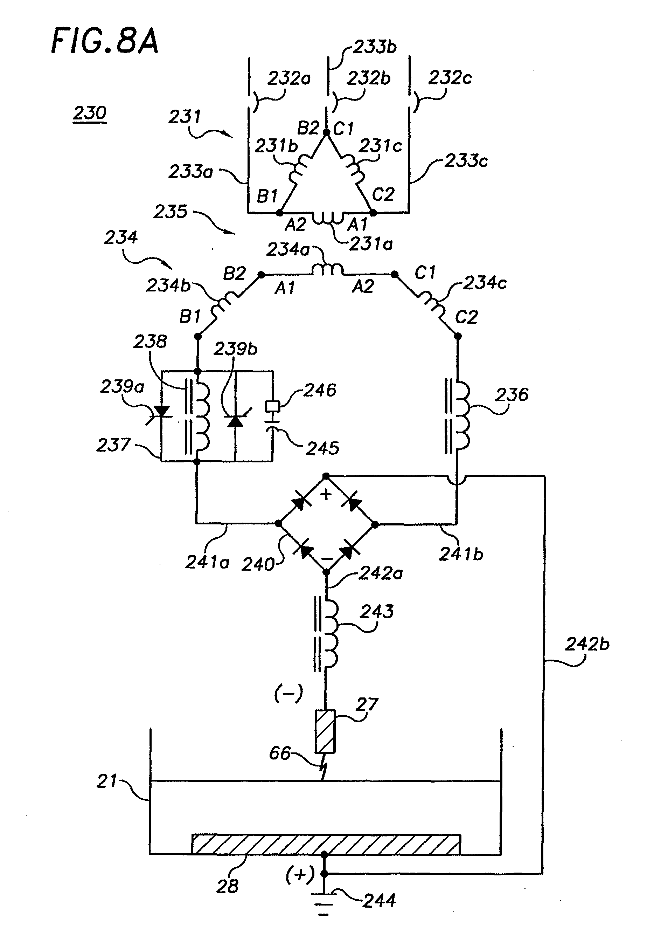

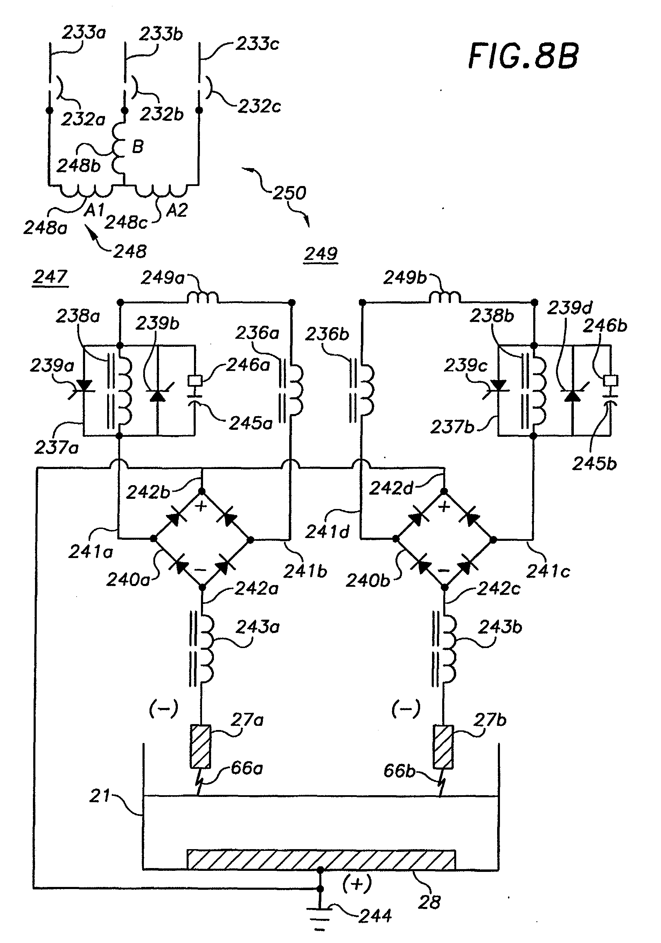

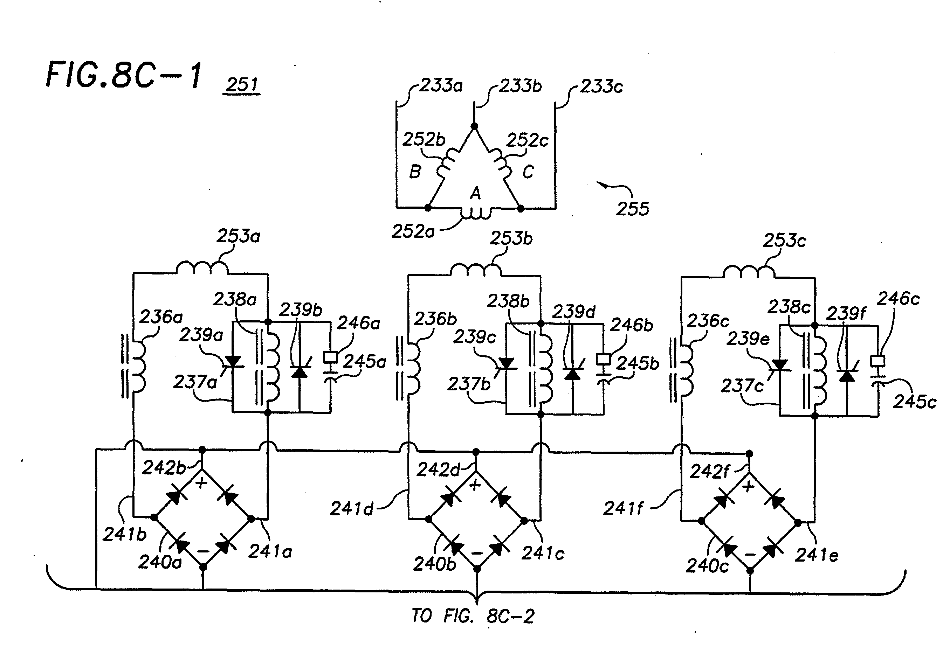

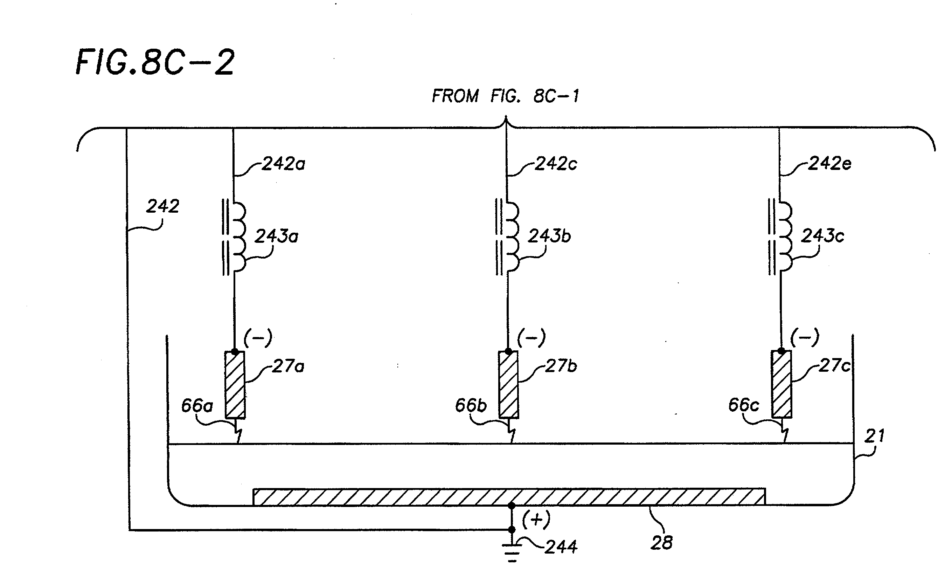

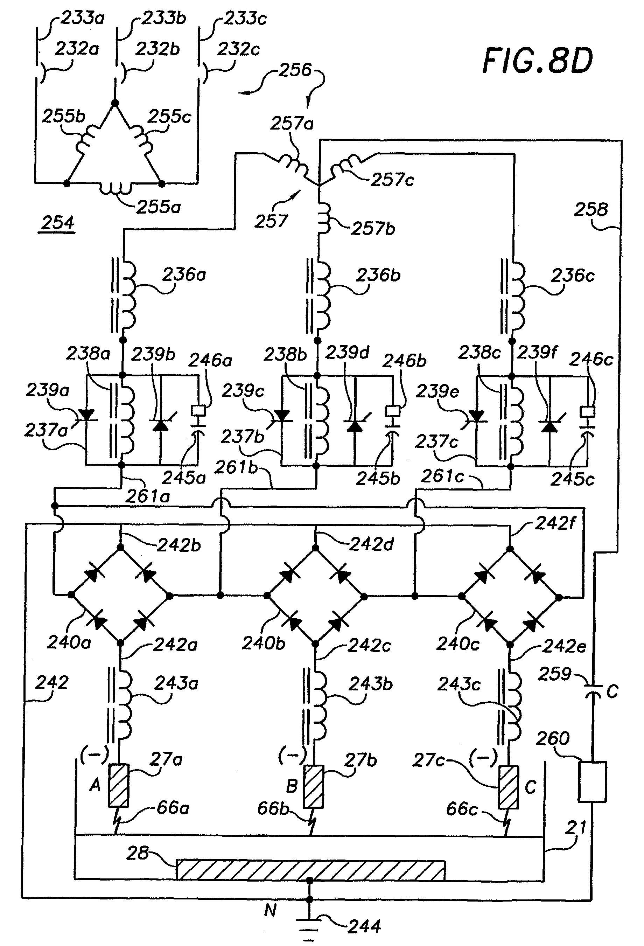

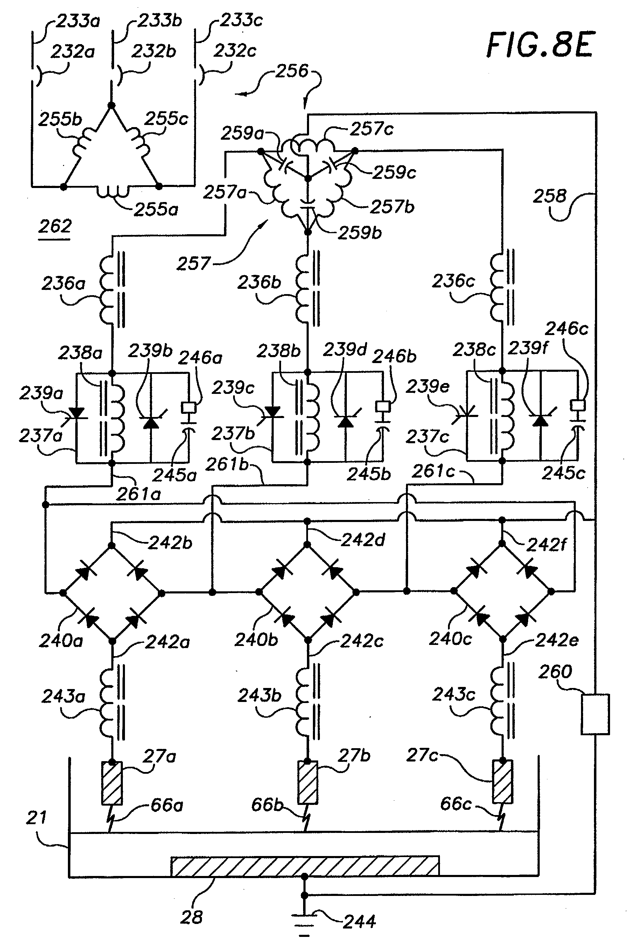

Inductors **75a** and **75b** are connected as shown in **FIG 1G.** Inductors **75a** and **75b** supply transient voltage frequently required to maintain stable arcs **27a** and **27b** during operation of the unit. "Clamping" diode **76** is connected between (-) and (+) outputs of the bridge rectifier. The function of "clamping" diode **76** is to provide a path for the current from inductors **75a** and **75b** to flow when the voltage of DC arcs **27a** and **27b** exceed the open circuit voltage of the rectifier. Alternative arc power arrangements could also be utilized in this embodiment *(see e.g.,* **FIGS. 8-10).**

The partially immersed non-arcing electrodes **24a** and **24b** preferably are powered by AC power supply **77**. As shown in **FIG. 1G**, power supply **77** includes primary winding **78** (connected to a conventional source of AC power) and secondary winding **79**. AC power supply **77** also includes saturable reactor **80** and capacitor **81**.

As discussed herein in connection with **FIG. 2** for example, if DC current passes through the waste material and slag/metal melt pool having partially submerged joule heating AC electrodes connected directly to the terminals of the transformer with no means of blocking the flow of DC current through the windings of the transformer, the core of the transformer saturates. This results in increased current in the primary winding of the AC transformer, causing the transformer to fail in a very short time period. In order to simultaneously operate the arc plasma and the joule heated melter in the vessel, it therefore is necessary to continue to pass AC current through the melt pool for joule heating, while simultaneously blocking DC current flow. Capacitor **81** is utilized to block the DC current and pass AC current. Capacitor(s) **81** preferably is connected in series with each transformer secondary winding **79** in order to balance the current in each of the phases over a wide range of furnace operating conditions.

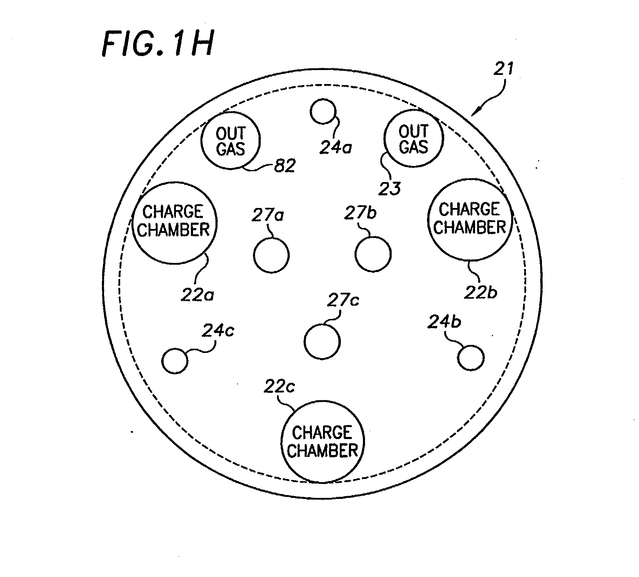

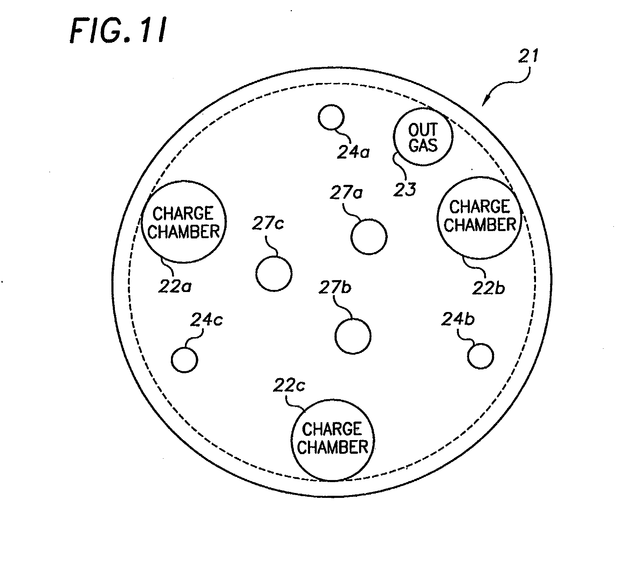

**FIGS. 1H-1J** illustrate plan views of additional embodiments in which three arcing electrodes and three partially immersed non-arcing electrodes are employed. Furnace **21** shown in **FIG. 1H** includes three arcing electrodes **27a- 27c** and three partially immersed non-arcing electrodes **24a-24c**. In this embodiment, the arcing and non-arcing electrodes can both be operated with AC power. Power to the arcing electrodes could also be varied to operate with DC power while the partially immersed electrodes are operated with AC power.

In the embodiments shown in **FIGS. 1H-1J**, three charge chambers **22a-22c** are positioned around the furnace **21**. While not intending to be limiting, the chambers preferably are positioned substantially equidistant around the furnace.

Referring now to **FIG. 1K**, a feed mechanism **100** suitable for use in introducing waste material to be treated in the arc plasma-joule heated melters of the present invention is shown. Feed mechanism **100** is connected to charge chamber port **22** in an appropriate manner.

Feed mechanism **100** includes a conveyor **101** or the like such as that shown in **FIG. 1K**. Conveyor **101** is used to transport waste containers or receptacles **102** to the melter units. In preferred embodiments, the movement of waste containers **102** is controlled based on the rate of feed into the melter. For example, infrared detectors **103** or other sensing devices can be employed to control the movement of the waste containers **102** along conveyor **101**.

Waste containers **102** pass from the conveyor **101** through the door **104** and the chamber inlet **105** to passageway **104a**. Door **104** is adapted for vertical movement such that the door can be raised or lowered. As discussed herein, an inflatable seal **106** can be used to control the amount of air and/or oxygen entering the furnace **21** through the door **104** of the feed mechanism.

A container **107** and plug **107a** arrangement is provided within housing device **108**. The plug **107a** is adapted for vertical movement within the container **107**. For example, the plug **107a** can be suspended in container **107** such that the top of the plug **107a** can be lowered to position a shown in **FIG. 1K** (during which time the top of the container **107** remains at position b shown in **FIG. 1K**). The plug can be raised until the top thereof abuts the top of container **107** (shown in **FIG. 1K** as position b) and then the can and plug can be raised as a unit to position c within housing **108**.

As illustrated in **FIG. 1K**, housing **108** is connected to furnace **21** and to passageway **104a**. Housing **108** preferably is removably connected to furnace **21** such that alternative feed mechanisms can be used with the furnace, depending for example on the amount and type of waste being treated. Passageway **104a** (together with chamber inlet and door **104**) can be formed as an integral part or unit with housing **108**. Housing **108** also includes an opening **108a** when the container **107** and the plug **107a** are raised to position *c* aligned with passageway **107a** for the passage of waste containers **102** therethrough and an opening **108a** for the passage of waste containers **102** into furnace **21**.

When a waste container **102** approaches door **104** from conveyor **101**, the waste container **102** abuts up against door **104**, and the door will be raised manually or will raise automatically based on feedback control from a computer controlled system such that the container(s) **102** roll into or are fed into the passageway **104a.** Depending on the size of the waste containers relative to the feed mechanism and/or the type of waste, more than one waste container may be fed simultaneously. The door **104** preferably is designed not to raise when the plug **107** is not in the down position (position *a* in **FIG. 1K**). This prevents undesirable air from entering the furnace.

Infrared detectors or the like can be used to sense that the container(s) are fully within the passageway **104a**. Door **104** then closes and seal **106** is inflated. The feed mechanism is thus closed to the atmosphere and can be nitrogen purged to remove at least a substantial portion of the oxygen in the feed mechanism. Preferably, the nitrogen purge is continued until there is less than about 5% oxygen in the feed mechanism.

The plug or hoist **107a**, which has been in the down position (position a in **FIG. 1K**), is then raised to position *b*, where it abuts container **107**. The container **107** and plug **107a** are then raised to position *c*. The container(s) **102** can be fed by gravity into furnace **21**. In some embodiments, it may be desirable to lower plug **107a** and/or the container and plug to ensure that the containers do not become lodged during the feed process into the furnace **21**.

As described above, a plurality of charge chambers and thus feed mechanisms can be used for a melter in accordance with the present invention. The charge chambers and feed mechanisms can be arranged such that the timing of the feed being introduced into the furnace is predetermined. Preferably, the number of feed mechanisms will correspond to the number of charge chambers. For example, the charge chambers and feed mechanisms can be arranged such that each is timed to open in relation to the others so as to avoid a build up of pressure in the furnace due to excessive feed at a particular time.

The feed mechanism **100** illustrated in **FIG. 1K** is exemplary. Other devices suitable for introducing waste material into the melters of the present invention can be employed so long as the amount of air and/or oxygen entering therethrough can be controlled.

**FIG. 1L** shows a sectional view of an embodiment of a portion of a furnace **21** formed in accordance with an embodiment of the invention. As discussed above in connection with various embodiments, metals discharge inlet **67** is formed at or near the bottom of a generally V-shaped configuration of a portion of the furnace hearth. The embodiment shown in **FIG. 1L** illustrates a freeze-plug arrangement in which the plug **116** is formed of a material that can be heated readily by inductive heat. The portion surrounding the inlet **67** can formed of graphite **110**, such as that shown in **FIG.**

**1L**. As further shown in **FIG. 1L**, other portions of the furnace **21** proximate to the V-shaped portion (generally below the bottom of joule heating electrode(s) **24**) of the hearth can be formed of high temperature brick **111** and of thermal insulation material **112**.

Heating coils **113** are provided for operation of the freeze plug arrangement such that metals can exit discharge port **114a** at a desirable time and rate. For example, when the coils **113** are cooled below a certain temperature (coils **113** can be water cooled when it is not desired to remove metals from the furnace), graphite **116** or metal in port **114** serves as a plug, thereby preventing the removal of metals from the furnace. When it is desired to remove metal from the furnace, the coils **113** are inductively heated such that the graphite **116** allows the passage of metals to exit from the furnace through port **114**. Nitrogen can then be blown on graphite block **116** when it is desired to freeze the plug.

The discharge of metal from the arc plasma-joule heated melter units of the present invention can be controlled by sampling the molten bath during processing. In addition, or in the alternative, the discharge of metals from the units can be controlled by monitoring the voltage and/or current in the unit. For example, if there is no change in voltage between the joule heating electrodes and the bath, then it may not be necessary to drain metal out of the unit. This can be assessed for each joule heating electrode in a particular unit. On the other hand, if a change in voltage is detected, it may be desirable or necessary to drain metal from the unit. Thus, instrumentation can be provided for monitoring and manually or automatically controlling sensing parameters such as thermal, voltage and current characteristics within the bath. The feedback from such instrumentation can be used to determine when to tap the metal outlet. In addition, loan scales positioned under the metals container and/or slag container (proximate to the discharge from the auxiliary heating system) can also be used to determine conditions for tapping and monitoring conditions within the furnace.

The removal of metals from the unit can also be based in part on visually observing the level of the molten bath in the unit through furnace view ports or the like. If for example, the level of the molten bath continues to rise and slag is removed using the auxiliary heating system discussed above, the level of metals in the unit may rise to a level near the slag exiting conduits to the auxiliary heating system. In these circumstances, it may be desirable to remove metals from the unit to prevent metals from entering the auxiliary heating system.

As discussed above, the arc plasma-joule heated melters in accordance with the present invention preferably include refractory linings. Depending on the material being treated and/or converted, the refractory may be formed of any suitable material capable of handling temperatures in excess of about 1400°C. The refractory may be formed of ceramic or graphite. The refractory may also be formed of high durability refractory materials. It will be appreciated that various durable refractory materials are suitable for use in the invention, depending on the type of material being treated. These materials can also be thermally shock sensitive.

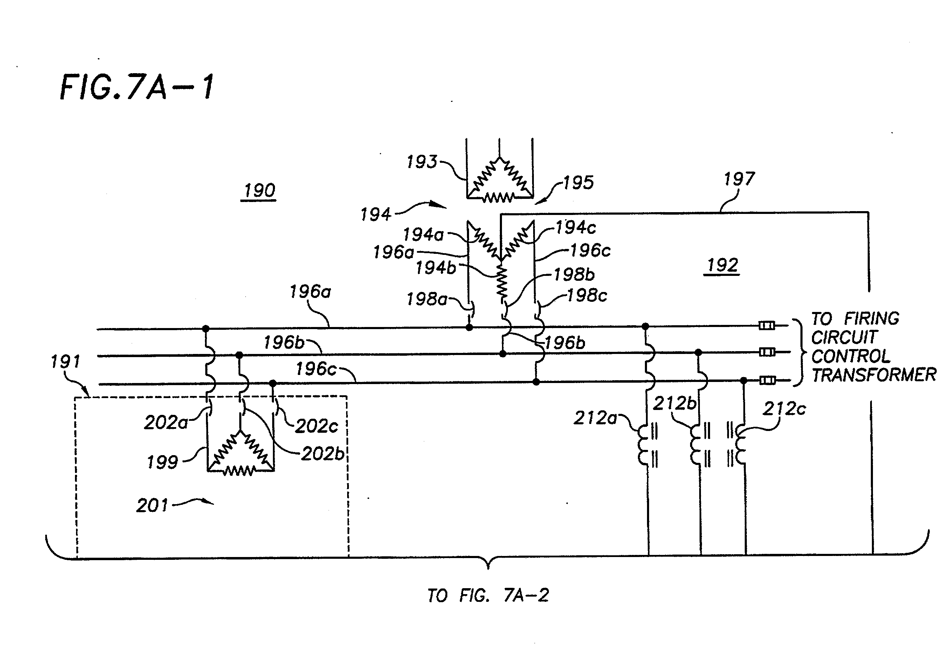

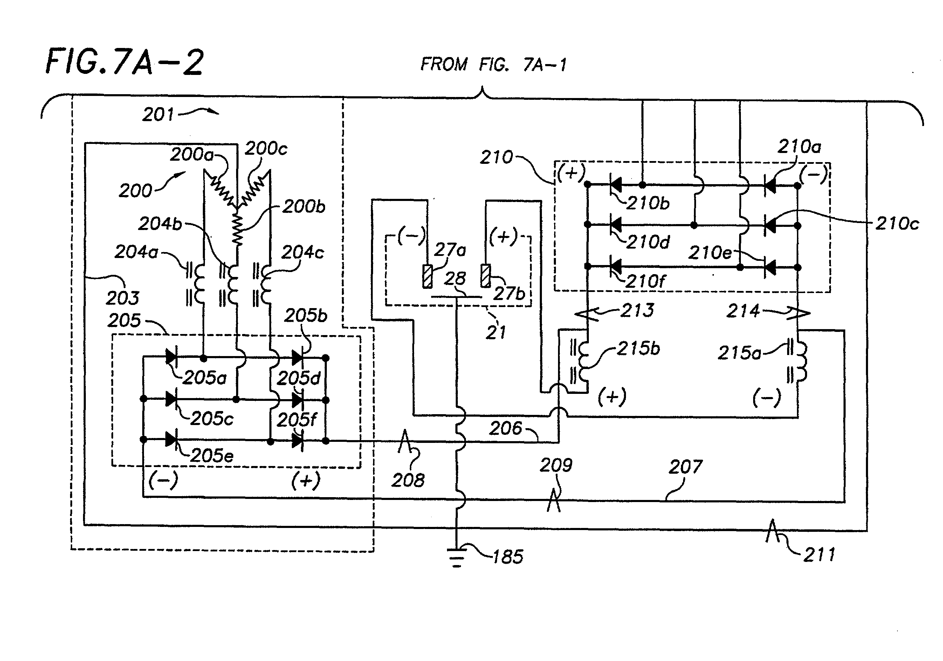

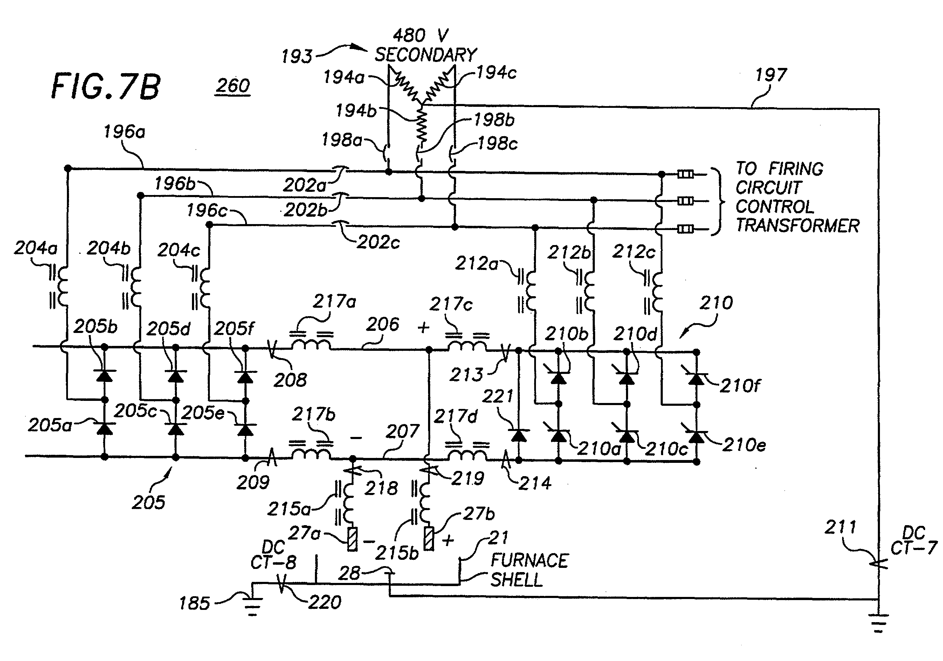

The inductively heated freeze plug arrangement shown in **FIG. 1L** can be heated for the removal of metal and/or slag from the furnace by available circuits. For example, circuit shown in **FIG. 7-124** on page 762 of the *Standard Handbook for Electrical Engineers,* 9th Edition, Knowlton, Ed., McGraw-Hill Book Company, Inc. (©1957), incorporated herein by reference, can be used for heating the freeze plug arrangement in accordance with the present invention.

Several arrangements for the power supplied to the arc plasma-joule heated melters in accordance with the present invention can be utilized. For example, **FIG. 2** shows one configuration of an integrated system which involves the use of capacitors **162** and a specific arrangement in the distribution of power. As shown in **FIG. 2**, a single phase joule heated arc plasma-melter **21** having a single pair of electrodes **27** and **28** for arc **66** is illustrated. In one embodiment, the joule heated portion of melter **21** utilizes AC power supply **158** while the arc portion of melter **21** utilizes DC power supply **150**.

The embodiment shown in **FIG. 2** utilizes the combination of the DC and AC power systems **150**, **158** respectively, supplying power to electrodes in the single vessel or melter tank **21** in which waste material **29** is undergoing treatment by a conversion process, including vitrification. A special circuit is necessary because DC arc current **27**, **28** will interact with joule heating AC electrodes **24a, 24b** unless special steps are taken to prevent such interaction. As discussed herein, such interaction can cause a failure of the transformers which provide power to the joule heating electrodes. This circuit allows fully independent control of the arc plasma and joule heated melter portions of the system.

DC power supply **150** includes inductor **157**, primary winding **153**, secondary windings, **154a**, **154b** and **154c** and saturable reactors **155a**, **155b** and **155c**. Primary winding **153** is preferably delta. Saturable reactors **154a**, **154b** and **154c** are connected in series respectively with secondary windings **154a**, **154b** and **154c**. Negative (-) outputs **151** and positive (+) **152** are thus formed by DC power supply **150**.

If DC current **150** passes through waste material **29** and slag/metal melt pool **30** having partially submerged joule heating AC electrodes **24a, 24b** connected directly to the terminals of transformer **159** with no means of blocking the flow of DC current **150** through the windings of transformer **159**, the core of transformer **159** saturates. This results in increased current in primary winding **160** of transformer **159** causing transformer **159** to fail in a very short time period. In order to simultaneously operate the arc plasma and the joule heated melter in vessel **21**, it therefore is necessary to continue to pass AC current **158** through melt pool **30** for joule heating, while simultaneously blocking DC current flow **150**. Capacitor **162** is utilized to block DC current **150** and pass AC current **158**. Capacitor **162** preferably is connected in series with each transformer secondary winding **161** in order to balance the current in each of the phases over a wide range of furnace operating conditions. As further shown in **FIG. 2**, capacitor **162** is connected to secondary winding **161**, which is connected to saturable reactor **163**.

**FIGS. 3A and 3B** show a circuit arrangement which is suitable for use in the present invention. In particular, three phase AC power supply **158** is illustrated in **FIG. 3A** while DC power supply **150** is illustrated in **FIG. 3B.** The circuit includes the inductance of each AC current path in the vessel or melter as reflected through the entire AC power system **158**, the non-linear resistance of the current path through the melt pool or molten bath, the electrode interfaces, the power feed cables, and secondary windings **161a, 161b** and **161c** of transformer **159** and the magnitude of the capacitance of capacitors **162a, 162b** and **162c** which is connected as a series element in the joule heating furnace circuit. AC power **158** also includes primary winding **160** and saturable reactors 163a, 163b and 163c connected to electrodes **24a-24f.** Saturable reactors **163a-163c** are connected respectively to secondary windings **161a-161c**.

Because the AC current is rarely sinusoidal in a circuit having in series with a non-linear resistor such as the joule heating furnace circuit, it is possible to excite several harmonic frequencies other than 60 Hertz, which are superimposed on the 60 Hertz sine wave supplied by the utility company. In this circuit, it is important to account for the non-linear resistance and to specify the electrical components to achieve adequate damping and therefore stable operation. It is also important that the voltage, current, and capacitance ratings of the capacitor are such that the series resonant frequency of the entire system inductance at the furnace electrodes is such that the lowest value of resistance as seen at these same electrodes when looking into the furnace plus the effective 60 Hertz resistance is equal to or greater than 1.5 and preferably 2 times greater than the $(L/C)^{1/2}$ where L is the total inductance of the power system and C is the capacitance of capacitors **162a, 162b** and **162c.** The total effective resistance R should be 2 times $(L/C)^{1/2}$, but any resonant rise in current is negligible if this is 1.5 times $(L/C)^{1/2}$.

As shown in **FIG. 3B,** DC electrical system **150** may have a power transformer with wye or delta connected secondary windings **154a-154c**. Primary winding **153** preferably is delta. As also shown in **FIG. 3B**, the power rectifier is preferably a three-phase full wave rectifier. The rectifier may be a current controlled thyristor rectifier, *i.e.* a silicon-controlled rectifier in which the anode-cathode current is controlled by a signal applied to a third electrode. Alternatively, the rectifier may be a three-phase full wave diode rectifier with the DC current control to maintain the desired DC current. If a thyristor rectifier is utilized, it is important that a full-rated current floating diode be placed across the thyristor rectifier and ahead of reactors **157a, 157b**. In this embodiment, saturable reactors **155a-155c** would not be used. It is not necessary to add a DC "floating" or "clamping" diode when using a three-phase diode rectifier since the diodes in the rectifier will suffice.

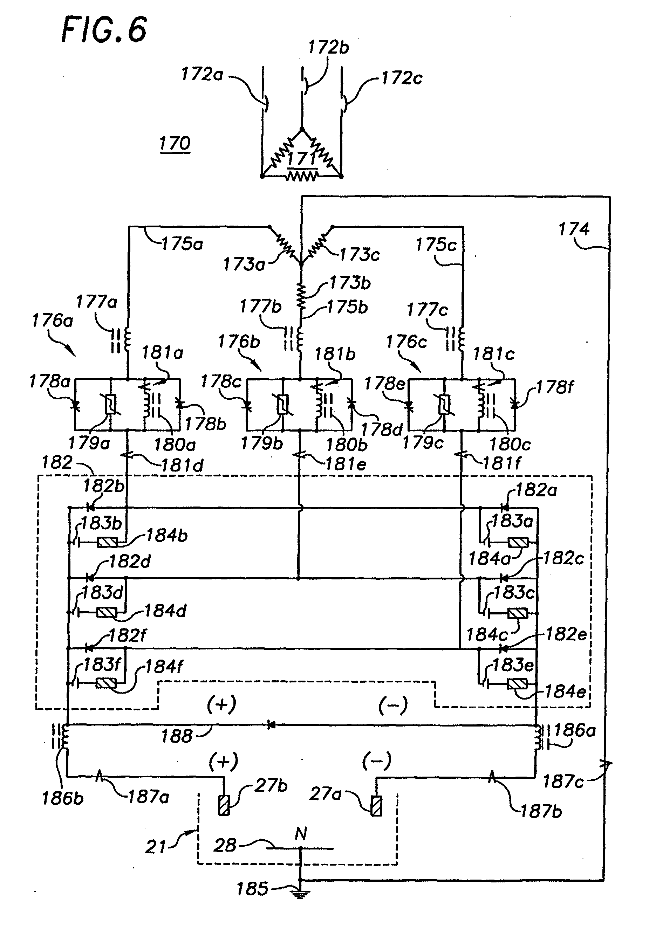

For a DC arc furnace, it is preferable to use a three-phase full wave diode rectifier with saturable reactor control **155a-155c.** Regardless of which type of power supply is used, it is important that an inductor is connected in series with the DC power lead which is not grounded. This reactor is necessary to rapidly supply the energy when the furnace conditions are such that the DC arc voltage suddenly increases. Additional embodiments for supplying power to the arcing electrodes can be utilized in accordance with the present invention *(see* **FIGS. 6-10).**

As shown in **FIG. 3B**, arcing electrode **27a** is connected to inductor **157a** at the (-) output while arcing electrode **27b** is connected to inductor **157b** at the (+) output. If the bottom of the inside of the furnace or melter is made of suitable refractory such as ceramic or the like and is a poor electrical conductor when hot, counter electrode **28** may be formed by depressing a portion of the floor of the furnace between joule heating electrodes **24a-24f** and then slightly elevating the molten metal drain tube so that a pool of metal remains in this depression in the furnace floor even after the metal is drained. This metal may act as a counter electrode **28** for the AC joule heating circuit and may simultaneously be used as a DC arc circuit electrode.

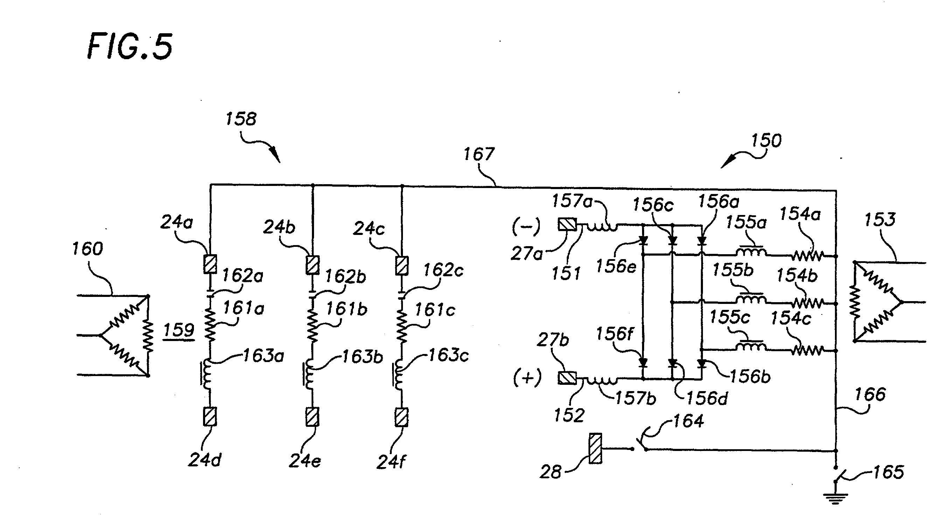

Metallic furnace bottom electrode **28** may be connected using various configurations such as that shown by the circuit diagrams in **FIG. 3B**. In any case, it is preferred to have one or more electrodes through the bottom of the furnace or melter. The electrodes may be graphite or metal. It should be noted that the circuits in **FIG. 3B** and **FIG. 5** include switch **164** in series with the electrical connection to electrode **28**. The function of these switches is to connect or disconnect the counter electrode to the neutral of the rectifier transformer to permit the DC arc current to transfer or not transfer to the counter electrode. When a switch is "open" for example, there will be an arc from the (+) electrode to the bath and an arc from the bath to the (-) electrode. When a switch is "closed", there will be an arc from the (+) electrode to the bath and current will then flow to the counter electrode. There will also be current from the counter electrode through the bath and then by way of an arc to the (-) electrode if the (+) and (-) electrode currents are not balanced.

Switch **164** is a three position switch, having closed, open and ground positions. Transformer neutral grounding switch **164** will permit several modes of operation. When the furnace or melter is operated in a mode in which the two DC arcs are electrically connected in series through the molten bath, switch **164** will be in the "ground" position and single throw ground switch **165** will be "open". When the furnace or melter is operated in the mode where two DC arc electrodes operate independently, then switch **164** is in the "closed" position and single position switch **165** will be in the "ground" position. The "open" position of switch **164** may be used during system maintenance (or when joule heating is used without arc plasma heating).

If the physical configuration of the furnaces or melters discussed above are suitable for the use of two independently positioned controllable electrodes, then the DC arc electrodes and the AC joule heating electrodes may be operated simultaneously without detrimental electrical interaction. In addition, beneficial interaction for vitrification of various types of waste can be obtained.

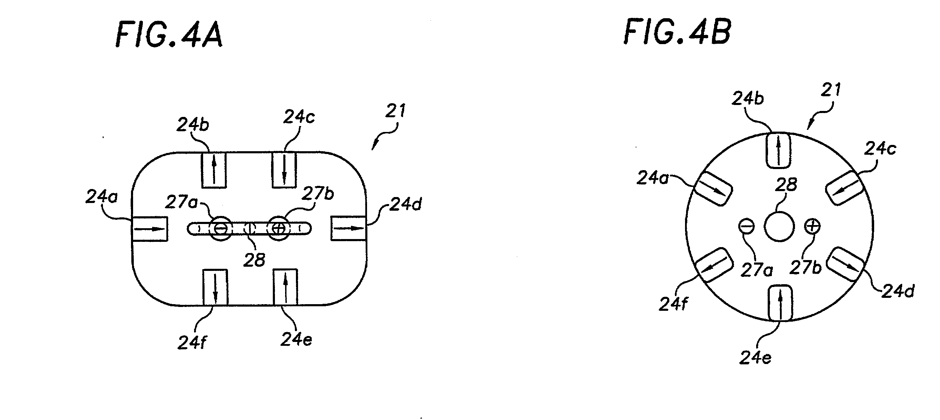

Exemplary plan views for various electrode configurations (and relative direction of current flow) suitable for use in unit **21** are shown in **FIGS. 4A-4D.** These configurations are suitable for remote control of installations. **Fig. 4A** shows an elongated furnace construction while **FIGS. 4B-4D** show round furnace constructions.

Any or all of the joule heating electrodes (**24a**, **24e** or **24c**) or (**24d, 24b** or **24f**) can be connected as counter electrode **28** for the DC arc system.

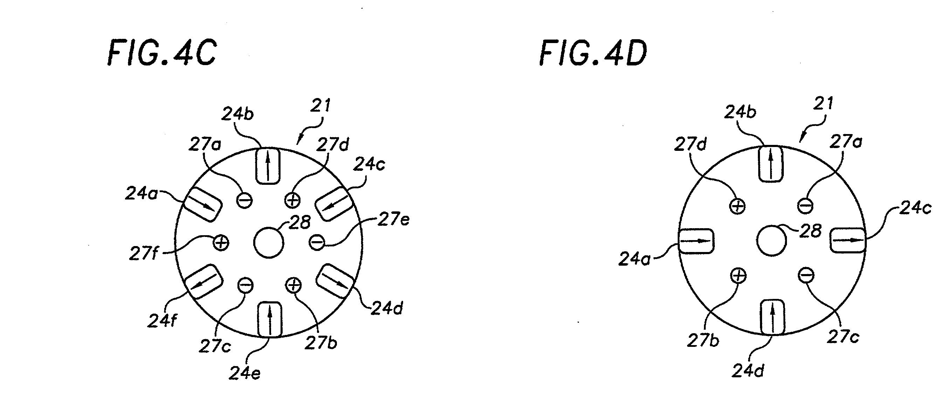

The electrode configuration illustrated in **FIG. 4B** utilizes one three-phase AC joule heating power supply and one DC rectifier power supply. In an alternative embodiment, shown in **FIG. 4C,** six joule heating electrodes **24a-24f** are employed with six arc electrodes **27a-27f**. The configuration shown in **FIG. 4C** uses one three-phase AC joule heating power supply and three DC rectifier power supplies.

In another embodiment illustrated in **FIG. 4D**, four joule heating electrodes **24a-24d** are utilized with four arc electrodes **27a-27d**. In this arrangement, two two-phase Scott T AC power and rectifier supplies are employed.

Referring now to **FIG. 5**, AC power supply system **158** includes primary winding **160**, secondary windings **161a-161c** connected respectively to saturable reactors **163a-163c** (or thyristor switches as shown in **FIGS. 6** and **7**). Saturable reactors **163a-163c** are respectively connected to joule heating electrodes **24e-24f.**

DC power supply **150** includes primary winding **153**, inductors **157a, 157b** and secondary windings **154a-154c** connected respectively to saturable reactors **155a-155c**. As also shown in **FIG. 5**, diodes **156a-156f** are provided. Inductor **157a** is connected to arcing electrode **27a** at (-) output **151** and inductor **157b** is connected to arcing electrode **27b** at (+) output **152.**

Depending upon the type of waste material being processed, it may be desirable to connect DC power supply **150** system neutral **166** to AC joule heating electrodes **24a, 24b** and **24c**, which are the electrodes connected to AC capacitors **162a-162c** respectively and which are used to block DC current flow through the secondary windings **161a-161c** of the transformer as also shown in **FIG. 5.** The connection of DC power supply **150** and AC power supply **158** is designated in **FIG. 5** as line **167**. The reason for using this connection is to provide three additional DC counter electrodes closer to the surface of the melt pool during warm up of the furnace so that neutral DC transfer current **166** can flow and assist in stabilizing the positive (+) and negative (-) DC arcs before the material directly above the counter electrode on the hearth has become sufficiently hot to conduct sufficient DC current to assist in stabilization of the DC arcs.

As discussed above, two or more DC arc plasma electrodes preferably are used to provide one or more arcs to or within the common molten pool. One electrode is in electrical contact with the (+) terminal of one DC inductor and another electrode is in electrical contact with the (-) terminal of another DC inductor. The mid or neutral terminal of the secondary winding of the rectifier transformer may or may not be electrically connected to a counter electrode which may be at or near the bottom of the molten pool.

If only one of the two DC electrodes is arcing and the other DC electrode is submerged in the molten bath and not arcing, then the submerged electrode could be grounded. However, it is not necessary and may not be desirable to do so.

Because one system employs two graphite electrodes, one electrode (+) and the other (-), then the neutral junction **166** of the three wye connected windings of the three phase transformer may or may not be connected to ground.

Graphite tapping spout **28** and the metal furnace shell of the unit must be grounded for safety reasons. Because the graphite tapping spout is in electrical contact with the molten pool in the bottom of the furnace, this means that if the neutral terminal **166** of the wye connected secondary winding is not connected to the graphite tapping spout **28**, then the two arcs are electrically in series. If one of the arcs extinguishes, then both of the arcs will therefore extinguish and this is not desirable. By connecting the neutral point **166** to the graphite tapping spout **28**, each arc is effectively independent and can continue to burn notwithstanding that the other arc has extinguished. Radiation from the arc which continues to burn frequently causes the extinguished arc to reignite.

By connecting the three isolated secondary windings as shown in **FIG. 3A** or **FIG. 5** and being certain that phase **24b-24e** is physically connected in reverse polarity to phase **24a-24d** and phase **24c-24f**, then the current paths through the molten path will be such as to cause stirring and mixing of the bath and thereby increase the quantity of waste material that can be processed per hour in a given furnace.

It should also be noted that if two or three independent DC power supplies of the type shown in **FIGS. 3B** and/or **FIG. 5** are used to power four or six graphite arc electrodes, this will provide additional furnace design configuration opportunities when large quantities or physically large waste materials need to be processed. The round furnace designs shown in **FIGS. 4B-4D** would fulfill this requirement.

Alternative embodiments for providing DC power of the arcing electrodes in accordance with the invention are shown in **FIGS. 6**, and **7A-7B**. **FIG. 6** utilizes a plurality of phase power controllers while **FIGS. 7A-7B** utilizes a phase controlled thyristor rectifier in combination with a diode rectifier. These circuits may be advantageous over the circuit shown in **FIG. 5** because saturable reactors are often larger and more expensive than thyristors. The circuits shown in **FIGS. 6** and **7A-7B** utilize thyristor switches in combination with AC inductors (such as load limiting reactors (LLR)) to provide the same desirable characteristics as the saturable reactors described hereinabove, *e.g.* to enhance arc stability in a DC arc furnace.

Circuit **170** shown in **FIG. 6** includes primary winding **171** and secondary windings **173a-173c**. As shown in **FIG. 6,** the secondary windings are wye connected with transformer neutral **174** connected thereto. The three phases of power **175a-175c** respectively include circuit breakers **172a-172c** as shown in **FIG. 6** (although circuit breakers **172a-172c** could alternatively be positioned between the secondary windings and phase power controllers **176a-176c**). Circuit breakers **172a-172c**, which could be air circuit breakers, are designed to open the circuit automatically under abnormal conditions.

As also illustrated in **FIG. 6,** current limiting reactors (CLR) **177a-177c** are connected in series with the incoming AC power to the phase power controllers **176a-176c**. Alternatively, current limiting reactors **177a-177c** could be connected in series after the thyristors **178a-178f**, but before diode rectifier **182**. Reactors **177a-177c**, which may be current limiting reactors, protect the thyristors and diodes in the rectifier so that the thyristors and diodes do not receive abnormal current in the event of misfire.

As further shown in **FIG. 6**, three phase power controllers **176a, 176b** and **176c** are provided. Each phase power controller **176a-176c** includes a pair of thyristors **178a-178b**, **178c-178d** and **178e-178f**, respectively. Phase power controllers **176a-176c** also respectively include metal oxide varistors (MOV) **179a-179c**, load limiting reactors (LLR) **180a-180c** and current transformers (CT) **181a-181c**. Reactors **180a-180c** preferably are air gap reactors.

The thyristors **178a-178f** can be bypassed by AC inductors **180a-180c**, respectively. The function of AC inductors **180a-180c** is to provide stability to the arc(s). This can be accomplished by the inductors providing current when the thyristor switches are in a non-conducting mode. Metal oxide varistors (MOV) **179a-179c** are connected in parallel with the inductors and thyristors as shown in **FIG. 6.** Varistors **179a-179c** are used to limit or clamp any transient voltages of either polarity to a level which will not damage the thyristors.

Current transformers (CT) **181a-181f** are standard AC current transformers. Current transformers **181a-181f** ensure that an appropriate level of DC current is flowing between the (+) and (-) DC arc electrodes before the thyristors **178a-178f** are "turned on". Current transformers **181a-181f** also ensure that if the thyristors are inadvertently "turned on", any resulting current will be rapidly reduced to a preset level of current. This will prevent in the case of a DC power arc extinction, the "full phase on" of the thyristors which may produce an abnormally and undesirably high transient surge of DC current if the arcs through the (+) and (-) electrodes are initiated under such a "full" phased on" condition.

AC inductors **180a-180c** (such as for example LLRs) can limit the AC current to a relatively low level of current when the thyristors **178a-178f** are not pulsed or otherwise gated. This means that the DC current supplied by the three phase full wave diode rectifier will be of a sufficient level to prevent extinction of the arc(s). When the (-) DC arc electrode **27a** and (+) DC arc electrode **27b** contact an electrically conductive surface, an arc or arcs may be initiated and sustained with a sufficient current magnitude to maintain a DC arc or arcs prior to firing the thyristor gates. When the thyristor gates are fired, the arc current through the electric arc or arcs will increase to a preset magnitude which is determined by the relative phase angle and/or duration of the pulse gate.

Additionally, the firing of the thyristors results in an increase in the arc current since their respective AC inductors (LLR) will be short circuited during that interval. Because current can pass through inductors **180a-180c** prior to being short circuited by thyristors **178a-178f**, this means that energy can be stored in inductors **180a-180c.** The amount of energy stored in each inductor is $E=1/2\ L\ i^2$ where E is the energy in watt seconds, L is the inductance in Henry's and i is the current in amperes.

The energy stored in the inductors can cause current to flow from inductors **180a-180c** through the thyristors **178a-178f** in a direction which is opposite to the current normally flowing from the power transformers to the diode rectifier (designated by the broker line **182** in **FIG. 6**) when thyristors **178a-178f** are fired. It is therefore desirable to fire thyristors **178a-178f** at such a time or phase angle so that the initial current through thyristors **178a-178f** will be significantly greater than the magnitude of current flowing out of inductors **180a-180c**. If before the thyristor gate is pulsed, the initial current from the inductor is greater than the forward current through the thyristor before gate "turn on" of the thyristor is completed, the thyristor may be momentarily "turned off". On the other hand, if the gate pulse is sufficiently long, then the thyristor will quickly "turn on" again and remain in the "turned on" condition until its normal power frequency "current zero" is reached, at which time it is necessary and desirable to have this thyristor "turned off".

AC current entering diode rectifier **182** is rectified to provide DC current. In particular, phase **175a** is rectified by diodes **182a** and **182b**. Similarly, phase 175b is rectified by diodes **182c** and **182d** while phase **175c** is rectified by diodes **182e** and **182f.**

As also shown in **FIG. 6**, capacitors **183a-183f** and resistors **184a-184f** are respectively connected in parallel with diodes **182a-182f**. Capacitors **183a-183f** and resistors **184a-184f** thus form a plurality of snubber circuits around diodes **182a-182f**. Snubber circuits are typically used to limit the effects of rapid voltage changes. As shown in **FIG. 6**, the snubber circuits are designed to prevent excess voltage flowing in the reverse direction from damaging diodes **182a-182f**. Thus, capacitors **183a-183f** minimize the transient voltage across the diodes **182a-182f.**

The wye connected transformer neutral **174** is connected to ground **185** and is also connected to a counter electrode **28** in the furnace hearth. This further enhances arc stability under a variety of conditions which may otherwise cause arc instability or arc extinction. For example, the counter electrode **28** provides two independent electric arcs with electrodes **27a** and **27b**. In the event that one of the arcs is extinguished (for example, due to transient energy demands due to waste being treated in the furnace), the other arc will be sustained and will reignite the arc which was extinguished.

Inductors **186a** and **186b**, which are respectively connected to arcing electrodes **27a** and **27b** and the outputs of the diode rectifier, provide energy and the necessary transient voltage frequently required to maintain stable arcs during operation of furnace **21**.

Current transformers (CT) **181a-181f** are standard AC current transformers and current transformers (CT) **187a-187c** are DC type current transformers.

Current transformers **181a-181f** provide feedback information, preferably to an automatic current control circuit, to maintain essentially a constant preset amount of current under varying arc voltage conditions. Current transformer **187c** senses any unequal current between the (-) arc electrode **27a** and (+) arc electrode **27b** and provides a correct signal to correct any undesirable current unbalance (for example, by adjusting the firing angle of the thyristors and/or by adjusting the arc length of one electrode).

Clamping diode **188**, which is connected across the output of diode rectifier **182**, is utilized to provide a current path to deliver the energy stored in inductors **186a** and **186b** during the short time intervals when DC power is not being supplied from rectifier **182**.

Referring now to **FIG. 7A**, an alternative embodiment of a circuit for use with the arcing electrodes is shown. The circuit **190** shown in **FIG. 7A**, which is designed to accomplish the same objectives as the circuit shown in **FIG. 6**, includes two different power rectifier circuits **191, 192**.

The main rectifier circuit **192** includes main power thyristor rectifier **210** having thyristors **210a-210f**. As shown in **FIG. 7A**, current limiting reactors **212a-212c** are respectively connected to phases **196a-196c** before thyristor rectifier **210**.

Current transformer **213** is connected to (+) output of thyristor rectifier **210** while current transformer **214** is connected to the (-) output of thyristor rectifier **210**. Inductors **215a** and **215b** are respectively connected on the (-) and (+) outputs of thyristor rectifier **210.** Inductors **215a** and **215b** may be DC inductors, such as iron core air gap inductors.

As further shown in **FIG. 7A**, the outputs of diode rectifier **205** function as a clamping diode for thyristor rectifier **210**. As shown for example, the (+) output **206** of diode rectifier **205** is connected to the (+) output of rectifier **210** and the (-) output **207** of diode rectifier **205** is connected to the (-) output of rectifier **210.**

Circuit **190** includes a main power transformer **195**. Transformer **205** includes primary winding **193** and secondary windings **194**. As shown in **FIG. 7A**, secondary windings **194a-194c** are wye connected and include neutral return **197**. Neutral return **197** functions like neutral return **174** described in connection with **FIG. 6**. Circuit breakers **198a-198c** are connected respectively to secondary windings **194a-194c** for respective phases **196a-196c**.

As further shown in **FIG. 7A**, a portion of the power from main secondary windings **194a-194c** is used in start up circuit **191** and a portion is used in the main power circuit **192** (e.g. in main power rectifier or thyristor rectifier **210**).

"Start up" rectifier circuit **191** includes transformer **201**, which includes primary windings **199** and secondary windings **200**. As shown in **FIG. 7A**, secondary windings **200a-200c** are wye connected with a neutral return **203** (which is connected to ground **185** and counter electrode **24**). In addition, circuit breakers **202a-202c** are respectively connected to phases **196a-196c** before primary winding **199**. Load limiting reactors (LLR) (such as for example air gap iron core reactors) **204a-204c** are connected in series with secondary windings **200a-200c**. Start-up circuit **191** also includes a three phase diode rectifier **205**. As discussed above, the outputs **206** and **207** of diode rectifier **205** are connected to the outputs of the thyristor rectifier **210**. Diode rectifier **205**, which includes diodes **205a-205f**, has an output current that is sufficient to initiate and maintain a stable arc or arcs.

(-) DC electrode **27a** and (+) DC electrode **27b** can be placed in contact with an electrically conductive surface, such as a molten pool described hereinabove. Circuit breakers **198a-198c** and **202a-202c** are closed such that DC current flows from diode rectifier **205** to initiate the arcs in electrodes **27a** and **27b.** Circuit breakers **198a-198c** and **202a-202c** may be air circuit breakers (*e.g.* for low voltage). The magnitude of this DC current is limited by the inductors **204a-204c** which deliver AC power to the AC input of diode rectifier **205.**

The thyristor rectifier **210** is controlled so that during the above start-up steps, there are no firing pulses delivered to the respective thyristors **210a-210f**. This means that thyristor rectifier **210** is not supplying any DC voltage or current to the (-) and (+) electrodes, **27a** and **27b**, respectively, during start-up.

When firing pulses are delivered to thyristors **210a-210f** in thyristor rectifier **210**, then this power rectifier may increase its current to a preset level and will maintain this preset level even though the resistance between the (+) and (-) electrodes may vary over a relatively wide range.

During the interval when none of the thyristors are "turned on" or "fired" by their respective gate pulses, the starting diode rectifier **205** maintains a low current arc thereby producing and maintaining a stable DC arc or arcs.

In order to be sure that a large magnitude of transient current is not delivered between (+) to (-) electrodes or (+) to N (counter electrode **28**) electrodes or (-) to N (counter electrode **28**) electrodes because there was no previous arc or other current path between these electrodes and the control circuit does not recognize this open circuit condition, DC current transformers **208, 209**, **213** and **214** sense this condition and cause the following to occur.

The firing pulses of the thyristors are "turned off" until DC current transformers **208** and **209** sense that the anticipated level of current is flowing in a reasonably steady manner between (-) DC electrode **27a** and (+) DC electrode **27b**. With current transformers **208** and **209** showing that DC current is flowing in (-) DC electrode **27a** and (+) DC electrode **27b**, then the firing pulses of the thyristors on rectifier **210** "turn on" and automatically increase the DC current to their respective preset current levels.

In the event that the voltage (+) to N (counter electrode **28**) electrodes and the (-) to N (counter electrode **28**) electrodes are abnormally unequal and if there is no current flowing from the electrode showing the higher voltage, then the electrode showing no current may be automatically lowered until the current and voltage is brought within their normal operating current range.

DC inductors **215a** and **215b** can store energy and deliver the stored energy rapidly (at a rate much faster than the phase angle control which is possible by the thyristor connected circuit), thereby preventing the arc or arcs from extinguishing. Current transformer **211** is in the transformer neutral circuit. If the currents supplied to the (+) and (-) electrodes are equal, then current transformer **211** current is zero. If theses currents are unequal, then current transformer **211** adjusts the electrode gap until the circuits are equal.

In an alternative embodiment of **FIG. 7A**, transformer **201** may be eliminated. This can be accomplished utilizing the circuit shown in **FIG. 7B**. The embodiment illustrated in **FIG. 7B** can be used to power two arcing electrodes.

In this embodiment, the transformer used to supply a lower AC voltage to the diode rectifier is not needed or desired since the diodes **205a-205f** and thyristors **210a-210f** provide effective current isolation so long as the maximum open circuit voltage from the diode rectifier does not exceed the maximum open circuit voltage from the thyristor rectifier **210** and also that the DC arc voltage supplied by the diode rectifier **205** is equal to or less than the open circuit DC voltage which could be delivered by the thyristor rectifier **210**.

The transformer **195** in **FIG. 7B** may have a delta primary (not shown) and a wye connected secondary with a neutral. Alternatively, the primary winding may be wye with a neutral and the secondary may be wye with a neutral. In another embodiment, the primary may be wye connected (without a neutral) and the secondary may be wye with a neutral and a tertiary delta.

While it may not be necessary in all cases to provide four DC inductors **217a-217d**, it may be desirable to do so, even if an inductor is connected directly in series with each of the arcing electrodes shown as inductors **215a-215b** since abnormally large inductors **215a** and **215b** may otherwise be required.

Current transformers **213, 214, 218** and **219** are carrying a current of any amount greater than zero, then it makes no difference if the DC current in DC current transformer **208** and/or DC current transformer **209** is zero or is greater than zero and it does not matter which direction the current is flowing in DC current transformer **208** and/or DC current transformer **209**. DC current transformers **208, 209, 218** and **219** must indicate that current is flowing from the diode rectifier **205** and through both the positive and negative arc electrodes **27a, 27b** before the thyristor gate circuit can increase the firing angle of the thyristors **210a-210f** to any amount greater than zero. Once the thyristor rectifier **210** is passing DC current through both of the arcing electrodes, then the function of the diode rectifier is to provide a relatively low magnitude of DC current prior to the time when each thyristor fires or "turns on." This produces a much more stable DC arc or arcs. This is particularly important when the waste contains more water or other constituents which quickly demand more energy from the arcs since rapid demand for arc energy can extinguish an arc. If an AC current limited diode rectifier was not connected in parallel with the DC output from the thyristor rectifier then arc extinction is much more likely to occur.

If arc extinction does occur, the DC arc current immediately drops to zero, thereby normally directing the firing circuit to advance from its preset firing angle to a "full on" 180° position which can produce a highly undesirable magnitude of current if the arc should restrike. For example, if the full load DC arc current rating of the system is 1,500 amperes and the arc was preset to operation at 500 amperes, and the arc or arcs suddenly extinguished and the current dropped to zero, then two actions will quickly take place: the electrodes will be automatically directed to move down toward the molten bath, and the firing circuit would normally advance to "full on" 180° conduction angle.

The next thing that will happen is that the arc or arcs will reignite and the DC thyristor current will immediately go to its full short circuit current instead of being limited to its formerly preset value of 500 amperes.

By having the thyristor firing circuit immediately return to its 0° firing angle and to remain at 0° until the current limited diode rectifier reestablished the DC arc or arcs from the electrodes to the molten bath, then and only then will the firing angle increase at a controlled rate until the former 500 ampere arc current limit is reached. This will prevent a recurrence of another abnormal surge of current.

Load limiting reactors **204a-204c** (which will be iron core air gap reactors) limit the diode rectifier DC current to a low level which is sufficient to maintain a stable DC arc or arcs while at the same time providing the amount of arc power necessary to melt any residual waste which was not destroyed after the last waste canister was deposited in the furnace, while at the same time limiting the arc energy which may impinge on the furnace lining wall while it is not protected by an almost continuous waste stream. The limited amount of arc energy is obtained by turning off the thyristor firing circuit and using only the low current diode rectified, and then adjusting arc length to destroy any residual waste while at the same time eliminating lining wear.

It should be noted that clamping diode **221** prevents high voltage surges from damaging thyristors **210a-210f.** It is not necessary to include a clamping diode for diode rectifier **205** since diodes **205a-205f** provide their own surge clamping action.

Current transformer **220** is included in **FIG. 7B** and not **FIG. 7A**. This is because the circuit shown in **FIG 7A** has an isolating transformer **201** and the circuit shown in **FIG. 7B** does not include this transformer. Current transformers **209** and **211** are DC current transformers.

The circuits for the arcing electrodes described above allow the joule heating AC power supply to provide near constant melt temperatures throughout the glass tank, thereby minimizing sizing constraints for the arc, *i.e.* arc power, electrode diameter, and the like. The DC arcs are primarily present in the furnace-melter for feed rate enhancement. This makes this newly configured melter technology more flexible than other available vitrification systems. The arcs supplies the energy in the unmelted overburden of incoming feed, and the joule heated portion of the melter system maintains the hot glass pool to ensure complete dissolution and mixing of the glass mixture as well as longer residence time for waste decomposition.

The circuits shown in **FIGS. 8-11** illustrate alternative embodiments for supplying arc power and joule heating power to the arc plasma-joule melters in accordance with the present invention.

As used herein, a silicon controlled rectifier (SCR) or thyristor is a solid state device which can be "turned on" with very low energy gate pulse of short duration. Once an SCR is fired or "turned on", it will continue to conduct current even after the gate firing pulse is "turned off". This current conduction will continue until there is an interruption or current zero in the power circuit on the order of 100 microseconds or more. The thyristor will the remain in the open or "off" position until a firing pulse is reapplied. An SCR or thyristor will not conduct current if the direction of current flow is reversed even though the firing pulse is applied.

As also used herein, an "SCR switch" includes a plurality (*e.g.* two) of thyristors connected in antiparallel. A snubber circuit that includes a resistor and capacitor connected in series may also be connected in parallel with the SCR switches or static switches of the present invention. The snubber circuit controls transient system voltage across solid state devices (*e.g.,* SCRs). In alternative embodiments, the SCR on any circuit can be replaced with saturable reactors. If saturable reactors is used, a load limiting reactor may be used in parallel with the saturable reactor.

A load limiting reactor (LLR), as used herein, provides a constant inductive reactance so that regardless of the amount of available short circuit current in a particular system, the resulting inductance will be such that a predetermined, relatively low current will flow through the inductance and the circuit when the circuit is completed in series without additional impedance; then the magnitude of AC current that will flow will be equal to the continuous current rating of the inductor. In the arcing circuits, the LLRs, which are connected in parallel with the static or SCR switches (or thyristor switches), provide a sufficient amount of current to keep the arc(s) alive when neither thyristor is firing. This occurs every ½ cycle when the firing angle is retarded or phased back, thereby enhancing arc stability.

A current limiting reactor (CLR), as used herein, is similar in design to a load limiting reactor. The impedance of a current limiting reactor, however, is significantly lower than the impedance of a load limiting reactor. The current limiting reactor also has a significantly larger current carrying capacity or rating than the load limiting reactor. This allows the current limiting reactor to carry all of the current when the thyristors are in the "full on" position. As a result, the solid state devices of the static switches and rectifiers (where employed) are protected notwithstanding most severe operating conditions. The CLRs thus prevent damage to solid state components, e.g. SCR switches and diodes, by keeping current at the appropriate level (*i.e.* rating of the SCR switch or rectifier). Without the CLR, the system might experience on the order of 20 times rated transformer current. For example and while not intended to be limiting, when the arcing electrode(s) are short circuited so that the impedance between arcing electrode to arcing electrode or arcing electrode to counter electrode becomes substantially zero, then the solid state devices such as the static switches will not be overloaded or damaged.

As further used herein, a DC inductor is used to supply transient voltage frequently required to maintain a stable arc during furnace operation. The construction and design of an air gapped iron core DC inductor is similar to that of an AC inductor, except for sizing constraints.

Referring now to **FIGS. 8A-8E**, alternative DC arc circuit arrangements are illustrated. The DC arc circuits shown in **FIGS. 8A-8E** allow for independent arc voltage and current control, since arc voltage is largely controlled by arc length and arc current is independently controlled by SCR phase angle firing.

**FIG. 8A** describes a DC single arc electrode system **230** which is powered by an AC power circuit using either three single phase transformers or one three phase transformer. The primary windings **231** of transformer **235** may be connected either in delta (as shown in **FIG. 8A**) or in wye with a four wire incoming power circuit (three phases and a neutral wire).

Power from a utility source (not shown) is fed to the three phases **233a, 233b** and **233c**, which are respectively connected to primary windings **231a, 231b** and **231c**. Circuit breakers **232a, 232b** and **232c** for each of the respective phases **233a, 233b** and **233c** can also be included. The circuit breakers may be air circuit breakers.

Secondary windings **234a, 234b** and **234c** of transformer **235** are arranged in a "U" connection as shown. The circuit shown in **FIG. 8A** supplies power to a single phase load while at the same time causing an equal amount of current to flow in each of the phases on both the primary **231** and secondary **234** transformer windings. It is desirable to substantially balance the load current on all three primary windings of the transformer. For example, a utility company may refuse to provide power unless the load current is substantially balanced on all three primary windings of the transformer or if the single phase load is of such small capacity that the unbalanced phase currents are of little concern on the utility power system. Whenever a "U" transformer is used, a delta primary may be used to balance the load on all three phases to provide balanced load current. This allows the same current to flow on each of the three phases on the primary windings because the same relative current flows in each secondary winding of the transformer.

As also shown in **FIG. 8A**, a silicon controlled rectifier (SCR) switch **237** is connected to one of secondary windings. Switch **237** includes thyristors **239a** and **239b**. SCR devices are used to prevent the flow of AC or DC current in either direction until a short duration, unidirectional pulse is applied between the gate and the cathode and also when the anode is connected to the positive terminal of the power source and the cathode is connected to the negative source of power by way of an interposed load whose impedance is such that the current flow will not exceed the current rating of the SCR device.

Another characteristic of an SCR or thyristor is that once current starts to flow from anode to cathode through the SCR, this current will continue to flow even after the gate pulse current has stopped and no voltage is applied to the gate.

The flow of current through an SCR can be stopped by interrupting the flow of current by a means external to the SCR. If AC current is flowing through the SCR, it is only necessary to wait for a natural current zero which occurs two times per cycle or to use some other means to stop this flow of current for approximately 0.000050 second.

The load limiting reactor (LLR) **238** (which is connected in parallel with thyristors **239a** and **239b** in **FIG. 8A**) is designed to provide a low current when the SCR switch is deactivated or in the "dead interval" in each half cycle before the SCR is turned on or "fired." Keeping the arc alive during the "dead interval" greatly improves arc stability as well as melting any residual waste particulate which may remain on the surface of the melt at the end of a waste destruction campaign when the SCR is not "turned on".

As discussed above, a snubber circuit which includes resistor **246** and capacitor **245** connected in series may also be connected in parallel with SCR switch **237**.

Current limiting reactor **236** is connected to another of the secondary winding terminals as shown in **FIG. 8A** (e.g. terminal $C_2$). Current limiting reactor (CLR) **236** is designed so that the DC short circuit current is limited to not more than the rated full load current of the silicon controlled rectifier (SCR) switch **237** or the diode bridge rectifier **240**, thereby increasing the life of these devices.

Input **241a** from SCR switch **237** and input **241b** from CLR **236** are introduced into diode rectifier **240**, which rectifies the alternating current to direct current. Output **242a** from rectifier bridge **240** provides direct current to arcing electrode **27** for arc **66** while output **242b** from diode rectifier **240** is connected to counter electrode **28** (which is connected to ground **244**) in furnace **21**. A DC inductor **243** is connected between the output **242a** of diode bridge rectifier **240** and DC arcing electrode **27**.

As discussed above, a saturable reactor may be substituted for the LLR reactor and the SCR switch on practically all DC or AC arc applications in the present invention. It should also be noted that the greater the number of DC arcing or AC arcing electrodes as well as the greater the number of AC joule heating electrodes, the larger the physical furnace size and the greater the amount of waste which can be destroyed per hour.

**FIG. 8B** shows another DC arc circuit that provides independent arc voltage and current control. The circuit **247** shown in **FIG. 8B** operates with two arcing electrodes. Circuit **247** employs a Scott-T transformer circuit **250** which converts three phase power to two phase power.

Transformer **250** includes primary windings **248a, 248b** and **248c** connected respectively to phases **233a, 233b** and **233c**. Circuit breakers **232a, 232b** and **232c,** such as air circuit breakers, can also be included as shown in **FIG. 8B**.

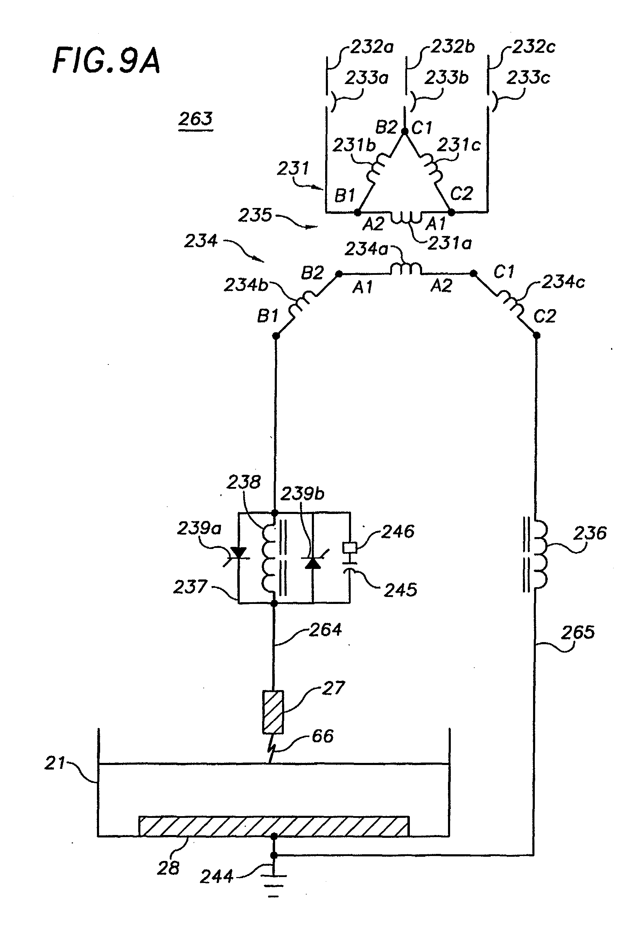

Secondary winding **249a** and secondary winding **249b** supply power to two circuits which are arranged similar to the single phase circuit described above in **FIG. 8A**. Whenever there is more than one arcing electrode and the circuits shown in **FIGS. 8B-10F** are used, it may be preferred to have the polarities of the arcing electrodes the same (*e.g.* negative). If polyphase AC power and AC arc electrodes are used (*see e.g.* **FIGS. 9A-9E**), then the electrodes will have opposite polarities. If DC power is used, the electrodes can all be (+) or all (-). Alternatively, some of the DC electrodes can be (+) while some are (-).

As shown in **FIG. 8B** for example, the polarity of electrodes **27a** and **27b** preferably are both (-) polarity, thereby causing both arcs to pull toward each other in order to increase the life of the furnace lining.

Preferably, the arcing electrodes are (-) and the counter electrode is (+). If the counter electrode is (-) and the arcing electrodes are (+), more electrode is likely to be consumed. In either case, however, the DC arcs would still pull toward one another.

It is also preferred to position the electrodes equidistant in the furnace. For example, in **FIG. 8C** where three arcing electrodes are utilized, the electrodes preferably form an equilateral triangle so that all the arcs pull to the center. This minimizes furnace lining erosion, decreases electrode consumption and facilitates the control of radiation to the walls of the furnace.

As also shown in **FIG. 8B**, silicon controlled rectifier (SCR) switches 237a and 237b are connected to one end of secondary windings **249a** and **249b**, respectively. Switches **237a** and **237b** respectively include thyristors **239a, 239b, 239c** and **239d.**

Load limiting reactors (LLR) **238a** and **238b** (which are respectively connected in parallel with thyristors **239a** and **239b** of switch **237a** and thyristors **239c** and **239d** of switch **237b** in **FIG. 8B**) are designed to provide a low current when the SCR switches are deactivated or in the "dead interval" in each half cycle before the SCR is turned on or "fired." As discussed above, keeping the arc alive during the "dead interval" greatly improves arc stability as well as melting any residual waste particulate which may remain on the surface of the melt at the end of a waste destruction campaign when the SCR is "turned off".

As discussed above, snubber circuits including resistors **246a** and **246b** and capacitors **245a** and **245b** may also be connected in parallel respectively with switches **237a** and **237b.**

Current limiting reactors **236a** and **236b** are respectively connected to another end of secondary windings **249a** and **249b**, respectively, as shown in **FIG. 8B.** Current limiting reactors (CLR) **236a** and **236b** are respectively designed so that the DC short circuit current is limited to not more than rated full load current of the silicon controlled rectifier (SCR) switch **237a, 237b** or the diode bridge rectifier **240a, 240b** thereby increasing the life of these devices.

Input **241a** from SCR switch **237a** and input **241b** from CLR **236a** are introduced into diode rectifier **240a**, which rectifies the alternating current to direct current. Similarly, input **241c** from SCR switch **237b** and input **241d** from CLR **236b** are introduced into diode rectifier **240b**, which rectifies the alternating current to direct current. Output **242a** from rectifier bridge **240a** provides direct current to arcing electrode **27a** for arc **66a** while output **242b** from diode rectifier **240a** is connected to counter electrode **28** (which is connected to ground **244**) in furnace **21**. A DC inductor **243a** is connected between the output **242a** of diode bridge rectifier **240a** and DC arcing electrode **27a.**

Output **242c** from rectifier bridge **240b** provides direct current to arcing electrode **27b** for arc **66b** while output **242d** from diode rectifier **240b** is connected to counter electrode **28** (which is connected to ground **244**) in furnace **21**. A DC inductor **243b** is connected between the output **242c** of diode bridge rectifier **240b** and DC arcing electrode **27b**.

**FIGS. 8C-8E** each show a different type of secondary transformer connection for powering a DC arc circuit. **FIGS. 8C-8E** each illustrate a DC arc circuit that provides independent arc voltage and current control with three arcing electrodes.

The circuit **251** shown in **FIG. 8C** includes three single phase transformers whose primary windings are connected in delta. Primary windings **252a, 252b** and **252c** are provided respectively for each of phases **233a, 233b** and **233c.** Each single phase transformer has a single secondary winding **253a, 253b** and **253c** which in turn is connected to an electrical circuit as described above in connection with **FIG. 8A** and **FIG. 8B.**

As also shown in **FIG. 8C,** silicon controlled rectifier (SCR) switches **237a, 237b** and **237c** are connected to one end of secondary windings **253a, 253b** and **253c,** respectively. Switches **237a, 237b** and **237c** respectively include thyristors **239a-239f.**

Load limiting reactors (LLR) **238a, 238b** and **238c** (which are respectively connected in parallel with thyristors **239a** and **239b** of switch **237a,** thyristors **239c** and **239d** of switch **237b** and thyristors **239e** and **239f** of switch **239c** in **FIG. 8C**) are designed to provide a low current when the SCR switches are deactivated or in the "dead interval" in each half cycle before the SCR is turned on or "fired." As discussed above, keeping the arc alive during the "dead interval" greatly improves arc stability as well as melting any residual waste particulate which may remain on the surface of the melt at the end of a waste destruction campaign.

Current limiting reactors **236a, 236b** and **236c** are respectively connected to another end of secondary windings **253a, 253b** and **253c** as shown in **FIG. 8C.** Current limiting reactors (CLR) **236a, 236b** and **236c** are designed so that the DC short circuit current is limited to not more than rated full load current of the silicon controlled rectifier (SCR) switches **237a, 237b, 237c** or the diode bridge rectifiers **240a, 240b, 240c** thereby increasing the life of these devices.

Input **241a** from SCR switch **237a** and input **241b** from CLR **236a** are introduced into diode rectifier **240a,**

which rectifies the alternating current to direct current. Similarly, input **241c** from SCR switch **237b** and input **241d** from CLR **236b** are introduced into diode rectifier **240b,** which rectifies the alternating current to direct current and input **241e** from SCR switch **237c** and input **241f** from CLR **236c** are introduced into diode rectifier **240c**, which rectifies the alternating current to direct current .

Output **242a** from rectifier bridge **240a** provides direct current to arcing electrode **27a** for arc **66a** while output **242b** from diode rectifier **242a** is connected to counter electrode **28** (which is connected to ground **244**) in furnace **21**. A DC inductor **243a** is connected between the output **242a** of diode bridge rectifier **240a** and DC arcing electrode **27a**.

Output **242c** from rectifier bridge **240b** provides direct current to arcing electrode **27b** for arc **66b** while output **242d** from diode rectifier **240b** is connected to counter electrode **28** (which is connected to ground **244**) in furnace **21**. A DC inductor **243b** is connected between the output **242c** of diode bridge rectifier **240b** and DC arcing electrode **27b**. Similarly, output **242e** from rectifier bridge **240c** provides direct current to arcing electrode **27c** for arc **66c** while output **242f** from diode rectifier **240c** is connected to counter electrode **28** (which is connected to ground **244**) in furnace **21**. A DC inductor **243c** is connected between the output **242e** of diode bridge rectifier **240c** and DC arcing electrode **27c**. As shown in **FIG. 8C**, outputs **242b, 242d** and **242f** can be connected together as bus **242**, which is connected to counter electrode **28.**

The circuit shown in **FIG. 8C** can be used when it is desirable to have completely independent control of each DC arc. Three single phase transformers, however, typically are more expensive one three phase transformer of comparable rating.

Referring now to **FIG. 8D**, circuit **254** employs one three phase transformer **256** with primary windings **255a, 255b** and **255c** connected in delta for respective phases **233a, 233b** and **233c**. Circuit breakers **232a, 232b** and **232c,** such as air circuit breakers, can also be provided as shown in **FIG. 8D**.

The secondary windings **257a, 257b** and **257c** are connected in wye with the neutral **258** brought out and connected to ground **244** through a surge capacitor **259** and resistor **260**. Surge capacitor **259** is provided to minimize or reduce electrical noise distribution and to limit the magnitude of electrical surges from the incoming high voltage system from damaging the solid state SCR-switches and/or the diode rectifiers.

Load limiting reactors (LLR) **238a, 238b** and **238c** (which are respectively connected in parallel with thyristors **239a** and **239b** of switch **237a**, thyristors **239c** and **239d** of switch **237b** and thyristors **239e** and **239f** of switch **237c** in **FIG. 8D**) are designed to provide a low current when the SCR switch is deactivated or in the "dead interval" in each half cycle before the SCR is turned on or "fired." As discussed above, keeping the arc alive during the "dead interval" greatly improves arc stability as well as melting any residual waste particulate which may remain on the surface of the melt at the end of a waste destruction campaign when the SCR's are "turned off".

Current limiting reactors **236a, 236b** and **236c** are respectively connected to one end of secondary windings **257a, 257b** and **257c**, respectively, as shown in **FIG. 8D**. As further shown in **FIG. 8D**, current limiting reactors **236a, 236b** and **236c** are respectively connected in series with SCR switches **237a, 237b** and **237c** (the current limiting reactors are connected in series with some portion of the AC circuit and the load limiting reactors are connected in parallel with the SCR switch).

Current limiting reactors (CLR) **236a, 236b** and **236c** are designed so that the DC short circuit current is limited to not more than rated full load current of the silicon controlled rectifier (SCR) switches **237a, 237b, 237c** or the diode bridge rectifier **240a, 240b, 240c** thereby increasing the life of these devices.

Input **261a** from SCR switch **237a** is introduced into diode rectifier **240a**, which rectifies the alternating current to direct current. Similarly, input **261b** from SCR switch **237b** is introduced into diode rectifier **240b**, and input **261c** from SCR switch **237c** is introduced into diode rectifier **240c.**

Output **242a** from rectifier bridge **240a** provides direct current to arcing electrode **27a** for arc **66a** while output **242b** from diode rectifier **240a** is connected to counter electrode **28** (which is connected to ground **244**) in furnace **21**. A DC inductor **243a** is connected between the output **242a** of diode bridge rectifier **240a** and DC arcing electrode **27a**. Output **242c** from rectifier bridge **240b** provides direct current to arcing electrode **27b** for arc **66b** while output **242d** from diode rectifier **240b** is connected to counter electrode **28** (which is connected to ground **244**) in furnace **21**. A DC inductor **243b** is connected between the output **242c** of diode bridge rectifier **240b** and DC arcing electrode **27b**. Output **242e** from rectifier bridge **240c** provides direct current to arcing electrode **27c** for arc **66c** while output **242f** from diode rectifier **240c** is connected to counter electrode **28** (which is connected to ground **244**) in furnace **21**. A DC inductor **243c** is connected between the output **242e** of diode bridge rectifier **240c** and DC arcing electrode **27c**. As shown in **FIG. 8D**, outputs **242b, 242d** and **242f** can be connected together as bus **242**, which is connected to counter electrode **28**.

The circuit shown in **FIG. 8D** on the load side of the SCR switches can provide about 73% more DC voltage open circuit voltage between arcing electrodes **27a** to **27b**, **27b** to **27c** and **27c** to **27a** than between electrodes **27a** to **28, 27b** to **28** and **27c** to **28**. This can enhance arc stability relative to **FIG. 8A** and **FIG. 8B.**

The circuit **262** shown in **FIG. 8E** is similar to circuit **254** shown in **FIG. 8D.** The circuit **262** shown in **FIG. 8E,** however, includes secondary windings **257a, 257b** and **257c** of the transformer **256** connected in delta rather than in wye. In addition, three surge capacitors **259a, 259b** and **259c** are connected in wye as shown in **FIG. 8E** in order to provide comparable surge protection for the static switches and/or the diodes. Resistor **260** is also provided as in **FIG. 8D** to suppress electrical noise.

When a larger furnace is required than that which three electrodes can handle, then the circuit of **FIG. 8B** can be combined as necessary, thereby providing DC arc power for a multitude of arcing electrodes, for example four arcing electrodes. In some situations, it may be desirable to design a larger furnace that utilizes six arcing electrodes. Power for the six electrodes can be provided by combining two systems such as shown in **FIG. 8C** systems, or two systems such as shown in **FIG. 8D**, or in some cases by one combining a system like that shown in **FIG. 8C** with that shown in **FIG. 8D.**

In circumstances where four or six electrodes are used, the electrodes from two separate systems can be interspersed with independent arc current control while still providing a balanced load on each utility phase, thereby permitting a reduction of power in one system relative to its associated system. This interspersing of electrodes will, in a general way, distribute the heat from all electrodes in a more uniform manner inside the furnace.

**FIGS. 9A-9E** illustrate alternative embodiments for providing AC power to the arcing electrodes in accordance with the present invention. The embodiments shown in **FIGS. 9A-9E** utilize alternating current (AC) rather than direct current (DC) as discussed hereinabove. AC power can be utilized for both the arcing and joule heating electrodes without detrimental interaction with one another since they can be effectively decoupled and will not damage either transformer.

Referring now to **FIG. 9A**, an AC arc circuit **263** that provides independent arc voltage and arc current control is illustrated. Circuit **263** includes one arcing electrode **27** for arc **66**.

The power source for the AC arc uses power from "U" secondary windings **234a, 234b** and **234c** of transformer **235** as discussed above with the DC arc circuit of **FIG. 8A.** Primary windings **231a, 231b** and **231c** of transformer **235** are provided for phases **233a, 233b** and **233c**, respectively. Circuit breakers **232a, 232b** and **232c**, such as air circuit breakers, can also be provided.

SCR switch **237** is connected to one of the secondary windings and includes thyristors **239a** and **239b**. Load limiting reactor (LLR) **238** is connected in parallel with thyristors **239a** and **239b** of switch **237**. A snubber circuit can also be provided as shown and as discussed hereinabove. Electrode **27** is connected to switch **237** and power output **264** from switch **237** provides alternating current to electrode **27**.

Current limiting reactor (CLR) **236** is connected in series to another terminal of the secondary windings (e.g. $C_2$ in **FIG. 9A**) such that current limiting reactor **236** and current **265** from CLR **236** are is connected to counter electrode **28** (which is connected to ground **244**) in furnace **21**. Switch **237**, reactor **238** and reactor **236** are similar in design to those shown in **FIG. 8A**, but the ratings of switch **237**, reactor **238** and reactor **236** may be different. The embodiment shown in **FIG. 9A** does not utilize a diode rectifier or a direct current inductor (DCI) since the arc is being powered by alternating current. The circuit will function in the same manner if CLR **236** is connected between terminal $B_1$, and SCR switch **237**. In this case terminal $C_2$ would be connected to the counter electrode and ground.

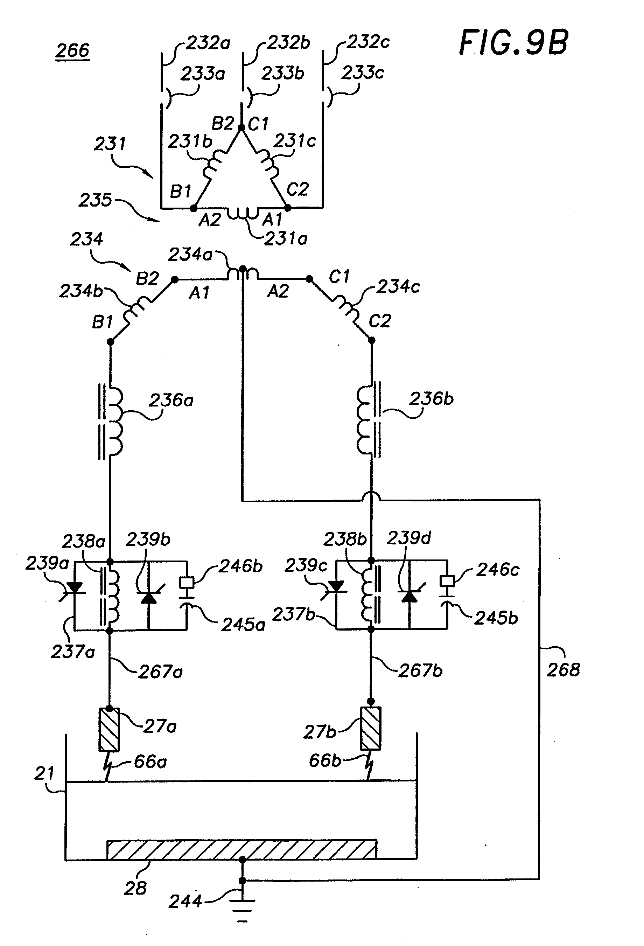

**FIG. 9B** illustrates an AC arc circuit **266** that provides independent arc voltage and arc current control. Circuit **266** includes two arcing electrodes **27a** and **27b**.

The power source for the AC arc uses power from "U" secondary windings **234a, 234b** and **234c** of transformer **235**. Primary windings **231a, 231b** and **231c** of transformer **235** are provided for phases **233a, 233b** and **233c,** respectively. Circuit breakers **232a, 232b** and **232c**, such as air circuit breakers, can also be provided.

As shown in **FIG. 9B**, secondary winding **234a** is center tapped such that neutral **268** is connected to counter electrode **28**. This can improve AC stability in both arcs while at the same time permitting independent current control of each arc.

Current limiting reactors (CLR) **236a** and **236b** are connected to two of the secondary windings as shown. SCR switches **237a** and **237b** are respectively connected in series to current limiting reactors **236a** and **236b** and to electrodes **27a** and **27b**, respectively. Switches **237a** and **237b** respectively include thyristors **239a** and **239b**, and thyristors **239c** and **239d**. As discussed above, snubber circuits can also be included. Load limiting reactors (LLR) **238a** and **238b** are respectively connected in parallel with thyristors **239a** and **239b** of switch **237a** and in parallel with thyristors **239c** and **239d** of switch **237b**. Electrodes **27a** and **27b** are connected in series to switches **237a** and **237b**, respectively. Power output **267a** from switch **237a** provides alternating current to electrode **27a** for arc **66a** while power output **267b** from switch **237b** provides alternating current to electrode **27b** for arc **66b.**

Switches **237a** and **237b**, reactors **238a** and **238b**, and reactors **236a** and **236b** are similar in design to those shown in **FIG. 8A**, but the ratings of each may differ. The embodiment shown in **FIG. 9B** does not use a diode rectifier or a direct current inductor (DCI) since the electrodes are being powered by alternating current (AC).

When the current in the two arcing electrodes is identical, then there is no current in the counter electrode **28** and in line **268**. The counter electrode **28** and line **268** conducts only the current difference between the two electrodes; this permits independent current control since thyristors **239a** and **239b** can provide only AC power to electrode **27a** with no current in electrode **27b.** In this case, all the current from electrode **27a** must go through the counter electrode.

If the current through electrodes **27a** and **27b** are equal, the current flows through the bath between electrodes **27a** and **27b** and there is no current to counter electrode 28.

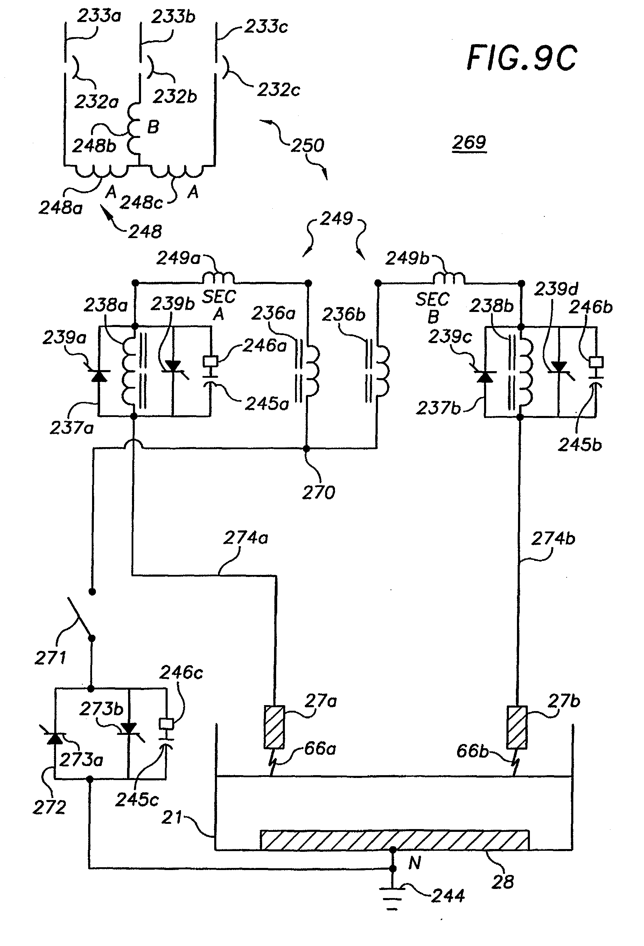

The circuit shown in **FIG. 9C** is also designed to provide AC arc power to two arcing electrodes. Circuit **269** allows independent arc voltage and arc current control. In this case, the power source is derived from a Scott-T transformer **250** (similar to the transformer shown in **FIG. 8B**). Transformer **250** includes primary windings **248a, 248b** and **248c** respectively connected to phases **233a, 233b** and **233c**. Circuit breakers **232a, 232b** and **232c,** such as air circuit breakers, may also be provided. Transformer **250** also includes secondary windings **249a** and **249b.**

As shown, SCR switch **237a** is connected to one end of secondary winding **249a** and current limiting reactor **236a** is connected to the other terminal of secondary winding **249a**. SCR switch **237b** is connected to secondary winding **249b** and current limiting reactor **236b** is connected to the other terminal of secondary winding **249b.** SCR switch **237a** includes thyristors **239a** and 239b. Load limiting reactor **238a** is connected in parallel with thyristors **239a** and **239b**. Similarly, SCR switch **237b** includes thyristors **239c** and **239d**. Load limiting reactor **238b** is connected in parallel with thyristors **239c** and **239d**. SCR switch **237a** is also connected to arcing electrode **27a** such that AC power **274a** is provided to arcing electrode **27a** while SCR switch **237b** is connected to arcing electrode **27b** such that AC power **274b** is provided to arcing electrode **27b.** Snubber circuits may also be included as shown and as discussed therein above.

As further illustrated in **FIG. 9C**, the common connection to the furnace counter electrode N **28** originates at the point **270** where the two current limiting reactors (CLR) **236a** and **236b** are joined. The common connection may be connected only to counter electrode N **28** (which is connected to ground **244**) in furnace **21** when switch **271** is closed and SCR switch-neutral **272** is firing. SCR switch-neutral **272** includes thyristors **273a** and **273b.** A snubber circuit including resistor **246c** and capacitor **245c** may also be included.

While switch **271** will normally be closed, it may be desirable to have switch **271** open if the waste stream being destroyed produces relatively little AC arc instability or transient perturbations. When the furnace **21** is operating with switch **271** closed, SCR switch-neutral **272** may be used to control the amount of current that flows from each arcing electrode **27a, 27b** to the counter electrode N **28.** This may be particularly important when tapping the furnace. If there is no switch system **272** and switch **271** is closed, then any current difference between electrodes **27a** and **27b** will flow to the counter electrode, thereby heating the bath in the vicinity of the counter electrode which can change the viscosity of the melt when tapping.

Another embodiment of the invention includes an AC arc circuit that provides independent arc voltage and arc current for use with three arcing electrodes. Such a circuit is shown in **FIG. 8D.**

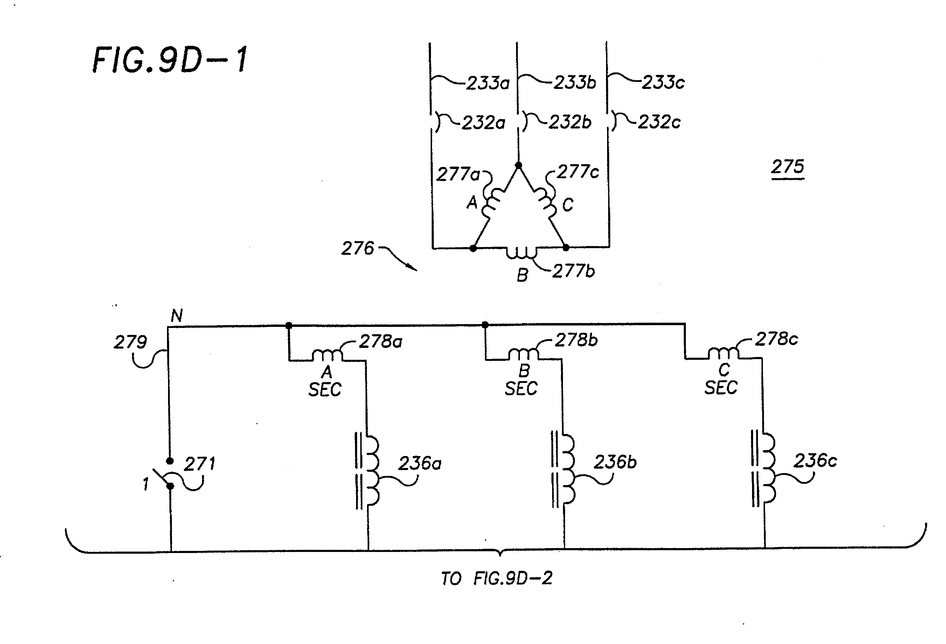

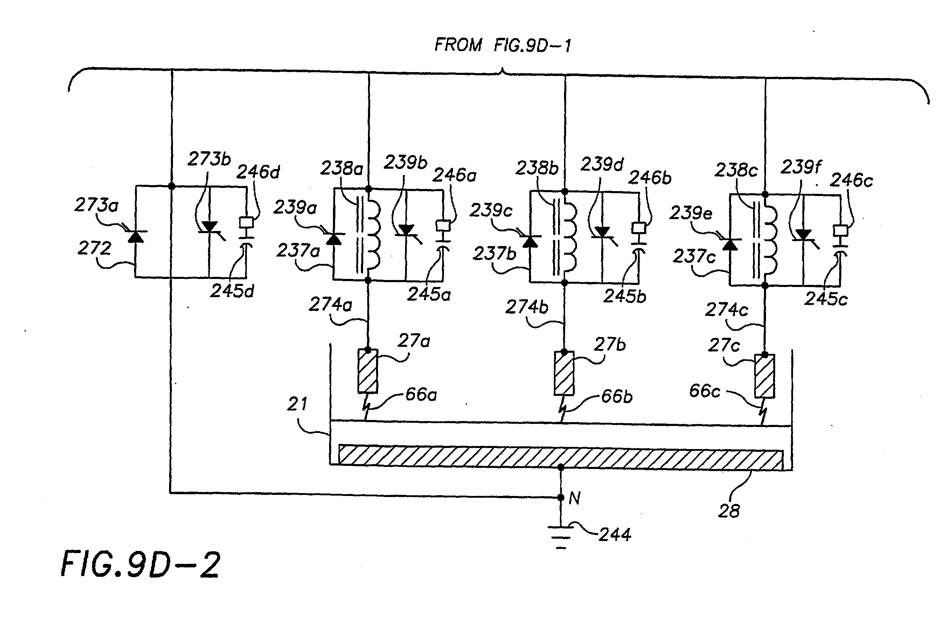

Circuit **275** shown in **FIG. 9D** is designed to provide AC arc power to three arc electrodes **27a-27c**. The power source includes transformer **276** having primary windings **277** and secondary windings **278**. Primary windings **277a, 277b** and **277c** receive AC power from a utility source and are respectively connected to phases **233a, 233b** and **233c.** Circuit breakers **232a, 232b** and **232c**, such as air circuit breakers, can also be included.

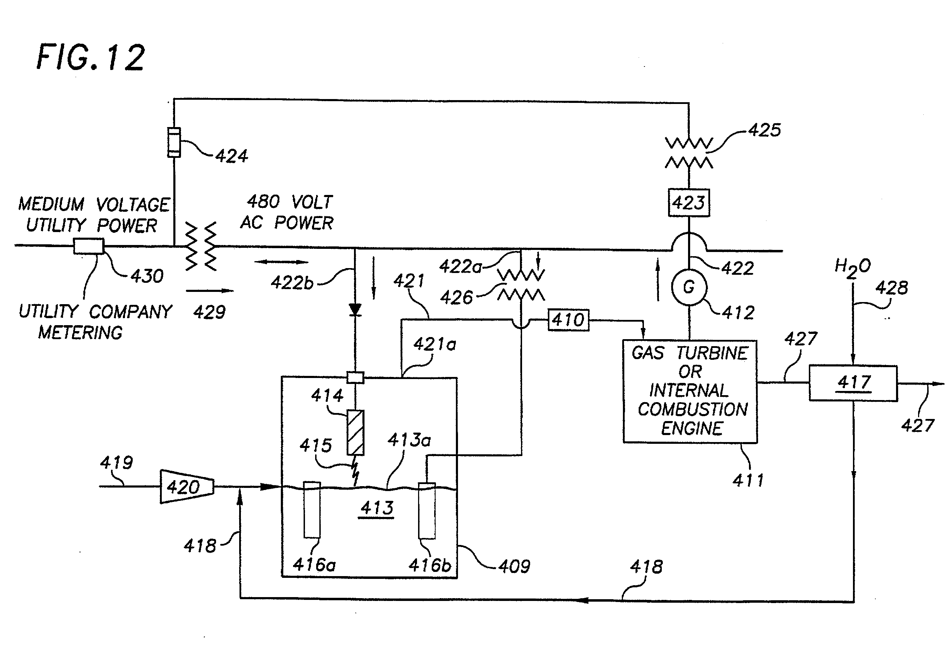

A wye connected secondary **278** includes secondary windings **275a, 275b** and **275c** in addition to neutral N **279**. Switch **271** and SCR switch-neutral **272** (which includes thyristors **273a** and **273b**) may also be used to control the amount of AC current that will flow from the three AC arc electrodes **27a-27c** to the counter electrode N **28** (which is connected to ground **244**) in furnace **21**. A snubber circuit including resistor **246d** and capacitor **245d** may also be included. When the current on the three phases is balanced, no current will flow to the counter electrode. When the current is unbalanced current and SCR switch **272** is turned "full on", the unbalanced current will flow to the counter electrode (as well as possible harmonic current). When switch **272** is phase controlled, this counter electrode current can be reduced as described above in connection with **FIG. 12C.**

As also shown in **FIG. 9D**, current limiting reactor **236a** is connected in series to secondary winding **278a**. SCR switch **237a** is also connected in series to current limiting reactor **236a**. SCR switch **237a** includes thyristors **239a** and **239b.** In addition, load limiting reactor **238a** is connected in parallel with thyristors **239a** and **239b.** Current limiting reactor **236b** is connected in series to secondary winding **278b**. SCR switch **237b** is also connected in series to current limiting reactor **236b**. SCR switch **237b** includes thyristors **239c** and **239d.** In addition, load limiting reactor **238b** is connected in parallel with thyristors **239c** and **239d.** Similarly, current limiting reactor **236c** is connected in series to secondary winding **278c**. SCR switch **239c** is also connected in series to current limiting reactor **236c**. SCR switch **239c** includes thyristors **239e** and 239f. In addition, load limiting reactor **238c** is connected in parallel with thyristors **239e** and **239h**. Snubber circuits can also be included.

SCR switch **237a** is also connected to arcing electrode **27a** such that AC power **274a** is provided for arc **66a** while SCR switch **237b** is connected to arcing electrode **27b** such that AC power **274b** is provided to arc **66b.** Likewise, SCR switch **237c** is connected to arcing electrode **27c** such that AC power **274c** is provided to arc **66c.**

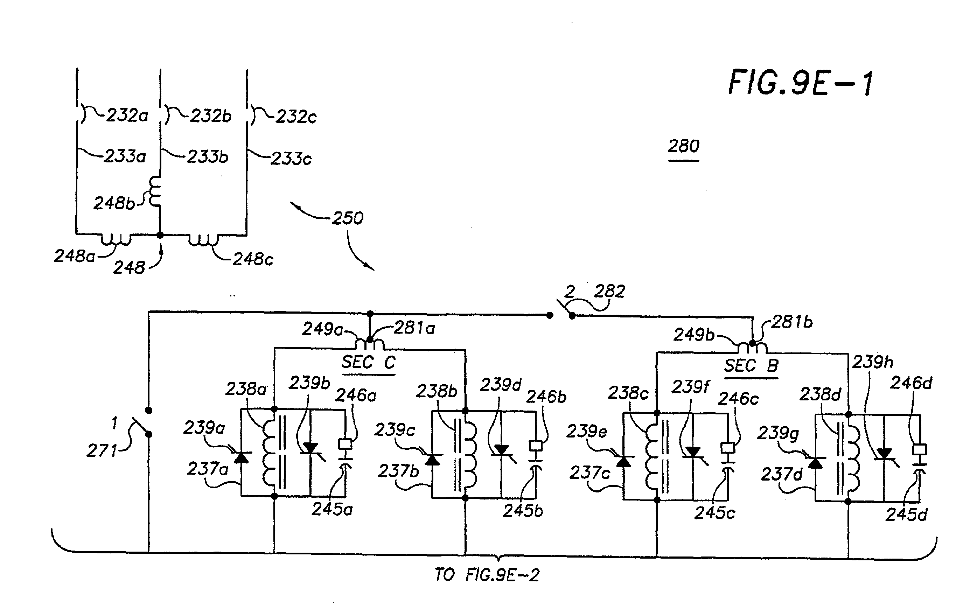

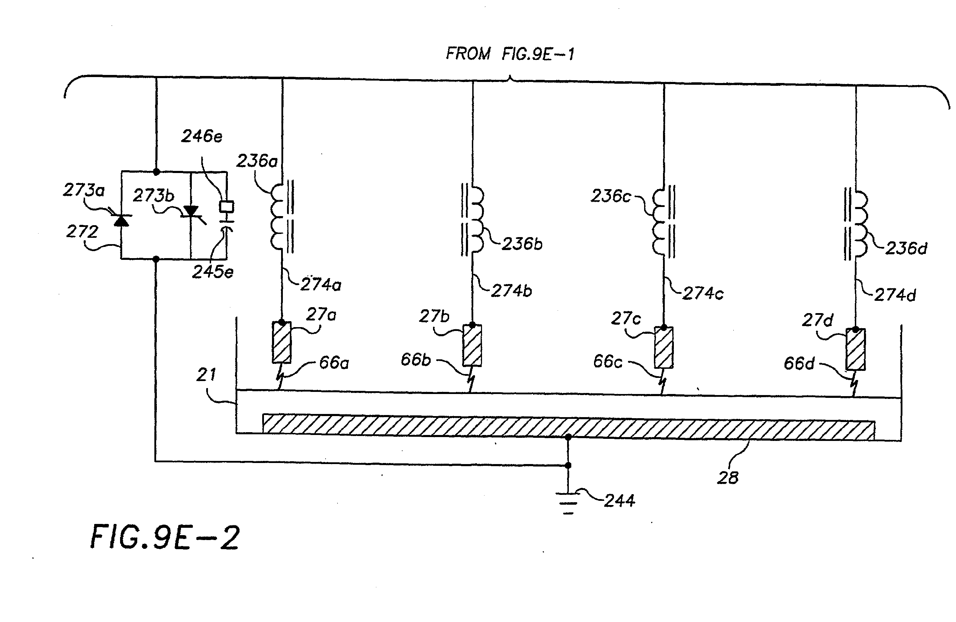

Another alternative embodiment of the invention for supplying AC power to arcing electrodes is illustrated in **FIG. 9E**. The circuit **280** shown in **FIG. 9E** is designed to provide AC arc power with independent arc voltage and arc current control to four arcing electrodes.

The power source includes a Scott-T transformer **250** for converting three phase power to two phase power via secondary windings **249a** and **249b**. Transformer **250** includes primary windings **248a, 248b** and **248c** respectively connected to phases **233a, 233b** and **233c**. Circuit breakers **232a, 232b** and **232c**, such as air circuit breakers, can also be provided.

Two SCR switches **237a** and **237b** are connected in parallel to the terminals of secondary windings **249a.** Switches **237a** and **237b** include respective thyristors **239a, 239b** and **239c, 239d.** Load limiting reactors **238a** and **238b** are respectively connected in parallel to thyristors **239a-239d**. The power from switches **237a** and **237b** are respectively used to provide AC power to arcing electrodes **27a** and **27b.** In addition, two SCR switches **237c** and **237d** are connected in parallel to the terminals of secondary windings **249b.** Switches **237c** and **237d** include respective thyristors **239e**, **239f** and **239g, 239h.** Load limiting reactors **238c** and **238d** are respectively connected in parallel to thyristors **239e- 239h.** The power from switches **237c** and **237d** are respectively used to provide AC power to arcing electrodes **27c** and **27d.**

The circuit shown in **FIG. 9E** is similar to two of the circuits shown in **FIG. 9B** and which may or may not have return current paths from the midpoints of secondary windings **249a** and **249b** to counter electrode neutral N **28**, via switches **271, 282** and SCR switch-neutral **272**. In particular, midpoint **281a** of secondary winding **249a** and midpoint **281b** of secondary winding **249b** can be connected to counter electrode neutral N **28** in furnace **21** using switches **271, 282** and SCR switch-neutral **272** (which includes thyristors **273a** and **273b**). Counter electrode **28** is also connected to ground **244.** When switch **282** is open and switch **271** is open, then currents in electrodes **27a** and **27b** are equal as are the currents in electrodes **27c** and **27d.** When switch **282** is closed (and switch **271** is open), the currents in electrodes **27a** and **27b** are independently controlled as are the currents in electrodes **27c** and **27d.** Under these circumstances, there can be some interaction between each of the four electrodes. If switches **282** and **271** are closed, and SCR switch **272** is turned "full on", then each of the four electrodes may be independently controlled relative to counter electrode **28** and between them. When the current flow is balanced between all four electrodes, then the counter electrode current is zero.

A six AC arcing electrode system may be produced for use in the invention by using two identical three electrode circuits as shown on **FIG. 9D.** This will permit individual control of each electrode by using two, three electrode AC arc systems and interposing the electrodes of the two three electrode systems.

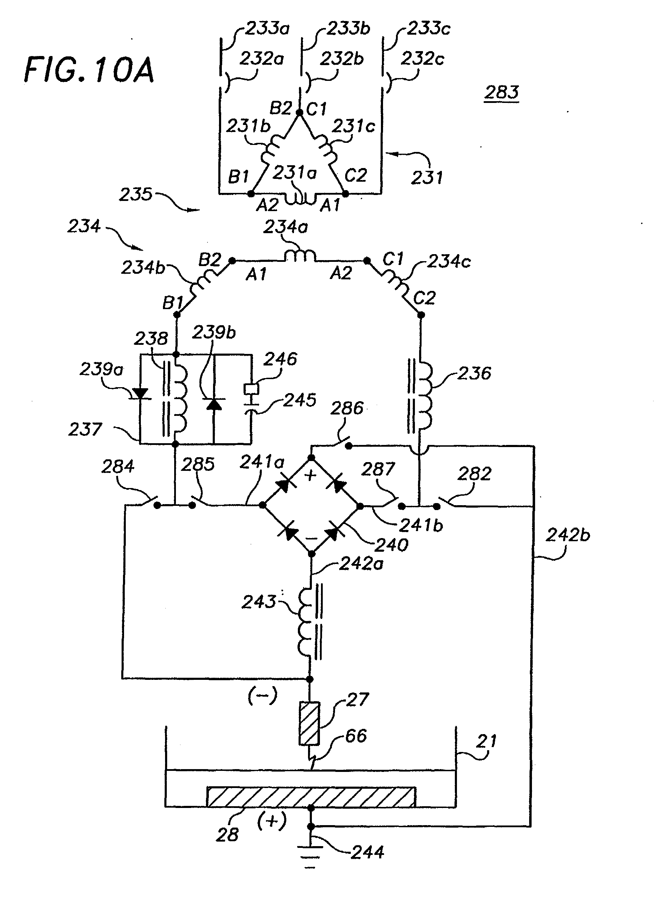

The systems of the present invention can also be constructed such that the arcing electrode power supplies can be varied or altered for use with AC power supply or DC power supply. **FIGS. 10A-10F** illustrate circuits which include the installation of switches such that by opening or closing the various switches and as discussed herein, one may convert each of the circuits so that the arc furnace may operate using either AC or DC power.

Referring now to **FIG. 10A**, circuit **283** provides AC or DC power to one arcing electrode. The circuit also provides independent arc voltage and current control. The circuit shown in **FIG. 10A** is similar to DC arc circuit **FIG. 8A**, but with the addition of five switches for switching between AC and DC power.

By placing the switches in either the open or closed position as provided in **Table 1**, the furnace arc circuit may be configured so that it may operate with either AC power or DC power or switched between such power as desired.

Table 1.

| Switch Number | Position of Switch for DC Arc Operation | Position of Switch for AC Arc Operation |
|---|---|---|
| 284 | Open | Closed |
| 285 | Closed | Open |
| 286 | Closed | Open |
| 287 | Closed | Open |
| 288 | Open | Closed |

For example, to operate the arc portion of the furnace with DC power, switches **284** and **288** must be open and switches **285, 286** and **287** must be closed. To operate the furnace with AC power, switches **285, 286** and **287** must be open and switches **284** and **288** must be closed. One can thus provide either AC or DC power to the arcing electrode by opening and/or closing the switches as indicated.

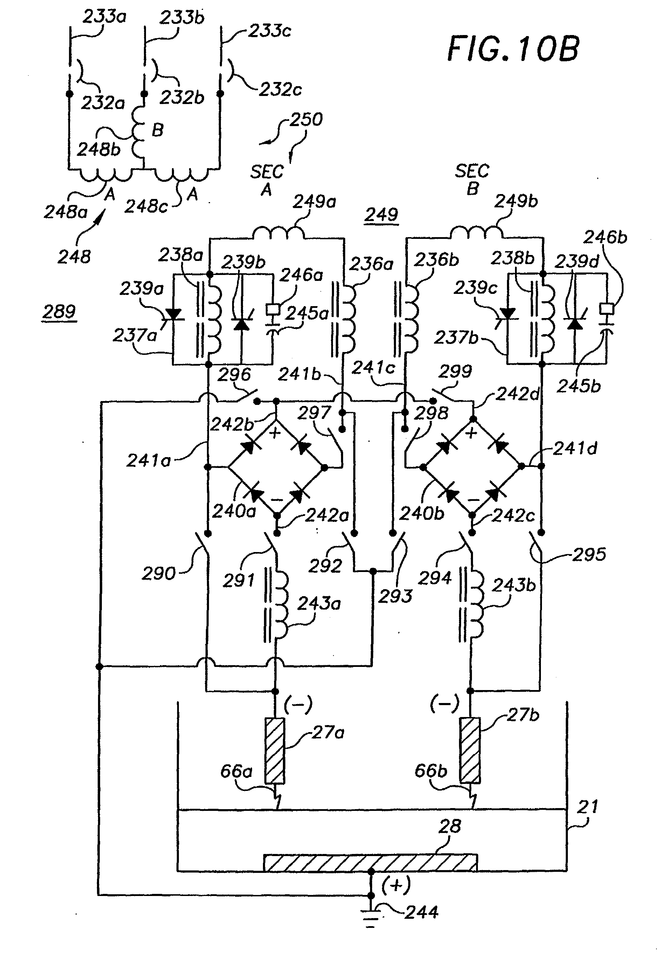

**FIG. 10B** is similar to DC arc circuit **FIG. 8B**, but with the addition of switches for providing AC or DC power to the two arcing electrodes. In this embodiment, ten switches are used to operate the furnace with either two AC or two DC arcs. Circuit **289** shown in **FIG. 10B** also provides independent arc voltage and current control for AC or DC arcs.

By placing the switches in either the open or closed position as provided in **Table 2**, the furnace arc circuit may be configured so that it may operate with either AC power or DC power or switched between such power as desired.

Table 2.

| Switch Number | Position of Switch for DC Arc Operation | Position of Switch for AC Arc Operation |
|---|---|---|
| 290 | Open | Closed |
| 291 | Closed | Open |
| 292 | Open | Closed |
| 293 | Open | Closed |
| 294 | Closed | Open |
| 295 | Open | Closed |
| 296 | Closed | Open |
| 297 | Closed | Open |
| 298 | Closed | Open |
| 299 | Closed | Open |

For example, to operate the arc portion of the furnace with DC power, switches **290, 292, 293** and **295** must be open and switches **291, 294, 296, 297, 298** and **299** must be closed. To operate the furnace with AC power, switches **291, 294, 296, 297, 298** and **299** must be open and switches **290, 292, 293** and **295** must be closed. One can thus provide either AC or DC power to the arcing electrodes by opening and/or closing the switches as indicated.

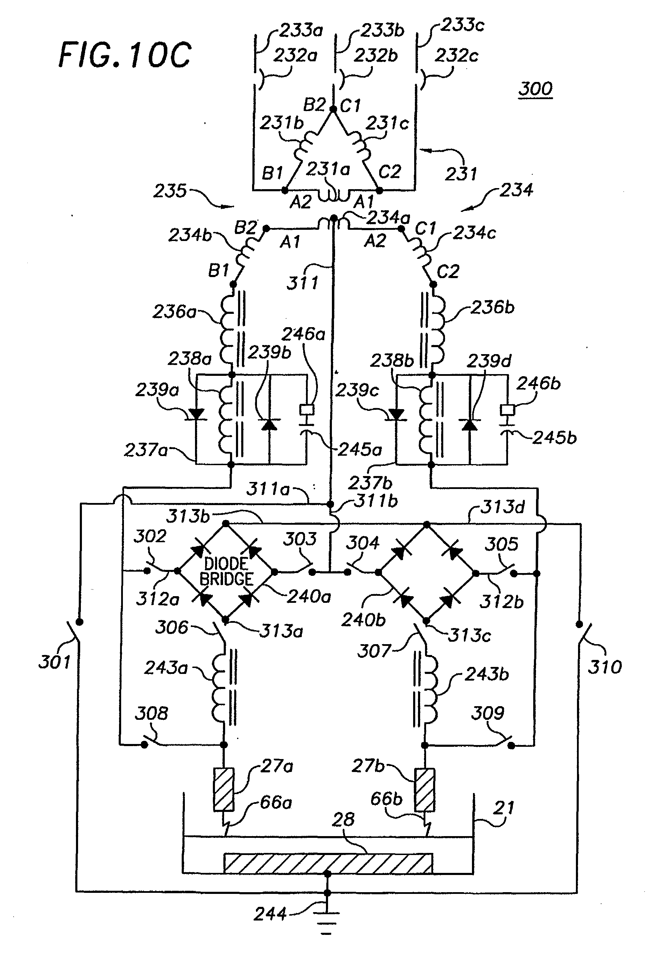

The circuit **300** illustrated in **FIG. 10C** is similar to the two arcing electrode AC arc circuit **266** shown in **FIG. 9B,** but **FIG. 10C** includes two diode bridge rectifiers **240a** and **240b** and two DC inductors **243a** and **243b**. Circuit **300** also includes ten switches such that the arc portion of the furnace may be operated with two DC or two AC arcs. Circuit **300** shown in **FIG. 10C** also provides independent arc voltage and current control.

As also shown in **FIG. 10C**, secondary winding **234a** is center tapped **311.** When switch **301** is closed (and switches **303** and **304** are open), the center tap **311a** is connected to counter electrode neutral **28**. In addition, when switches **303** and **304** are closed and switch **301** is open, center tap **311b** is connected to diode rectifiers **240a** and **240b** as input therefor.

As further shown in **FIG. 10C,** when switch **302** is closed and switch **308** is open, power from switch **237a** is the input **312a** to diode rectifier **240a** (during DC operation). When switch **305** is closed and switch **309** is open, power from switch **237b** is the input **312b** to diode rectifier **240b** (during DC operation).

For DC operation, output **313a** is connected to DC inductor **243a** and arc electrode **27a** when switch **306** is closed. Output **313c** is connected to DC inductor **243b** and arc electrode **27b** when switch **307** is closed. Output **313b** and output **313d** from respective diode rectifiers **240a** and **240b** are connected to counter electrode **28** (which is connected to ground **244**) when switch **310** is closed.

By placing the switches in either the open or closed position as provided in **Table 3**, the furnace arc circuit may be configured so that it may operate with either AC power or DC power or switched between such power as desired.

Table 3.

| Switch Number | Position of Switch for DC Arc Operation | Position of Switch for AC Arc Operation |
|---|---|---|
| 301 | Open | Closed |
| 302 | Closed | Open |
| 303 | Closed | Open |
| 304 | Closed | Open |
| 305 | Closed | Open |
| 306 | Closed | Open |
| 307 | Closed | Open |
| 308 | Open | Closed |
| 309 | Open | Closed |
| 310 | Closed | Open |

For example, to operate the arc portion of the furnace with DC power, switches **301, 308** and **309** must be open and switches **302, 303, 304, 305, 306, 307** and **310** must be closed. To operate the furnace with AC power, switches **302, 303, 304, 305, 306, 307** and **310** must be open and switches **301, 308** and **309** must be closed. One can thus provide either AC or DC power to the arcing electrodes by opening and/or closing the switches as indicated.

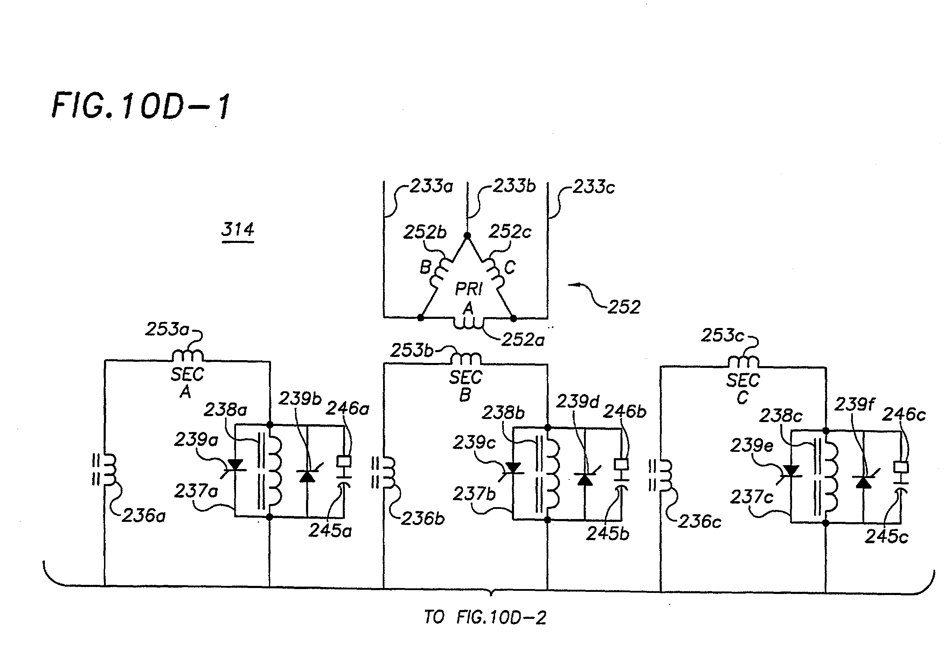

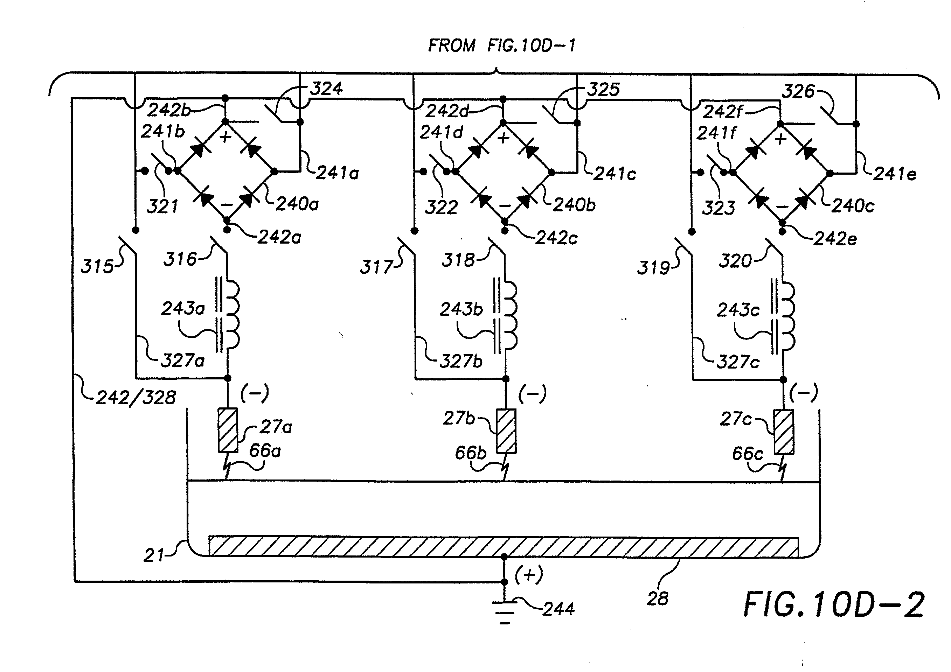

The circuit **314** illustrated in **FIG. 10D** is similar to the three electrode DC arc circuit shown in **FIG. 8C**, but **FIG. 10D** includes twelve switches such that the arc portion of the furnace may be operated with three DC or three AC arcs. Circuit **314** shown in **FIG. 10D** also provides independent arc voltage and current control.

As shown in **FIG. 10D,** when the furnace is operated with DC, switches **324, 325** and **326** are open such that the respective outputs from SCR switches **237a, 237b** and **237c** are the respective inputs **241a, 241c** and **241e** to diode rectifiers **240a, 240b** and **240c**. The diode rectifiers **240a, 240b** and **240c** outputs **242a, 242c** and **242e** are connected to DC inductors **243a, 243b** and **243c**, which are connected to arc electrodes **27a, 27b** and **27c**, respectively (switches **316, 318** and **320** are closed during such operation). In addition, diode rectifier **240a, 240b** and **240c** outputs **242b, 242d** and **242f** are connected to counter electrode **28** by bus **242**.

When the furnace is operated with AC, switches **324, 325** and **326** are closed and the respective outputs from SCR switches **237a, 237b** and **237c** are connected to counter electrode **28** by bus **328.**

When the furnace is operated with DC power, switches **321, 322** and **323** are closed and switches **315, 317** and **319** are open such that the outputs from current limiting reactors **236a, 236b** and **236c** are the respective inputs **241b, 241d** and **241f** to diode rectifiers **240a, 240b** and **240c.** When the furnace is operated with AC power, switches **321, 322** and **323** are open and switches **315, 317** and **319** are closed such that the outputs from current limiting reactors **236a, 236b** and **236c** are respectively connected to arc electrodes **27a, 27b** and **27c** via **327a, 327b** and **327c.**

By placing the switches in either the open or closed position as provided in **Table 4,** the furnace arc circuit may be configured so that it may operate with either AC power or DC power or switched between such power as desired.

Table 4.

| Switch Number | Position of Switch for DC Arc Operation | Position of Switch for AC Arc Operation |
| --- | --- | --- |
| 315 | Open | Closed |
| 316 | Closed | Open |
| 317 | Open | Closed |
| 318 | Closed | Open |
| 319 | Open | Closed |
| 320 | Closed | Open |
| 321 | Closed | Open |
| 322 | Closed | Open |
| 323 | Closed | Open |
| 324 | Open | Closed |
| 325 | Open | Closed |
| 326 | Open | Closed |

For example, to operate the arc portion of the furnace with DC power, switches **315, 317, 319, 324, 325** and **326** must be open and switches **316, 318, 320, 321, 322** and **323** must be closed. To operate the furnace with AC power, switches **316, 318, 320, 321, 322,** and **323** must be open and switches **315, 317, 319, 324, 325** and **326** must be closed. One can thus provide either AC or DC power to the arcing electrodes by opening and/or closing the switches as indicated.

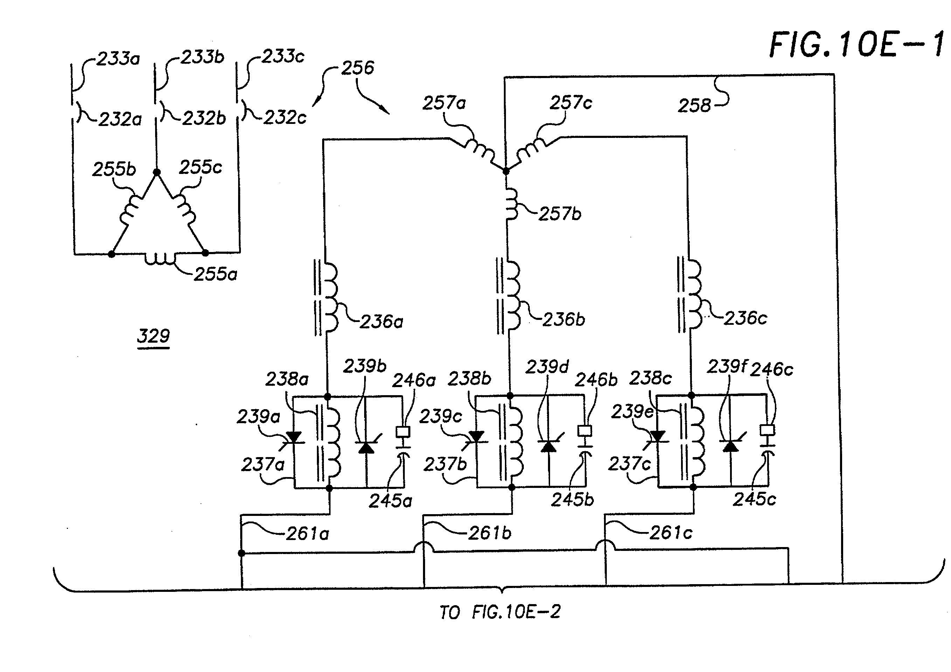

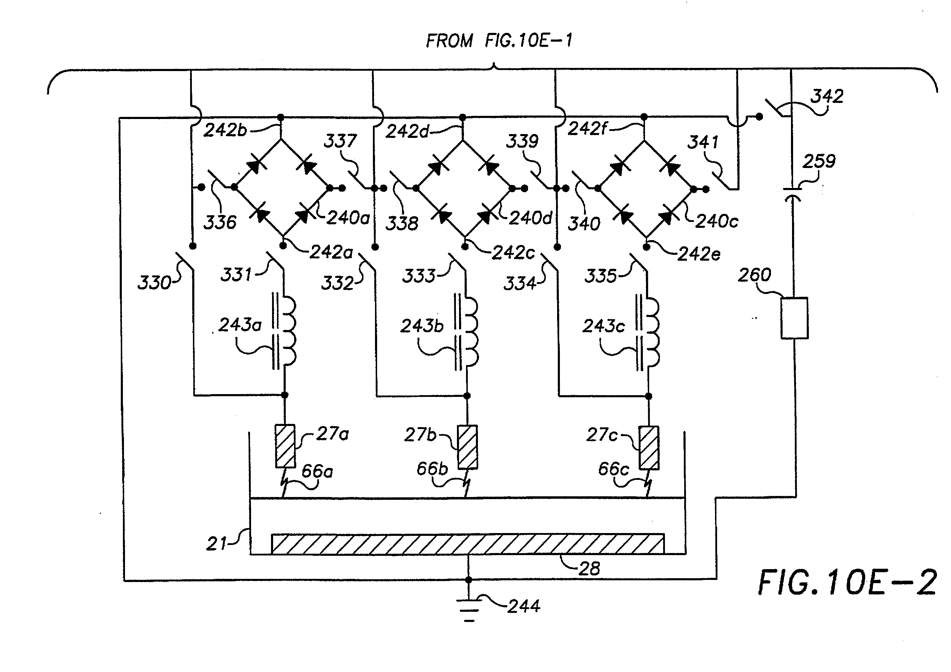

**FIG. 10E** shows another three electrode circuit **329** which may be switched from AC to DC or from DC to AC. This circuit is similar to the DC arc circuit shown in **FIG. 8D**, but the circuit shown in **FIG. 10E** includes thirteen switches to make the AC-DC Arc conversion. Circuit **329** shown in **FIG. 10E** also provides independent arc voltage and current control.

By placing the switches in either the open or closed position as provided in **Table 5**, the furnace arc circuit may be configured so that it may operate with either AC power or DC power or switched between such power as desired.

Table 5.

| Switch Number | Position of Switch for DC Arc Operation | Position of Switch for AC Arc Operation |
|---|---|---|
| 330 | Open | Closed |
| 331 | Closed | Open |
| 332 | Open | Closed |
| 333 | Closed | Open |
| 334 | Open | Closed |
| 335 | Closed | Open |
| 336 | Closed | Open |
| 337 | Closed | Open |
| 338 | Closed | Open |
| 339 | Closed | Open |
| 340 | Closed | Open |
| 341 | Closed | Open |
| 342 | Open | Closed |

For example, to operate the arc portion of the furnace with DC power, switches **330, 332, 334** and **342** must be open and switches **331, 333, 335, 336, 337, 338, 339, 340** and **341** must be closed. To operate the furnace with AC power, switches **331, 333, 335, 336, 337, 338, 339, 340** and **341** must be open and switches **330, 332, 334** and **342** must be closed. One can thus provide either AC or DC power to the arcing electrodes by opening and/or closing the switches as indicated.

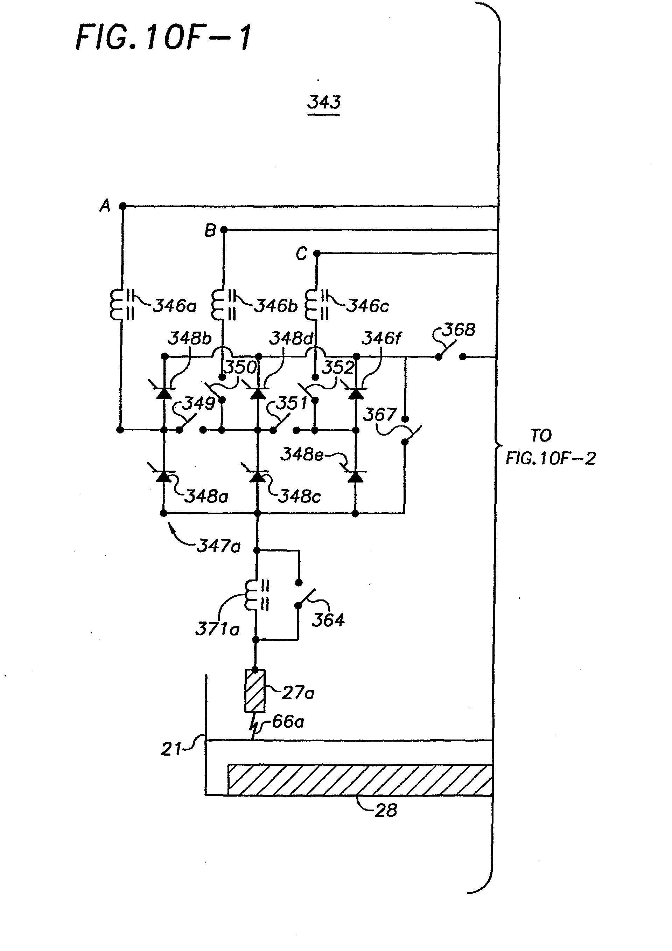

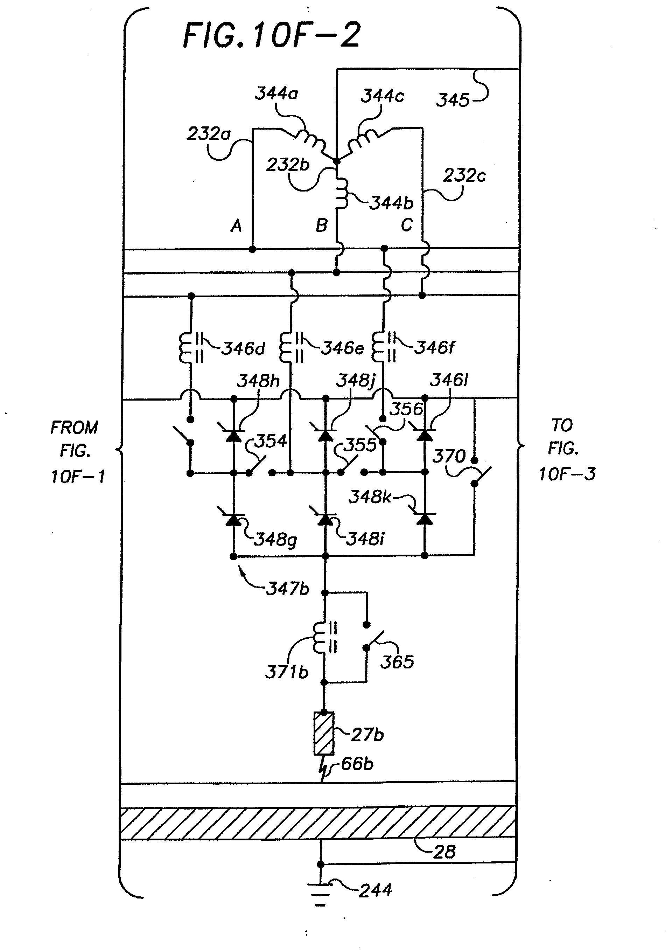

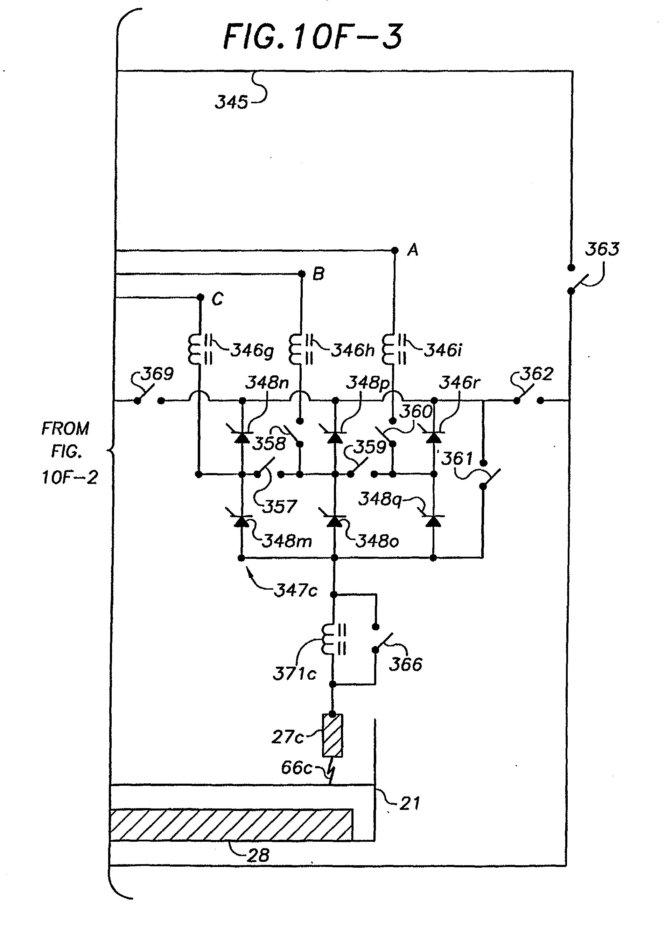

**FIG. 10F** illustrates another alternative embodiment for providing power to three arcing electrodes. When the circuit shown in **FIG. 10F** is operated with DC power, a three phase rectifier for each electrode is utilized and when the circuit is operated with AC power, the rectifier is converted to a single phase static switch. Circuit **343** shown in **FIG. 10F** may be more expensive to construct than the previously described circuits.

Circuit **343** includes a three phase SCR rectifier for each electrode. When it is desirable to use AC power, each three phase rectifier is converted to a single phase static switch.

Circuit **343** includes secondary windings **344a, 344b, 344c** (connected respectively to phases **232a, 232b** and **232c**) connected in wye and neutral 345 connected from the midpoint of the secondary windings to counter electrode **28** (which is connected to ground **244**) in furnace **21**.

During DC operation, the outputs of the secondary windings are connected to the current limiting reactors (CLR) **346a-346i** as shown in **FIG. 10F**. Current limiting reactors **346a-346c** are connected to thyristor phase controlled rectifier **347a**, which includes thyristors **348a-348f.** Current limiting reactors **346d-346f** are connected to thyristor phase controlled rectifier **347b**, which includes thyristors **348g-348l.** Current limiting reactors **346g-346i** are connected to thyristor phase controlled rectifier **347c**, which includes thyristors **348m-348r.** When the furnace is operated with AC power, components **347a-347c** are phase controlled AC static switches.

As also shown in **FIG. 10F**, one side of each of the outputs of components **347a-347c** is connected to the counter electrode **28** via **345** during DC operation (when switches **368, 369** and **362** are closed and switch **363** is open). The other side of each of the outputs of components **347a-347c** is connected to DC inductors **371a, 371b** and **371c**, as shown. DC inductors **371a, 371b** and **371c** are connected to arc electrodes **27a, 27b** and **27c**. During AC operation switches **364, 365** and **366** are closed such that DC inductors **371a-371c** are short circuited.

By placing the switches in either the open or closed position as provided in **Table 6**, the furnace arc circuit may be configured so that it may operate with either AC power or DC power or switched between such power as desired.

Table 6.

| Switch Number | Position of Switch for DC Arc Operation | Position of Switch for AC Arc Operation |
|---|---|---|
| 349 | Open | Closed |
| 350 | Closed | Open |

Table 6. (continued)

| Switch Number | Position of Switch for DC Arc Operation | Position of Switch for AC Arc Operation |
|---|---|---|
| 351 | Open | Closed |
| 352 | Closed | Open |
| 353 | Closed | Open |
| 354 | Open | Closed |
| 355 | Open | Closed |
| 356 | Closed | Open |
| 357 | Open | Closed |
| 358 | Closed | Open |
| 359 | Open | Closed |
| 360 | Closed | Open |
| 361 | Open | Closed |
| 362 | Closed | Open |
| 363 | Open | Closed |
| 364 | Open | Closed |
| 365 | Open | Closed |
| 366 | Open | Closed |
| 367 | Open | Closed |
| 368 | Closed | Open |
| 369 | Closed | Open |
| 370 | Open | Closed |

For example, to operate the arc portion of the furnace with DC power, switches **349, 351, 354, 355, 357, 359, 361, 363, 364, 365, 366, 367** and **370** must be open and switches **350, 352, 353, 356, 358, 360, 362, 368** and **369** must be closed. To operate the furnace with AC power, switches **350, 352, 353, 356, 358, 360, 362, 368** and **369** must be open and switches **349, 351, 354, 355, 357, 359, 361, 363, 364, 365, 366, 367** and **370** must be closed. One can thus provide either AC or DC power to the arcing electrodes by opening and/or closing the switches as indicated.

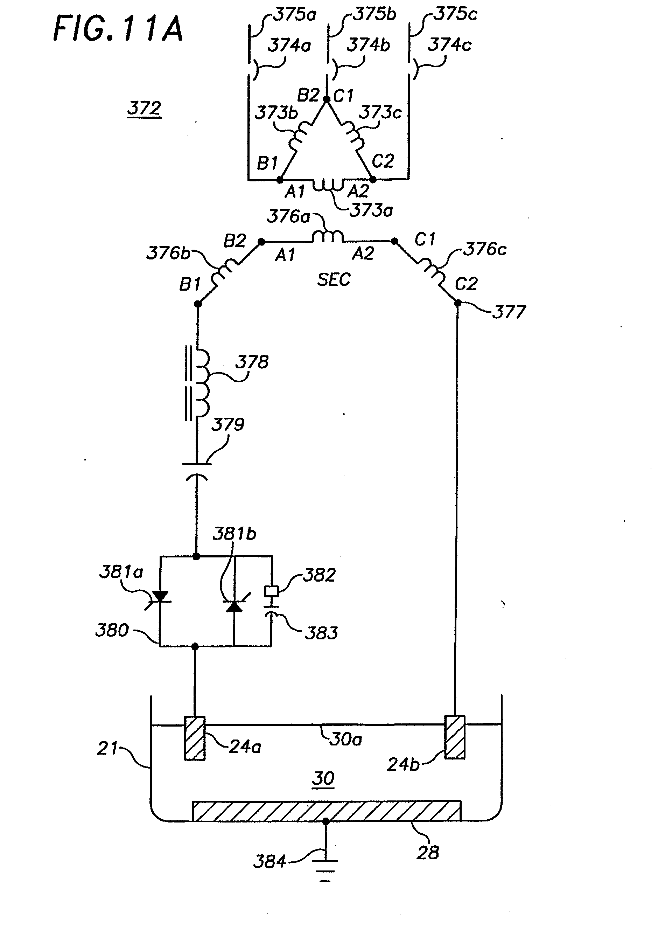

Several alternative embodiments for the operation of the joule heating electrodes are illustrated in **FIGS. 11A-11I**. The joule heating electrodes are powered by AC power rather than DC power. The joule heating electrodes are not powered by DC since DC causes undesirable polarization. Load limiting reactors are not necessary in **FIGS. 11A-11H** because there is no arc which will be extinguished at the joule heating electrodes regardless of wave form.

Referring now to **FIG. 11A**, an AC circuit **372** is shown that provides joule heat to two electrodes. As shown in **FIG. 11A**, electrodes **24a** and **24b** are partially submerged below slag level **30a** in furnace **21**. Counter electrode **28** is connected to ground **384** and can be used with the arcing electrode circuits described above.

Circuit **372** includes primary windings **373a, 373b** and **373c** connected respectively to phases **375a, 375b and 375c.** Circuit breakers **374a, 374b** and **374c**, such as air circuit breakers, can also be provided as shown. As shown in **FIG. 11A**, primary windings **373** are connected in delta.

Circuit **372** also includes a "U" type secondary circuit **376** having secondary windings **376a, 376b** and **376c**. This arrangement may be desirable for operation with a small furnace since it only uses two joule heating electrodes. One terminal **377** is connected directly to electrode **24b**. Because, terminal (C$_2$) **377** is connected directly to electrode **24b**, this electrode can adequately ground the "U" secondary winding **376.**

As also shown in **FIG. 11A**, one terminal of secondary winding 376b is connected to current limiting reactor **378**. Current limiting reactor (CLR) is connected in series to capacitor **379** and SCR switch **380** (which includes thyristors **381a** and **381b**). Switch **380** is connected to electrode **24a** and electrode **24b** is connected to terminal (C$_2$) **377,** as shown. As discussed above, a snubber circuit (including resistor **382** connected in series with capacitor **383**) connected in parallel with thyristors **381a** and **381b** can also be included.

One difference between the circuit shown in **FIG. 11A** and that shown in **FIG. 9A** is that the DC blocking capacitor (C) **379** is connected in series with electrode **24a**. Capacitor **379** blocks DC (from the arcing electrode circuits when such circuits are operated with AC or DC) from interfering with the joule heating circuits. It is noted that it takes very little DC current to cause saturation of the core of the transformer which feeds the joule heating circuit and therefore, a small amount of DC current entering the joule heating power system can cause significant damage. With AC interacting with AC (*i.e.* AC arc electrodes and AC joule heating electrodes), much more interacting AC current from the arcing electrodes (as compared with the DC-AC arrangement) is required before the interaction is even noticeable and much more AC current is required to appreciably heat (to the point of damaging) a transformer. It will be appreciated that the relative magnitude of current which will heat or damage a transformer is dependent on a number of transformer design parameters.

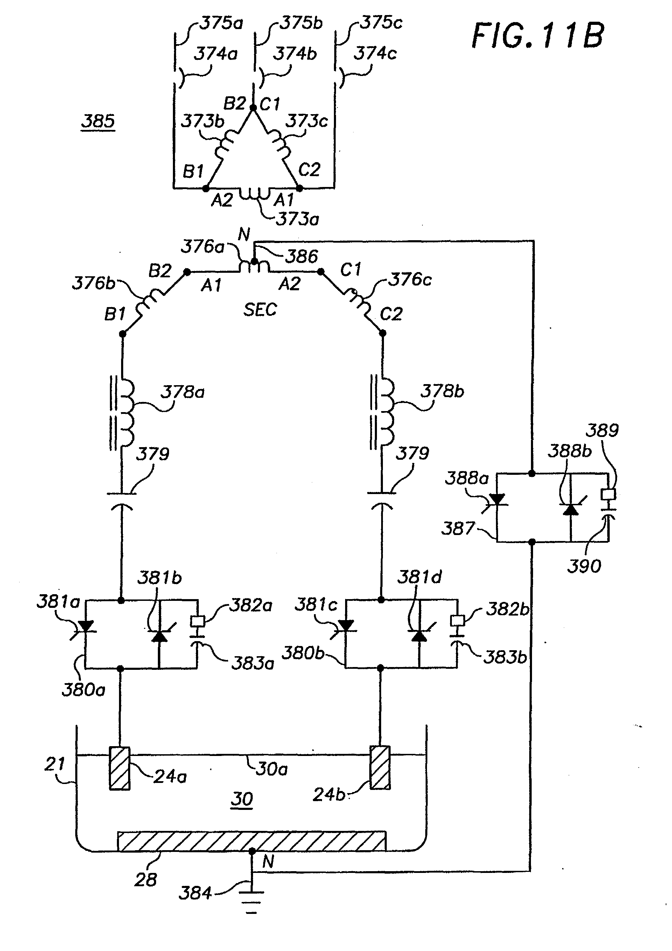

**FIG. 11B** illustrates another circuit for providing joule heat to two joule heating electrodes. The circuit **385** shown in **FIG. 11B** is designed such that both electrodes **24a** and **24b** have SCR static switches **380a** and **380b** to independently control the current in electrode **24a** and electrode **24b**. In addition SCR switch-neutral **387** (which includes thyristors **388a** and **388b**) can be used to control the amount of AC current which may flow between electrode **24a** and counter electrode N **28** as well as between counter electrode N **28** and electrode **24b.** In addition, because the secondary transformer winding **376a** is center tapped with neutral **386**, then it is necessary to have capacitors **379a** and **379b** in series with electrode **24a** and electrode **24b**, respectively, to prevent interaction of AC or DC arc current from interfering with the joule heating circuit. Snubber circuits may also be included in parallel with the SCR switches.

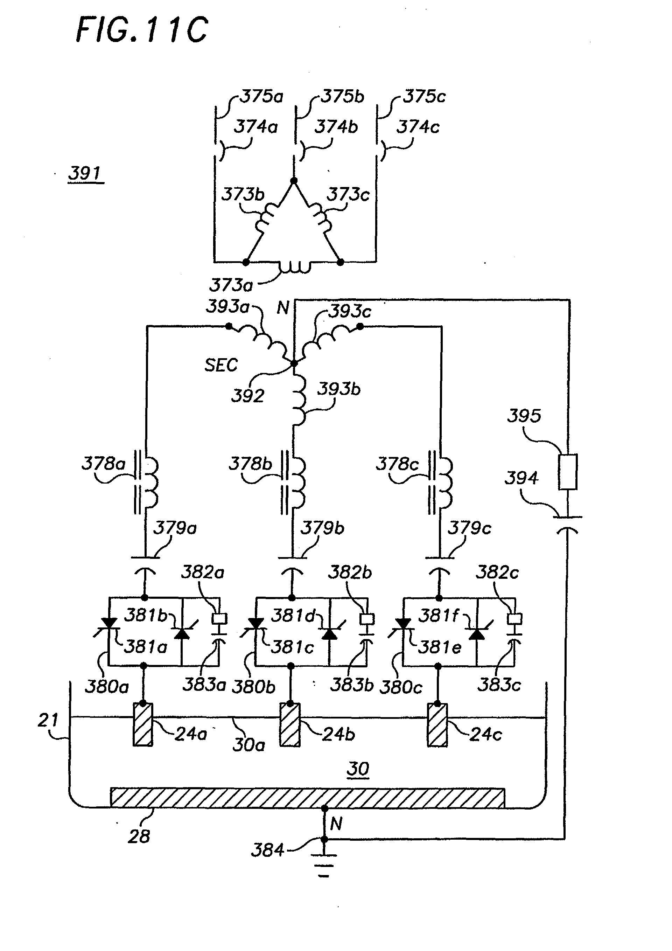

**FIG. 11C** is similar to the AC arc circuit shown in **FIG. 9D** with the addition of three capacitors, one in series with each joule heated electrode circuit. In addition, a capacitor **394** ($C_N$) and resistor **395** are connected (in place of switch **272** in **FIG. 9D**) between the neutral point N **392** on the wye secondary transformer windings **393a-393c** and counter electrode **28** to minimize electrical noise.

As shown in **FIG. 11C**, circuit **391** includes primary windings **373a, 373b** and **373c** and secondary windings **393a, 393b** and **393c.** Secondary windings **393a, 393b** and **393c** are connected in wye with the neutral point **392** connected to capacitor **394**, resistor **395** and counter electrode neutral **28**. This is done to ground the neutral, but since the counter electrode is also connected to the neutral, both the neutral and counter electrode are grounded.

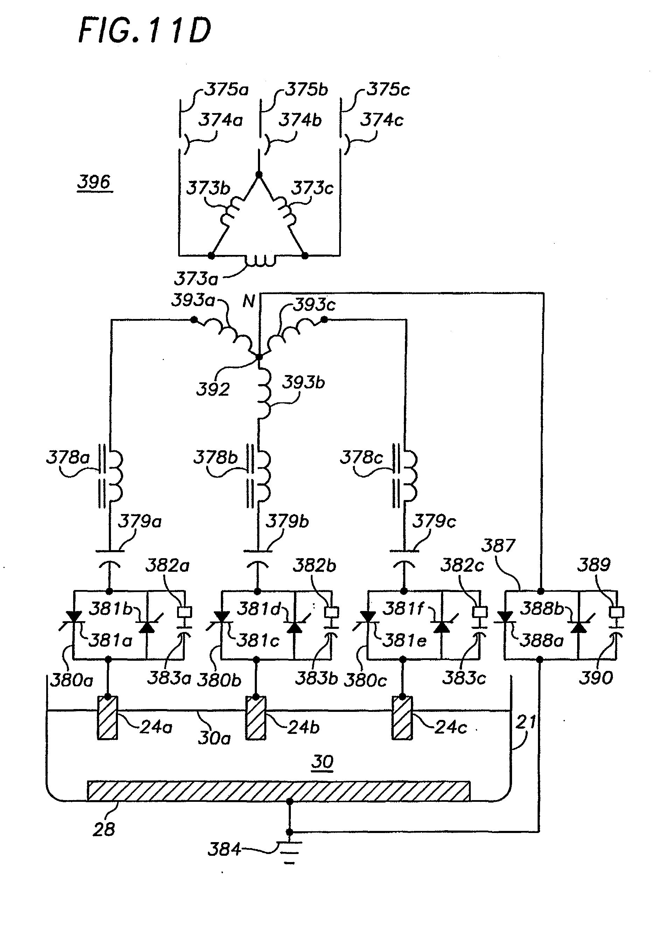

Circuit **396** illustrated in **FIG. 11D** is similar to circuit **391** shown in **FIG. 11C**, except that the surge grounding capacitor **394** in **FIG. 11C** is replaced by SCR switch-neutral **387** (which includes thyristors **388a** and **388b**). SCR switch-neutral **387** permits control of AC current by phase control of the SCR's from the three electrodes **24a, 24b** and **24c** to the counter electrode N **28**. The SCR switch controls the amount of current which can flow to the neutral if the three electrode currents are not balanced.

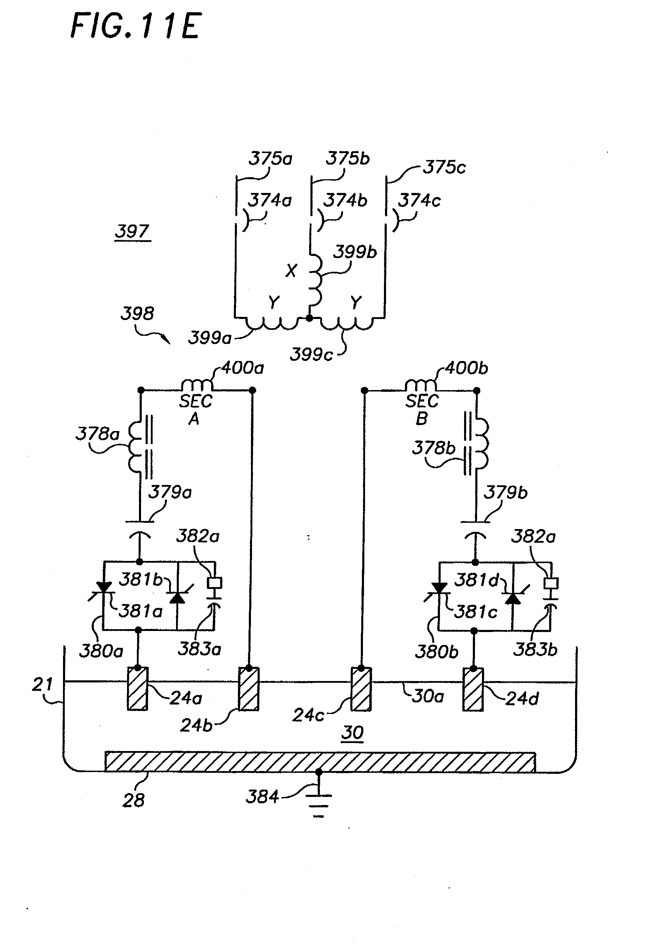

Referring now to **FIG. 11E**, another circuit **397** is shown for providing joule heat to a four electrode arrangement. In this embodiment, Scott-T transformer **398 i**ncludes primary windings **399a, 399b** and **399c** (connected to respective phases **375a, 375b** and **375c**) and two isolated transformer secondary windings **400a** and **400b**, thereby making each circuit connected to secondary winding **400a** and secondary winding **400b** similar to that shown in **FIG. 11A**. This allows joule heat to be provided to four joule heating electrodes **24a, 24b, 24c** and **24d**. Circuit breakers **374a, 374b** and **374c**, such as air circuit breakers, may also be provided.

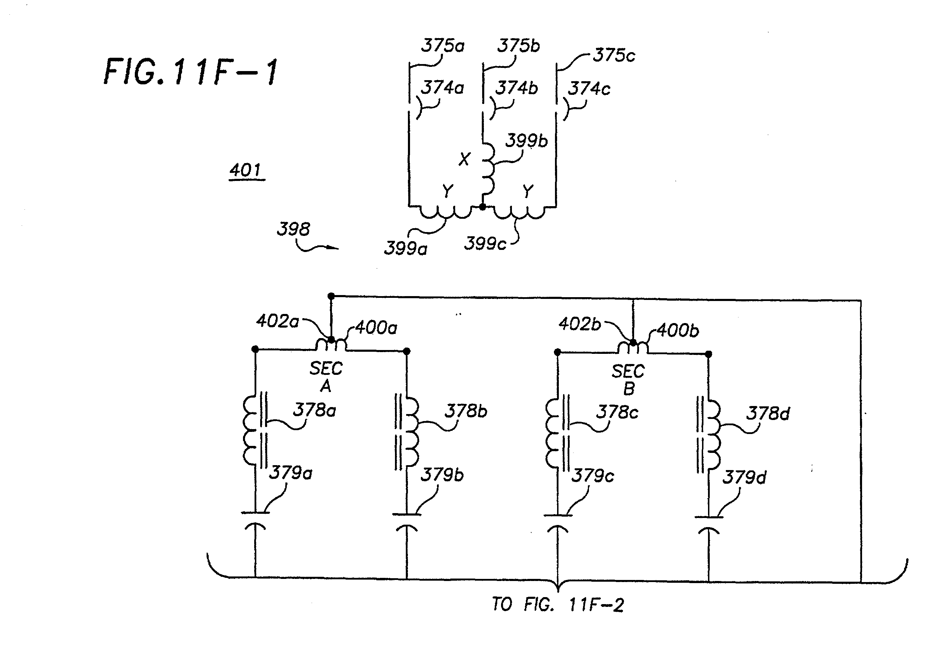

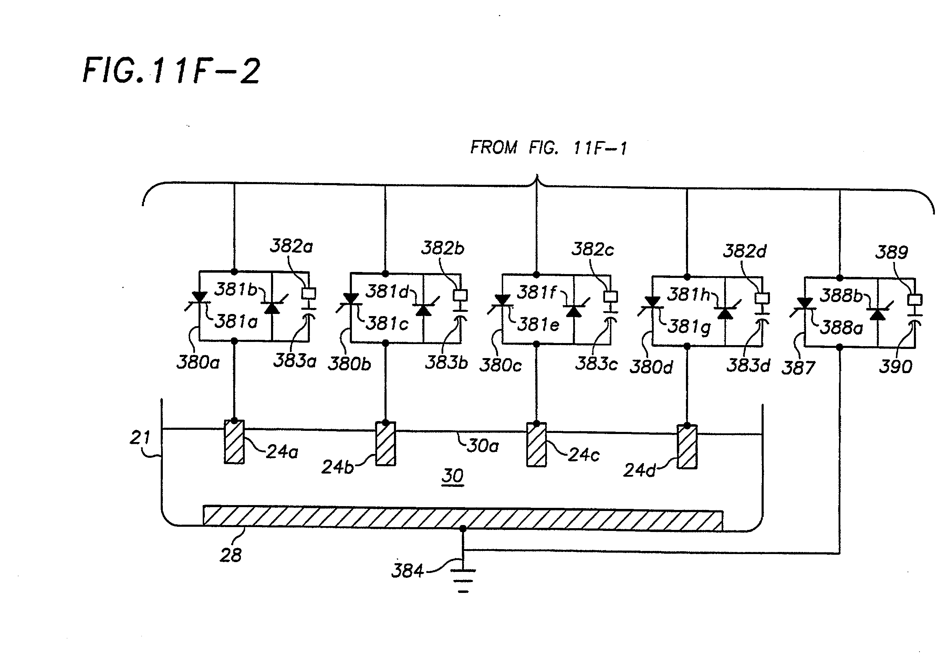

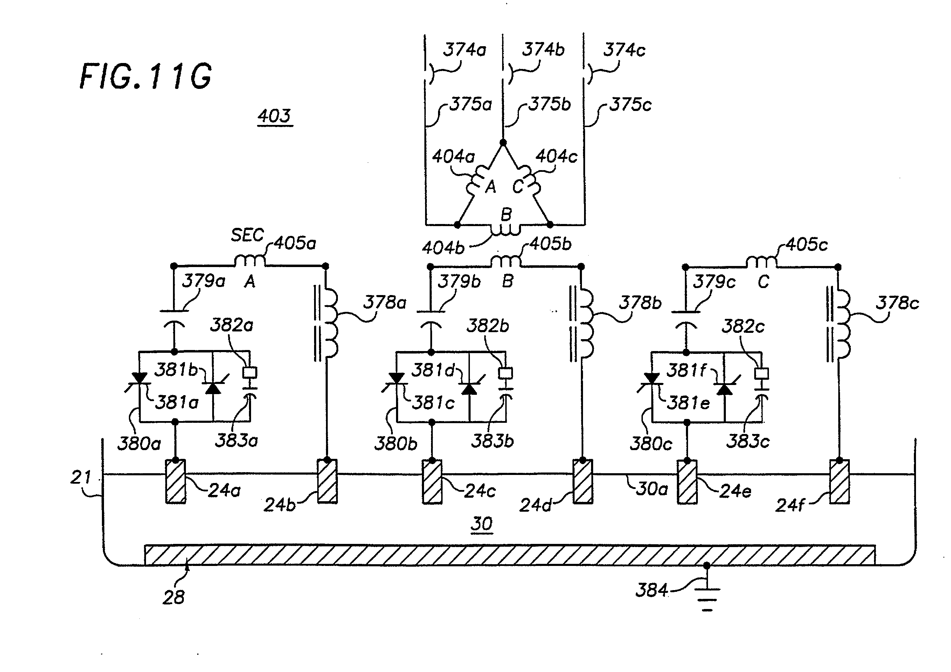

**FIG. 11F** illustrates another four electrode Scott-T transformer circuit for providing joule heat in accordance with the present invention. Circuit **401** shown in **FIG. 11F** shows secondary winding **400a** and secondary winding **400b** center tapped, **402a** and **402b**, respectively. The center taps **402a** and **402b** are electrically connected to the counter electrode N **28** by way of SCR switch-neutral **387** (which includes thyristors **388a** and **388b**, and which may also include a snubber circuit connected in parallel, as shown). With each of the four joule heating electrodes **24a, 24b, 24c** and **24d** isolated by their capacitors **379a-379d** from DC, this circuit also provides excellent control of the counter electrode current due to the phase control provided by the five SCR switches, **380a, 380b, 380c, 380d** and **387** if the four currents from switches **380a-380d** are not equal. Current can only flow between the secondary neutral and the counter electrode if the current through any or all of the electrodes are not equal. The static switch in the neutral can be used to control the magnitude of the unbalanced AC current which may flow through this static switch. Another embodiment for providing joule heat to six joule heating electrodes is shown in **FIG. 11G.** Circuit **403** is a six electrode AC joule heating circuit similar to the four electrode circuit in **FIG. 11E,** but with a different transformer arrangement.

The transformer includes primary windings **404a, 404b** and **404c** (for phases **375a, 375b** and **375c**). Circuit breakers **374a-374c**, such as air circuit breakers, may also be included. Secondary windings **405a, 405b** and **405c** are respectively connected to current limiting reactors **378a, 378b** and **378c**, which are respectively connected to joule heating electrodes **24b, 24d** and **24f.** Secondary windings **405a, 405b** and **405c** are also respectively connected to capacitors **379a, 379b** and **379c**, which are connected in series to SCR switches **380a, 380b** and **380c**, respectively.

Switches **380a, 380b** and **380c** are respectively connected to joule heating electrodes **24a, 24c** and **24e.** The secondary windings in the embodiment shown in **FIG. 11G** are not center tapped as in **FIG. 11E**. Only one CLR is needed per circuit and because there is no winding center tap or neutral in the circuit shown in **FIG. 11G**, only one AC static switch per phase is used or required per secondary transformer winding.

As shown in **FIG. 11G**, current limiting reactors **378a-378c** are connected to electrodes **24b, 24d** and **24f**.

Alternatively, the current limiting reactors can be connected in series with SCR switches **380a, 380b** and **380c** (which are connected to electrodes **24a, 24b** and **24e**). Capacitors **379a-379c** can be connected to either electrode, irrespective of the position of the SCR switches and/or current limiting reactors. These alternatives apply to the other joule heating electrode circuits described hereinabove.

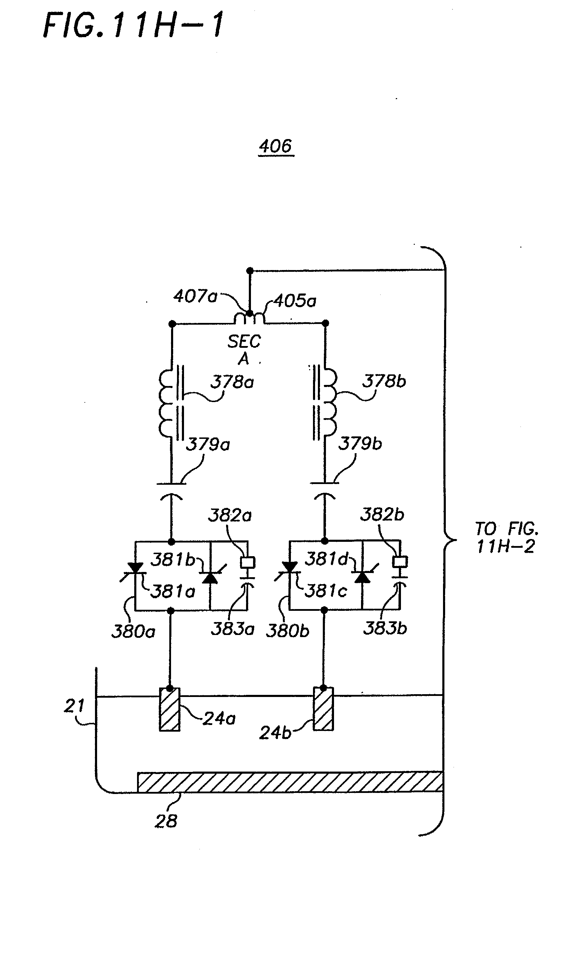

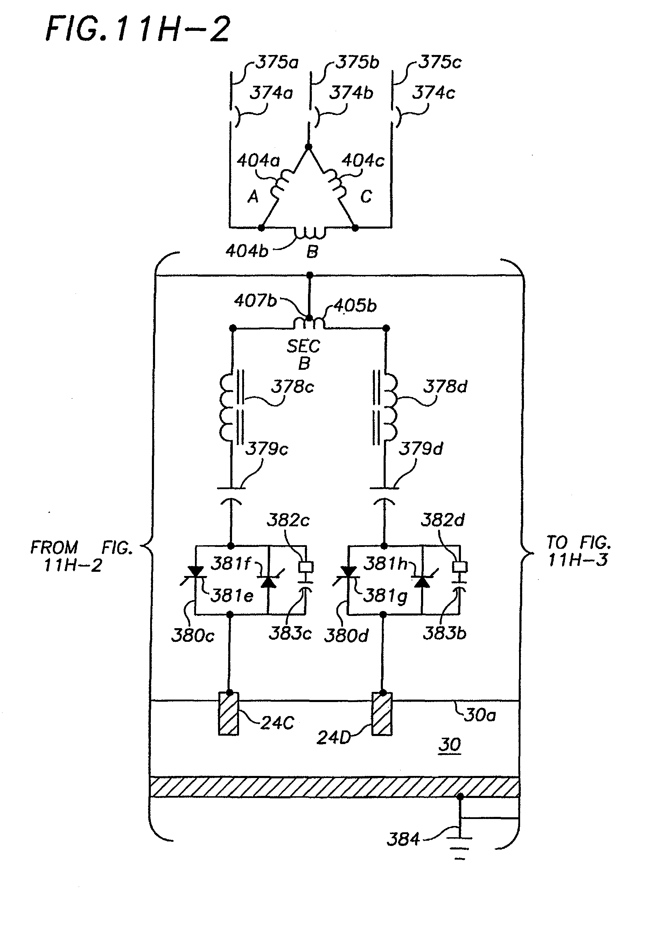

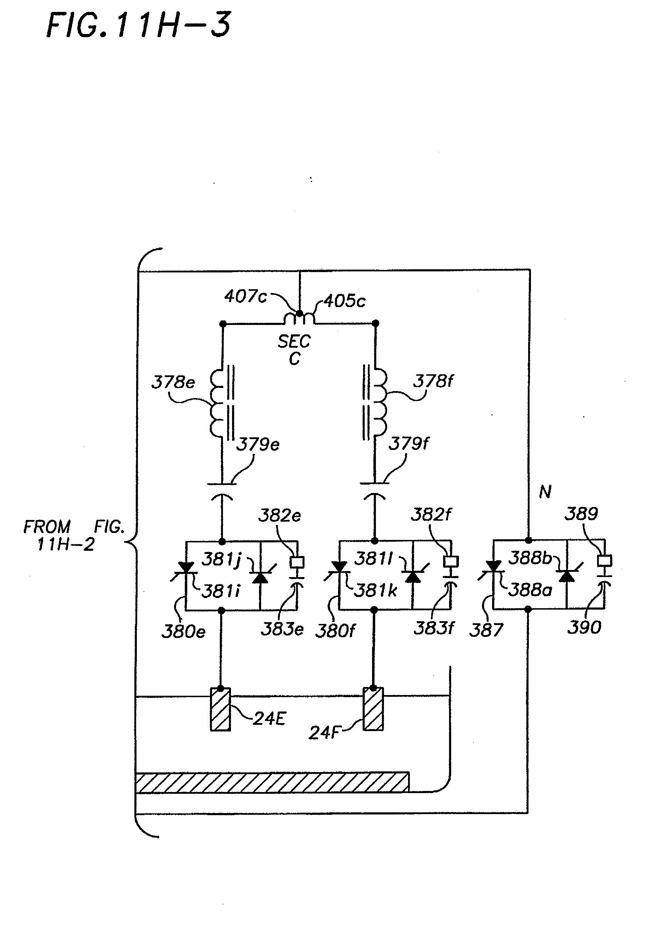

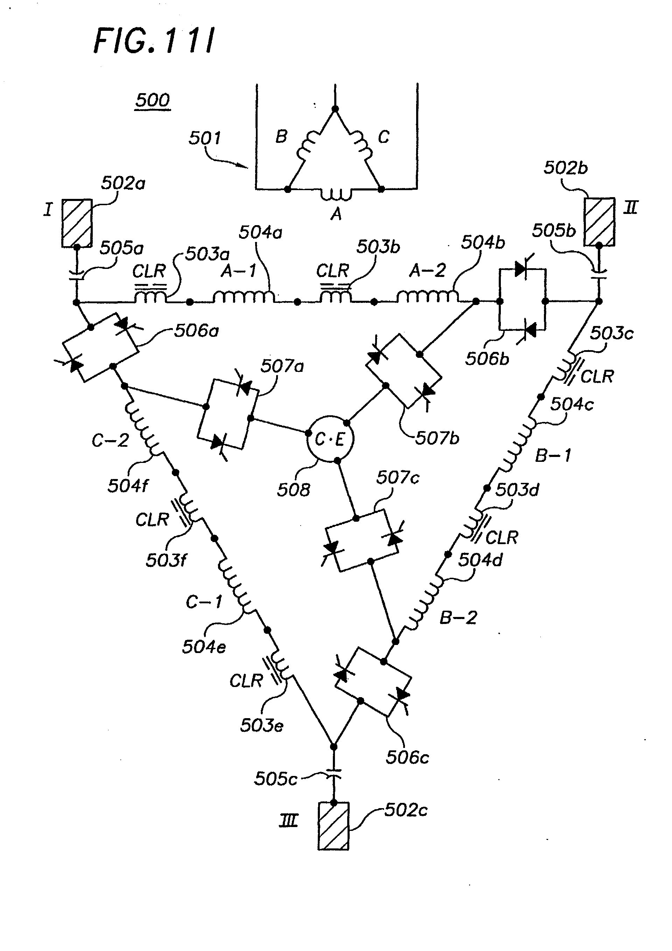

It should be noted that where circuits have a neutral or center tap (or if two or three secondary windings are connected to one another or where two electrodes are fed from the same winding), it is preferred to provide a means of controlling current to each electrode. This is accomplished in **FIGS. 11F** and **11H** by the current limiting reactors, SCR switches (or saturable reactors if used in place of the SCR switches since saturable reactors perform the same function as static switches) and capacitors.

**FIG. 11H** illustrates another embodiment for providing joule heat to six electrodes. The six electrode circuit **406** shown in **FIG. 11H** is similar to the four electrode circuit shown in **FIG. 11F**, but the circuit in **FIG. 11H** does not include a Scott-T transformer. In **FIG. 11H**, all six electrodes can have their current controlled independently. In **FIG. 11H**, electrodes **24a** and **24b** have the same current, electrodes **24c** and **24d** have the same current and electrodes **24e** and **24f** have the same current (although the currents in electrodes **24a** and **24b** can be different from the current in electrodes **24c** and **24d** and from the current in electrodes **24e** and **24f**).

Secondary windings **405a, 405b** and **405c** are respectively center tapped **407a, 407b** and **407c** and connected counter electrode neutral **28** by SCR switch-neutral **387** (which includes thyristors **388a** and **388b**).

FIG. 11I illustrates another embodiment for providing joule heat in accordance with the present invention. As shown in **FIG. 11I**, joule heating circuit **500** includes primary windings **501** and secondary windings **504a-504c.** Circuit **500** also includes current limiting reactors **503a-503f**, capacitors **505a-505c,** static switches **506a-506c**, static switches **507a-507c** and counter electrode **508.** Each of the phases in the secondary windings can be connected in series (as shown) or in parallel. For example, the B phase secondary windings may each be 120 volts and connected in series as illustrated for a total of 240 volts or in parallel for 120 volts. (Reactor **503c** is always connected in series with B-1 (**504c**) and reactor **503d** is always connected ins series with B-2 (**504d**). Phases A and C can be similarly connected.

Circuit **500** is expected to provide an independently controlled delta circuit current *(i.e.* the current through the three joule heating electrodes **502a-502c** when static switches **506a-506c** are conducting current) to each of the electrodes without providing an external electrical circuit connection to the counter electrode. This means that the controlled delta current will flow between each of the joule heating electrodes if no other path or paths are available to divert a portion of the electrode current to a conductive path having a lower resistance than other portions of the molten slag in which the joule heating electrodes are immersed.

This delta current is controlled by static switches **506a, 506b** and **506c**. If the delta static switches are in the open circuit or non conducting state, and if static switches **507a, 507b** and **507c** are placed in a conducting state, these solid state switches (switches **507a, 507b** and **507c**) will then permit the same secondary windings to assume a wye configuration. Further, if both the delta static switches and the wye static switches are both delivering current to the bath in the same overall time frame, not only will the overall volume of the slag heating be more effectively controlled, but the J x B electromagnetic fields will also provide stirring action that can be controlled by either manual or automatic control circuitry. Consequently, enhanced beneficial bath mixing may be achieved.

The embodiments described hereinabove allow for simultaneous operation of the arcing electrodes and the joule heating electrodes without detrimental interaction with each other. The capacitors in the joule heating circuits will block the flow of direct current from the arcing electrode circuits when DC operation is in use. In addition, when the furnace is operated with AC arcing electrodes and AC joule heating electrodes, there will not be detrimental interaction. As described above, it takes very little DC current to cause saturation of the core of the transformer which feeds the joule heating circuit and therefore, a small amount of DC entering the joule heating power system can cause significant damage. With AC interacting with AC (i.e. AC arc electrodes and AC joule heating electrodes), much more interacting AC current from the arcing electrodes (as compared with the DC-AC arrangement) is required before the interaction is even noticeable and much more AC current is required to appreciably heat a transformer.

If the arc technology was used alone, the electrode hearth diameter ratio would have to be large to ensure that the contents in the hearth are melted sufficiently not only at the center of the hearth, but also at the walls of the hearth. The size of the hearth therefore would be limited due to practical limitations on electrode diameter. When the hearth or glass tank is joule heated, however, this limitation no longer exists and the tank can be sized to ensure the residence time is adequate for complete mixing and dissolution of all glass components.

If the melter technology were employed without the arc, the feed rates would be much lower due to limitations in heat transfer from the melt pool to the unmelted feed above the molten glass. To accommodate large throughput requirements, the standard approach is to increase the melt surface area. Accordingly, the joule heated melter would need to be much larger for a given processing rate than the combined arc-melter system of the present invention. The present invention utilizes the benefits of both the arc and AC joule heated melter technologies, and does so in a single optimized system.

Joule heating alone may be used to maintain the molten bath during long idling periods, thereby reducing electrical power requirements. Moreover, because the molten bath is electrically conducting the arc plasmas may be readily restarted in the transfer arc mode.

The combination of the arc plasma furnace and joule heated melters in accordance with the present invention provide a method of quickly heating feed waste material resulting in higher processing rates for a given sized furnace system. The controlled heating rate also can result in the production of a higher quality of pyrolysis gas. More energy is recovered and there are less pollutants in the gas emissions. Additionally, the joule heated melters of the present invention provide a larger reservoir with demonstrated mixing to produce a homogeneous glass product with very high stability. This is beneficial since vitrified glass product is stable over geologic time frames. *See e.g.,* Buelt et al., In *Situ Vitrification of Transuranic Wastes: Systems Evaluation and Applications Assessment,* PNL-4800 Supplement 1, Pacific Northwest Laboratory, Richland, WA. (1987). Additionally, the present invention provides further volume reduction through the vitrification of the ash as compared with that ash that would be generated from incineration alone. *See,* Chapman, C., *Evaluation of Vitrifying Municipal Incinerator Ash, Ceramic Nuclear Waste Management IV,* Ceramic Transactions, G.G. Wicks, Ed., Vol. 23, pp.223-231, American Ceramic Society (1991).

The products produced in accordance with the present invention can be vitreous, glass-like materials. Alternatively, the structure of the materials can be devitrified and crystalline in nature. In addition, the products can be ceramic materials having properties ranging from pure crystalline materials to amorphous vitreous products, or any combination thereof. The crystallinity or non-crystallinity of the products can be altered by the composition of the feed material (including, but not limited to, the addition of additives during processing in the unit) and/or by alteration of the slag after the slag has been poured or removed from the waste conversion unit. Because crystallinity can have beneficial or detrimental affects on the stability and/or non-leachability of the final products formed, treatment of the slag after removal from the waste conversion unit can be modified according to the desired characteristics of the final product.

As discussed above, the present invention provides methods and apparatus that facilitate rapid pyrolysis. Rapid pyrolysis results in a pyrolysis gas having higher purity than other means of pyrolysis. The high purity gas facilitates use with high efficiency small gas turbine technology, thereby significantly increasing efficiency as compared with conventional steam turbines and decreasing the unit size of the turbine required. The DC or AC arc(s) provides a high temperature heat source to accomplish the fast pyrolysis effectively. Graef, *et al., Product Distribution in the Rapid Pyrolysis of Biomass/Lignin for Production of Acetylene,* Biomass as a Nonfossil Fuel Source, American Chemical Society (1981) have shown that under conditions such as those found in a plasma furnace, municipal solid waste can be pyrolyzed into a gaseous product as shown in **Table 7**.

Table 7.

| Gas Composition from Pyrolysis of MSW in Plasma Furnace. | | |
|---|---|---|
| | Fast Pyrolysis | Normal Pyrolysis |
| Percent Conversion to useful gas for combustion | > 65% | 45% - 50% |
| Gas Species | Fast Pyrolysis | Normal Pyrolysis |
| $CO_2$ | 2% | 10% |
| CO | 44% | 50% |
| $H_2$ | 43% | trace |
| $CH_4$ | 2% | 38% |
| Light HC's | bal | bal |
| HHV (BTU/SCF) | 350-400 | 300-350 |

It is important to note that in comparing normal pyrolysis to that of rapid pyrolysis, a greater fraction of the incoming waste is converted to gas. Thermal or normal pyrolysis promotes liquefaction giving only 45-50% conversion to pyrolysis gases, while rapid pyrolysis has gas yields of greater than 65%. Rapid pyrolysis of municipal waste has been demonstrated using a water cooled, metal plasma torch. *See, Carter, et al., Municipal Solid Waste Feasibility of Gasification with Plasma Arc, Industrial and Environmental Applications of Plasma,* Proceedings of the First International EPRI Plasma Symposium (May 1990). In the partial oxidation mode of operation, the residue from both techniques is oxidized to offset the pyrolysis energy requirements.

The pyrolysis gases produced in accordance with the present invention are expected to be well suited for combustion in a state of the art, high efficiency gas turbine generator. With the efficiency of new gas turbine-combined cycle systems approaching 50%, the present method of waste-to-energy conversion provides an effective alternative to standard waste incinerators. Under favorable conditions, the incinerator-steam generator systems achieve 15-20% efficiency in the conversion of the potential energy contained in the waste to usable electric energy.

The high quality, vitrified products produced in accordance with the present invention may be used in a variety of applications. For example, the vitrified products may be crushed and incorporated into asphalt for use in roads and the like. Alternatively, the vitrified products may be utilized to replace cinder in cinder or building blocks, thereby minimizing absorption of water within the block. Further, the vitrified products may be solidified to a final form which exhibit substantial volume reduction over prior art vitrification products. The solidified form is suitable for disposal without health risks or risks to the environment.

In another embodiment of the invention, tunable arc plasma-melter systems are employed utilizing a molten oxide pool. The composition of the molten oxide pool can be modified to have electrical, thermal and physical characteristics capable of processing metals, non-glass forming wastes and low-ash producing wastes in a manner capable of generating a low to medium BTU gas. The conductivity of the molten pool is controlled by adding melt modifier materials so that the joule heated portion of the system can effectively maintain the temperature of the melt even under conditions such as 100% joule heating operation. It is desirable to maintain the electrical resistivity of the molten pool in a certain range. For example, for some configurations of the tunable arc plasma melter, it is desirable that the molten pool composition be maintained with an electrical resistivity above 1 Ohm-cm for effective joule heating of the molten oxide pool. Depending on the waste being treated and the bath temperature, the electrical resistivity is preferably in the range of 1-200 Ohm-cm, and more preferably, in the range of 5-15 Ohm-cm.

This embodiment of the invention provides tunable arc plasma-melter systems exhibiting a high degree of controllability and efficiency for a wide variety of waste streams that have been particularly difficult to treat in the past. Exemplary non-glass forming wastes include tires and metals such as iron. Illustrative low-ash producing organics include plastics, oils, solvents and the like. Waste streams such as hazardous organic liquids, mixtures of low-ash producing organics and metals, or organic matter with limited ash content and high metal content can all be processed utilizing the controlled composition molten oxide pool variation of the tunable plasma arc melter system. Wastes such as sludges containing primarily reduced metals are not well suited for processing in joule heated glass tanks due to the high electrical conductivity of the resultant melt. However, using the controlled composition oxide pool mode of operation, the tunable arc plasma process can even process melts that result in molten metal baths which are gravimetrically separated from the slag.

A system suitable for processing metals, non-glass forming wastes and low-ash producing inorganics according to the present invention is illustrated in **FIG. 12.** The system **408** includes furnace **409,** clean-up unit **410**, a gas turbine or internal combustion engine **411** and generator **412**. System **408** may also include heat exchanger **417** and compressor **420.**

As discussed in greater detail herein, a waste stream such as sludge containing metals, non-glass forming wastes and low-ash producing inorganics is introduced into furnace **409**. The waste stream is combined with a molten oxide pool **413** having a composition with desired electrical, thermal and physical characteristics. Depending on the furnace conditions, the molten pool or waste feed is contacted with DC or AC arc(s) **415** to produce molten pool **413.** DC or AC arc(s) **415** can be operated using DC or AC arc electrode(s) **414** in combination with joule heating electrodes **416a** and **416b** as described hereinabove. It will be appreciated by those skilled in the art that various furnace configurations may be suitable for use in the system shown in **FIG. 12.** For example and as shown above, the number of joule heating electrodes may include more than two electrodes and additional DC or AC arc electrodes may be employed.

During the processing of some waste streams, it may be desirable to contact the surface **413a** of molten oxide pool **413** with a predetermined amount of steam **418.** Steam **418**, for example, can be employed to facilitate the use of a water-gas reaction as follows:

$$C + H_2O \rightarrow CO + H_2 \qquad\qquad (1).$$

Steam **418** is introduced into furnace **409** directly above or at the surface **413a** of molten pool **413**. In this manner, carbonaceous waste materials may be processed and transformed to form a hydrogen-rich gas **421**. The hydrogen-rich gas **421** produced by the system exits through port **421a** and is cleaned in clean up unit **410.** For example, hydrogen sulfide ($H_2S$), sulfur oxides ($SO_x$) and hydrogen chloride (HCl) can be removed from hydrogen-rich gas **421** in clean up unit **410.** Clean up unit **410** may include scrubber(s) or the like. The hydrogen-rich gas is then combusted in an internal combustion engine **411**. Internal combustion engine **411** is connected to generator **412** to produce electricity **422**. In an alternative embodiment, internal combustion engine **411** may be substituted with a high efficiency gas turbine or fuel cell (if the gas is sufficiently clean and will not damage the fuel cell).

Electricity **429** may be supplied accordingly from an external source such as a utility company to provide power for the arc and joule heating functions of furnace **409.** Such electricity is subjected to monitoring **430** or the like.

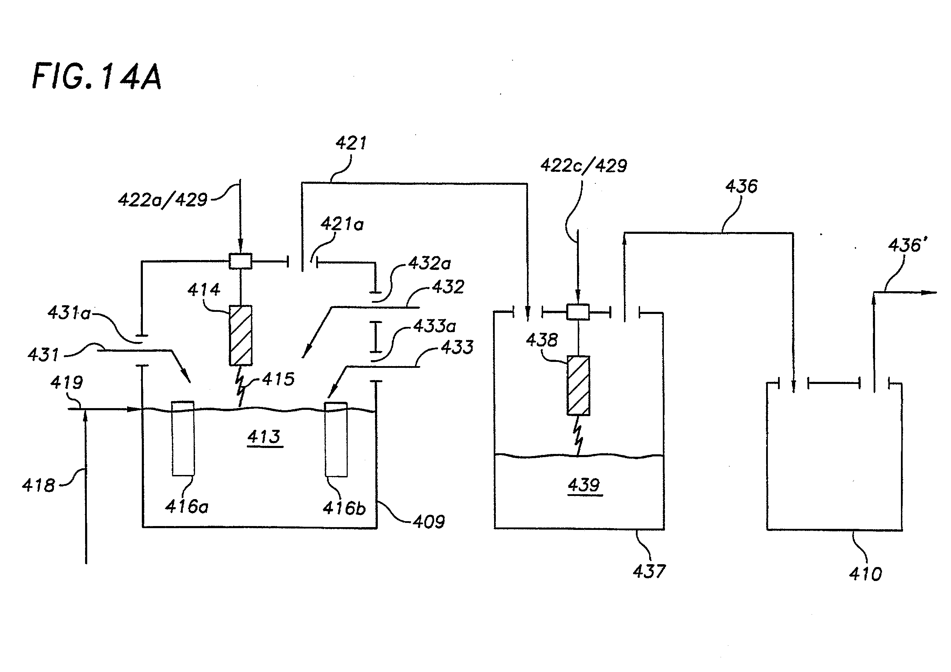

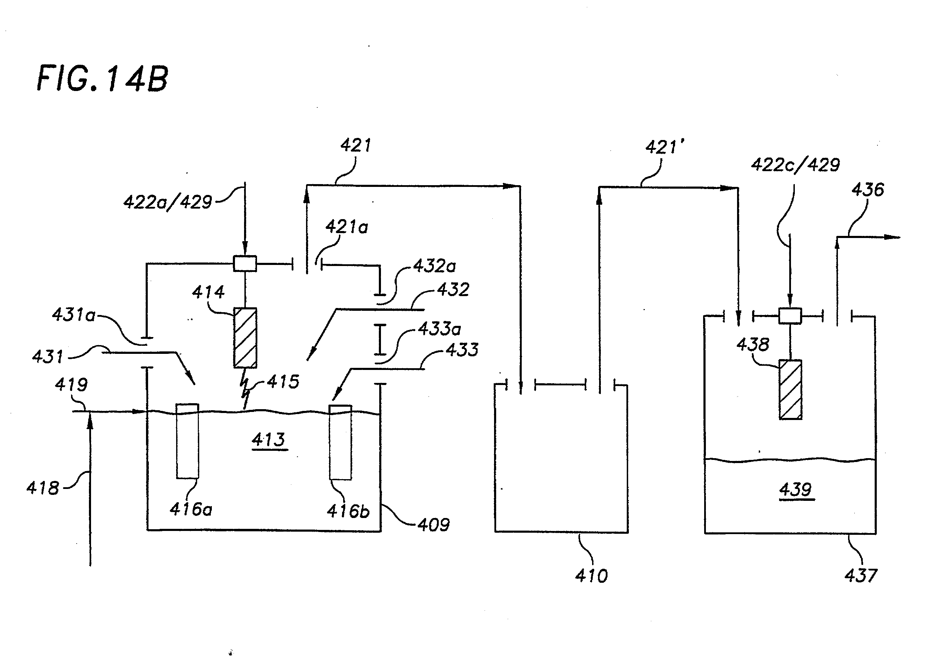

Additionally, a portion **422b** of electricity **422** can be used to assist in powering arc electrode(s) **414** while a portion **422a** of electricity **422** can be used to assist in powering the joule heating electrodes (transformer **426** can be provided in this situation). A portion of electricity **422c** may also be utilized in a secondary plasma reaction chamber (as shown in **FIGS. 14A** and **14B**). Additional electricity **422** can be sold or utilized in a commercial manner. Such electricity exits generator **412** and can be controlled by circuit breaker(s) **423**, transformer **425** and circuit breaker **424.**

Waste heat in exhaust gas **427** from the gas turbine or internal combustion engine **411** can be used to produce steam **418** for the water-gas and water shift reactions by employing heat exchanger **417** as shown in **FIG. 12.** Heat exchanger **417** is connected to a source of water **428** or other heat exchanging medium.

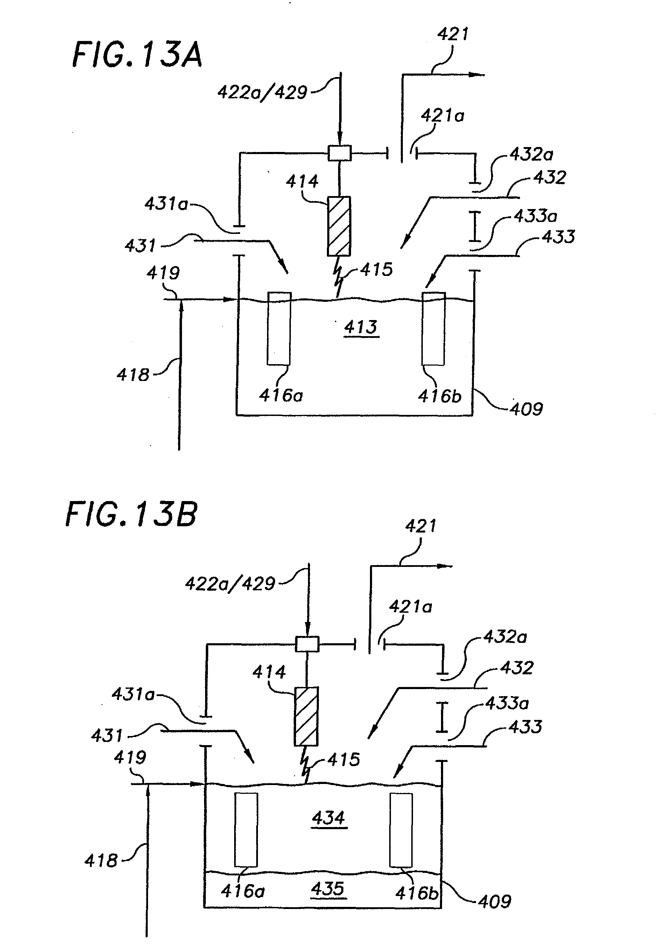

Controlled quantities of air **419**, may under certain circumstances, be introduced into system **408** using compressor **420**. Such circumstances may occur where energy recovery is not desired or practical, *e.g.* if it determined that the waste form redox state must be higher to ensure a stable waste form. Under these conditions, the furnace system has the capability to operate under oxidizing conditions. Furnace **409** is constructed such that the amount of air or gas entering the system can be controlled. For example, ports such as **431a, 432a** and **433a** discussed herein in connection with FIGS. **13-14** are designed to allow controlled introduction and/or removal of various streams into furnace **409**. The constituents of the molten pool are chosen to be optimum for a given waste stream without allowing undesirable ingress or egress of air therethrough.

The present invention allows the use of a molten oxide pool from material other than the primary waste material being processed to provide the desired medium for effective use of the tunable arc plasma-melter portions of the system. Referring to **FIG. 13A**, a furnace suitable for processing metals, non-glass forming wastes and low-ash producing inorganics is illustrated.

As discussed above in connection with **FIG. 12**, furnace **409** includes one or more DC or AC arc electrodes **414** capable of generating DC or AC arc(s) **415**. Furnace **409** also includes joule heating capabilities, including joule heating electrodes **416a** and **416b**.

Primary waste stream **431** to be processed is introduced into furnace **409** through port **431a**. Melt modifier (s) **432** is introduced into furnace **409** through port **432a**. Alternatively, or in addition to melt modifier **732**, a secondary waste stream **433** having desired glass forming characteristics is introduced into furnace **409** through port **433a.**

The constituents of the molten pool are chosen to be optimum for a given waste stream. While not to be construed as limiting, melt modifiers **432** may for example include dolomite ($CaCO_3 \cdot MgCO_3$), limestone (e.g. calcium carbonate, $CaCO_3$), sand (e.g. glass maker's sand), glass frit, anhydrous sodium carbonate (soda ash), other glass forming constituents and/or sand combined with metals. It will be appreciated by those skilled in the art that other glass melt modifiers may be used in accordance with the present invention. The molten oxide pool may also be formed utilizing melt modifier combinations of secondary wastes and material(s) other than the primary waste being treated. For example, the secondary waste with the proper glass forming composition may be simultaneously fed to the furnace with the primary waste and/or other melt modifier(s) to maintain the molten oxide pool within the proper compositional range. The constituents of the molten pool are selected based upon a given waste stream. This mode of operation provides a high degree of flexibility in the operation of the tunable arc plasma-joule heated melter system, thereby broadening the waste types for which the system can treat.

It should be appreciated by those skilled in the art that the molten oxide pool provides flexibility beyond that of either the joule-heated melter or standard plasma arc processes relative to melt modifier addition. With highly conductive oxide mixtures, a joule heated system may be ineffective or unable to maintain melt bath temperature without the added energy provided by the arc. Conversely, with highly resistive oxide melts, the potential across the joule heated electrodes can become unacceptably high and adequate current cannot be maintained to provide joule heating. The supplemental energy can be provided by the arc. The arc energy, however, can be limited in both of these situations to provide only enough energy to process incoming waste and supplement joule heating energy to maintain melt bath temperature. The molten oxide pool embodiment of the present invention provides a much greater degree of flexibility in melt adjustment using melt modifiers than either that of a joule-heated melter system or a standard arc plasma process.

The melt modifiers **432** and/or secondary waste stream 433 are selected to provide a molten pool having desired electrical, thermal and physical characteristics. The type and amount of melt modifiers are determined for the specific vitrification unit configuration and waste stream. For example, the molten pool in the case of processing tires in a waste stream **431** provides sufficient conductivity to use the joule heated melter subsystem in the more optimum mode of operation. As discussed above, steam is added in the desired amounts directly above or to the molten pool to facilitate the use of a water-gas reaction or to remove excess carbonaceous material.

**FIG. 13B** illustrates a furnace suitable for reclaiming some metals utilizing a molten oxide pool in accordance with the invention. When metals are being processed, the controlled composition of the molten pool may be altered such that a molten metal oxide layer is disposed above a dense metal layer in the furnace hearth. Preferably, the positioning and number of the joule heating electrodes can be varied according to the type and volume of waste being processed. When the waste feed material has a high metals content for example, the joule heating electrodes may be raised or lowered to adjust or "tune" the effective resistive path between electrodes. This may be required if the metal layer is allowed to increase to a point where the electrical path between the joule heated electrodes is effectively "shorted'" due to contact or near contact with the highly conductive metal layer. In addition, the number of joule heating electrodes can be designed into the furnace depending on the type and amount of waste material being processed.

As further shown in **Fig. 13B**, molten metal oxide layer **434** is disposed above a dense metal layer **435** in the furnace **409.** The conductivity of the joule heated molten pool **434/435** is controlled by adding melt modifier materials **432** and/or secondary waste stream materials **433** such that the joule heated portion of the system can effectively maintain the temperature of the melt even when under conditions such as 100% joule heating operation.

It is desirable to maintain the electrical resistivity of the molten pool in a certain range. For example, for some configurations of the tunable arc plasma melter, it is desirable that the molten pool composition be maintained with an electrical resistivity above 1 Ohm-cm for effective joule heating of the molten oxide pool. In some embodiments, the electrical resistivity is preferably in the range of 1-200 Ohm-cm, and more preferably, between 5-15 Ohm-cm. It will be appreciated, however, that the waste stream, the melt, the furnace size and configuration can have a significant effect on these ranges.

**FIGS. 14A** and **14B** illustrate exemplary primary and secondary furnace configurations in the accordance with the present invention. In the case of automobile and truck tires or other non-glass forming waste streams, the tunable molten oxide pool plasma arc melter process allows for the efficient conversion of whole tires into a low to medium BTU gas and any metal present is separated in a metal phase below the oxide melt layer. In this manner, tires can be removed from vehicles without dissection and are amenable to processing in the tunable arc plasma melter system. Steel belting and rim materials can be reclaimed from the molten metal phase.

To accomplish the conversion of tire rubber to primarily synthesized gas (*i.e.* containing hydrogen and carbon monoxide), steam and possibly controlled quantities of air may be added to the melt chamber in a controlled manner to facilitate a series of reactions as shown below. The steam and air mixture can be added through a port, using tuyeres or the like positioned such that the steam/air mixture will be introduced into the furnace at the melt surface. This will ensure that carbonaceous material is converted to gaseous products and not trapped in the glass/slag matrix.

Chemical equations (1)-(5) present possible reactions that will occur upon introduction of oxygen and/or steam into the melt chamber of furnace **409**.

$$C + H_2O \rightarrow CO + H_2 \tag{1}$$

$$C + CO_2 \rightarrow 2CO \tag{2}$$

$$CO + H_2O \rightarrow CO_2 + H_2 \tag{3}$$

$$C + O_2 \rightarrow CO_2 \tag{4}$$

$$C + 2H_2 \rightarrow CH_4 \tag{5}$$

Reactions (1) and (2) are highly endothermic reactions, requiring about 131.4 kJ/mole and 172.6 kJ/mole, respectively. With the controlled introduction of primarily steam at near atmospheric pressure, reaction (1), *i.e.* the water-gas reaction, will predominate, requiring energy (i.e. 131.4 kJ/mole) to produce a hydrogen-rich gas. As discussed above, this gas is cleaned using particulate removal technology and scrubbing solutions to remove the majority of particulates and other contaminants such as sulfur and chlorine in the form of $H_2S$, $SO_x$ and HCl prior to combustion either in a gas turbine or internal combustion engine electrical generator system or for use in a fuel cell, as discussed herein. Waste heat can be utilized to produce steam for the furnace chamber steam feed stream. High temperature air may be extracted from an intermediate stage in a gas turbine if additional thermal energy is required.

The processing of materials containing a high carbon to hydrogen ratio may result in the production of excess carbon (*i.e.* unreacted char) in the primary furnace exhaust. For example, tires typically contain a high carbon to hydrogen ratio. This excess carbon or unreacted char may be converted to useful gaseous fuel **436** or to heat in a secondary plasma reaction chamber **437** as shown in **FIGS. 14A** and **14B**. This chamber will provide thermal energy from a transferred plasma arc and/or plasma torch **438** to drive the desired reactions, i.e. reaction (1) set forth above. Electricity **422c** and/or **429** can be supplied to secondary reaction chamber **437** as also shown in **FIGS. 14A** and **14B**.

As in the primary furnace chamber, steam and possibly air or oxygen (not shown in **FIGS. 14A** and **14B**) can be added directly above or to slag 439, resulting in the complete or substantially complete conversion of carbon and carbon containing compounds to carbon monoxide and hydrogen gas.

The char produced from high carbon content wastes (*e.g.* tires) may also accumulate on the surface of the oxide melt. To ensure a more complete carbon conversion, both steam and controlled quantities of air may be introduced at or above the melt line as described above. Reaction (4) described above will predominate in the presence of air, thereby resulting in a net thermal energy production of about 393.8 kJ/mole of reacted carbon. This thermal energy will drive reaction (1) in this surface zone due to the simultaneous introduction of steam and air. The air-steam mixture can be accurately controlled to provide the desired gaseous product from the furnace system. For example, the water gas reaction can be used to convert coke deposits or accumulations in the furnace hearth to carbon monoxide and hydrogen-rich gas. In some situations, it may desirable to allow a portion of the coke to remain in the furnace hearth to reduce electrode erosion.

The hydrogen-rich gas produced by the system can be cleaned and then combusted in a gas turbine or internal combustion engine and subsequently used to produce electricity in a generator (or utilized in a fuel cell). In preferred embodiments, the waste heat from the gas turbine or internal combustion engine can be used to produce steam for the water-gas reaction in the melter unit. In circumstances where an internal combustion engine or gas turbine are not employed, steam may also be obtained by partially cooling furnace off-gas 421 and using this steam for the water-shift reaction.

When carbonaceous materials such as tires are processed in a pyrolytic mode with steam and controlled quantities of air, the processed materials can produce a low to medium BTU gas suitable for combustion in a high efficiency (e.g. 35-50%) gas turbine or internal combustion engine (or for use in a fuel cell). The tunable plasma arc melter system may also produce excess electrical power when processing the carbonaceous material in the pyrolytic mode described hereinabove. The electrical power from the gas turbine or internal combustion engine generator may be supplied to assist the furnace power supply. This system may also provide additional AC power to the joule heating portion of the melter and/or a utility company, thereby providing the opportunity to reduce operating expenses and/or generate additional revenue.

As discussed above, the present invention also provides environmentally attractive methods and apparatus for reduced emissions of oxides of nitrogen ($NO_x$) when the gases produced in the waste conversion unit are combusted. This can be accomplished by combusting hydrogen-rich gas and operating an internal combustion engine or a turbine in a very lean mode, *i.e.* a high ratio of air to fuel with hydrogen-carbon monoxide gas from the waste conversion unit as fuel, so that electricity may be produced from the hydrogen-rich gas.

"Ultra lean", as that term is used herein, refers to an equivalence ratio, $\Phi$, of 0.4-0.7 relative to stoichiometric operation. $\Phi$ is the fuel to air ratio relative to the fuel to air ratio at stoichiometric conditions where the amount of air is exactly equal to that needed to completely combust the fuel gas. Typical spark ignition engines operate at stoichiometric conditions where $\Phi = 1$. *See,* MacDonald, *Evaluation of Hydrogen-Supplemental Fuel Concept With An Experimental MultiCylinder Engine,* Soc. of Automotive Engineers, Paper 930737, p. 574 (1976), which is incorporated herein by reference. Use of hydrogen-rich gas in a spark ignition engine allows operation at ultra lean ratios of fuel to air. It is possible to operate at fuel to air ratios, $\Phi$, of 0.4 and possibly lower. These values of $\Phi$ are substantially lower than those allowed for other fuels. The lower allowed values of $\Phi$ result from the faster flame speed of hydrogen. The use of hydrogen-rich gas and the use of ultra lean operation also allow the use of much higher compression ratios. The combination of ultra lean operation and the use of a high compression ratio can greatly reduce pollution and increase engine efficiency. By operating in a very lean mode, *e.g.* with low equivalence ratios in a range of about 0.4-0.7, production of $NO_x$ may be greatly reduced, *i.e.* by more than a factor of 10 relative to stoichiometric operation. Hydrocarbon and carbon monoxide emissions should also be very low.

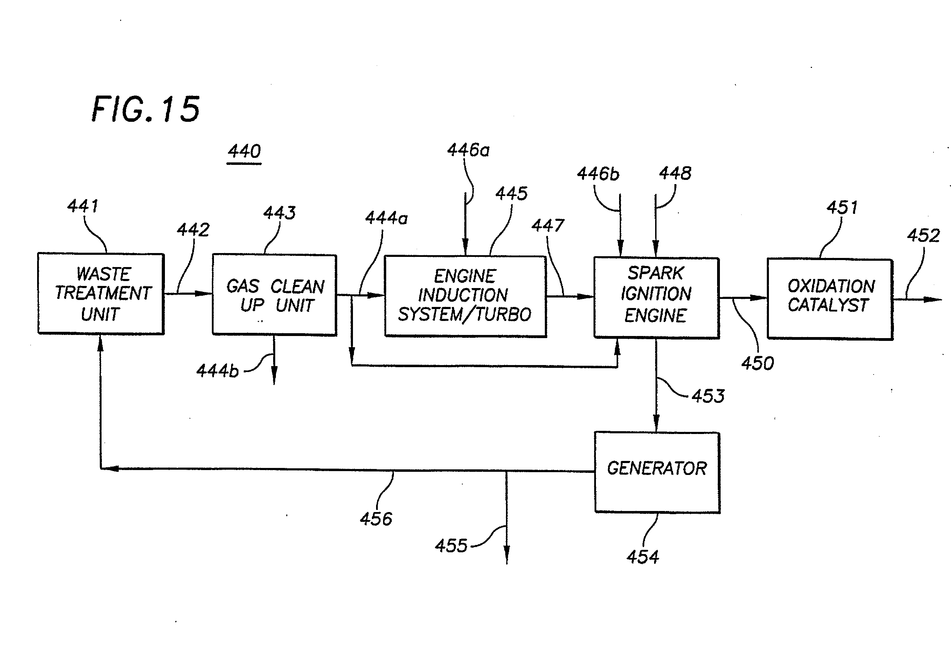

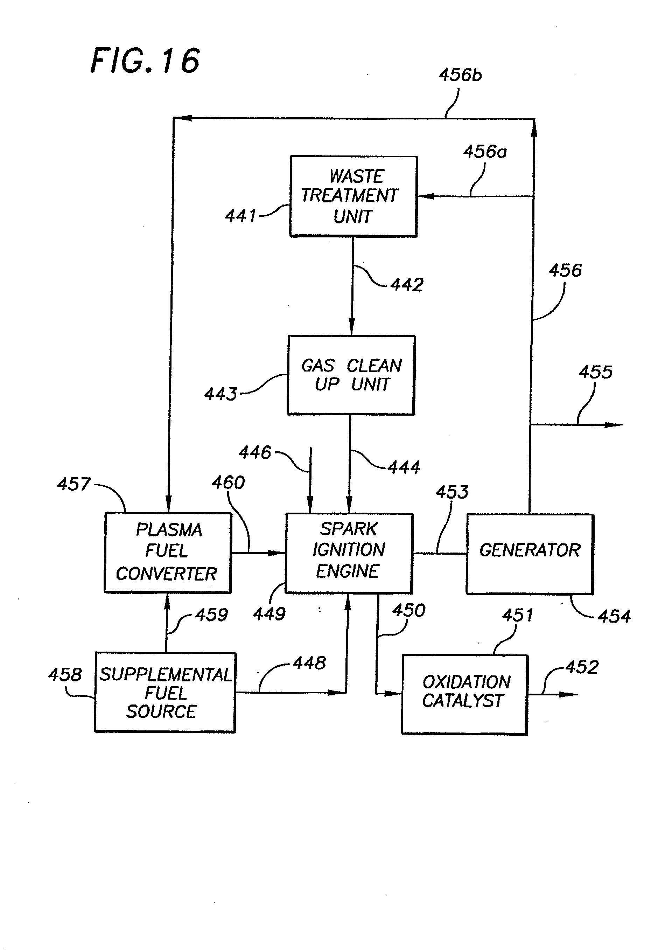

Systems for reduced $NO_x$ emissions during the production of electricity from combustible gases generated by a waste conversion unit are illustrated in **FIGS. 15** and **16**. System **440** includes waste conversion unit **441**, gas clean-up unit **443**, spark ignition engine **449** or a gas turbine (not shown in **FIGS. 15** or **16**) and generator **459** (or fuel cell as discussed herein). Plasma fuel converter 457 *(see* **FIG. 16**) and/or engine induction system/turbocharger **445** *(see* **FIG. 15**) can also be utilized in system 440. Supplemental fuel **448** from a fuel source *(e.g.* fuel source **458** as shown in **FIG. 16**) and oxidation catalyst **451** can also be used in accordance with the invention.

As discussed above, combustible gases can be produced from waste conversion unit **441**. Waste conversion units suitable for use in the invention include those shown and described hereinabove. Additional waste conversion units suitable for use in accordance with the invention include those shown in copending U.S. application Serial Nos. 08/621,424 and 08/622,762, both filed March 25, 1996 and both of which are incorporated herein by reference. These waste treatment units can produce a hydrogen-rich gas containing primarily hydrogen and carbon monoxide which can be combusted to produce electricity. The electricity can be utilized to satisfy some or all of the electricity requirements for the waste treatment systems. It will be appreciated by those skilled in the art that other waste conversion units capable of producing combustible gases can be used in conjunction with system **440.** *See e.g.,* U.S. Patent No.

5,280,757 to Carter *et al;* Chapman, *Evaluation of Vitrifying Municipal Incinerator Ash,* Ceramic Nuclear Waste Management IV, Ceramic Transactions, American Chemical Society, Vol. 23, pp. 223-231 (1991); and U.S. Patent Nos. 5,177,304 and 5,298,233, both to Nagel, all of which are incorporated herein by reference.

Gases **442** exit waste conversion unit **441** and are introduced into gas clean-up unit **443** for gas-solid separation, *e.g.* for removal and separation of ash or other particulates **444b** from hydrogen-rich fuel gas **444a** that may be entrained in gases **442.** In some circumstances, it may also be desirable to incorporate an off-gas scrubbing process for gases exiting clean-up unit **443** or internal combustion engine **449** (or gas fired turbine) to remove any acid gases therefrom.

Hydrogen-rich gas **444a** is then introduced into engine induction system/turbocharger **445** and combined with predetermined amounts of air **446a** so that there is an ultra lean mixture. A turbocharger **445** could be used to increase the amount of fuel in the cylinder to compensate for the reduced power density in ultra lean operation. Turbocharger **445** could be driven from the exhaust gas from the glassification unit or steam which is produced by a heat exchanger at various points in the system. Engine induction system/turbocharger **445** allows hydrogen-rich gas **444a** to be cooled prior to being introduced into the internal combustion engine **449**. Cooling can increase the amount of fuel **447** that can be used per explosion. It should be noted that operation of engine induction system/turbocharger **445** may not always be necessary or desirable. Under these circumstances, hydrogen-rich gas **444a** and air **446b** in an ultra lean mixture may be introduced directly into spark ignition engine **449** as also shown in **FIGS. 15** or **16.**

Hydrogen-rich gas **447** is combusted in engine **449**, thereby producing exhaust **450** and mechanical power **453**. Mechanical power **453** is used to drive generator **454** to generate electricity **456** and/or electricity **455**. As further shown in **FIG. 15**, electricity **456** can be used to supply some or all of the electricity requirements for waste conversion unit **441**. Electricity **456** can be used for other electricity requirements in the system *(see e.g. to* supply electricity **456b** to plasma fuel converter **457** as illustrated in **FIG. 16**). Electricity **455** can be used for sale.

The operation of spark ignition engine **449** is preferably at lean ratios of fuel to air, $\Phi$, and at high compression ratios. For example, illustrative values of $\Phi$ are 0.4-0.7 and preferably about 0.5. Illustrative values of compression ratio, r, are 12 to 15. In contrast, typical spark ignition engines that operate on gasoline operate with $\Phi$ equal to 1 and r at about 10. In addition, gas turbines may be capable of being operated at $\Phi$ ratios of 0.4 or less.

While not to be construed as limiting, it is expected that the efficiency of the spark ignition engine can be increased by a relative amount of approximately 20% by using ultra lean operation (*i.e.* the efficiency can be increased for example from approximately 30% to 36%). In addition, utilizing compression ratios of about 15 is expected to provide an additional relative increase in efficiency of about 15%. By increasing the compression ratio from the standard spark ignition value of 10 to a value of around 15, the thermal efficiency can therefore be further increased from 36% to 42%. *See* Ganesan, *Internal Combustion Engines,* McGraw-Hill, Inc. (1995), which is incorporated herein by reference. A thermal efficiency of 42% is substantially higher than that of present gas turbine technology for powers that are less than 1 MW (a 100 kW level gas turbine, for example, has an efficiency of about 30%). Moreover, the spark ignition engine is typically less expensive and is generally easier to stop and start. It should be noted, however, that a gas turbine using lean operation can be employed in the present invention *(see e.g.* turbine **52** in **FIG. 1A**).

Ultra lean operation can dramatically reduce $NO_x$ emission. It is expected that $NO_x$ levels can be more than 10 times lower than $NO_x$ levels produced using standard stoichiometric operation. $NO_x$ emissions will decrease with decreasing equivalence ratios as the equivalence ratio is reduced below the upper end of the ultra lean mode of operation ($\Phi = 0.7$). In addition, hydrocarbon emissions should be very small because the hydrogen-rich gas typically will contain only a small fraction of hydrocarbons and it is expected that there will be very complete combustion of these small levels of hydrocarbons. Moreover, carbon monoxide (CO) emissions are expected to be low due to a high degree of combustion of CO. Additional CO reduction can be obtained by use of a simple oxidation catalyst. Referring again to **FIG. 15** for example, exhaust **450** can be combined with an oxidation catalysts **451** to produce low pollution exhaust **452**. Oxidation catalysts suitable for use in the invention include, but are not limited to, platinum and iridium. The exhaust heat from the engine **449** could be used to provide steam for heating and/or other applications in a cogeneration mode.

It is also expected that levels of $NO_x$, CO hydrocarbons, hydrocarbons and particulates produced in accordance with the invention can be significantly lower than emission levels from small diesel generator power stations. Emission levels according to the present invention are also expected to be no greater than those from natural gas fired turbine electricity generating plants with relatively large power generation capacity which have extensive pollution control equipment.

When hydrogen-rich gas **442** production from the waste treatment unit **441** is not sufficient to power internal combustion engine **449**, it may be desirable to directly add a certain amount of supplemental fuel **448** (such as natural gas) to engine **449** in order to continue ultra lean spark ignition engine operation as shown in **FIGS. 15** and **16. FIG. 16** illustrates the integration of a supplemental fuel system with the spark ignition engine suitable for use in the invention.

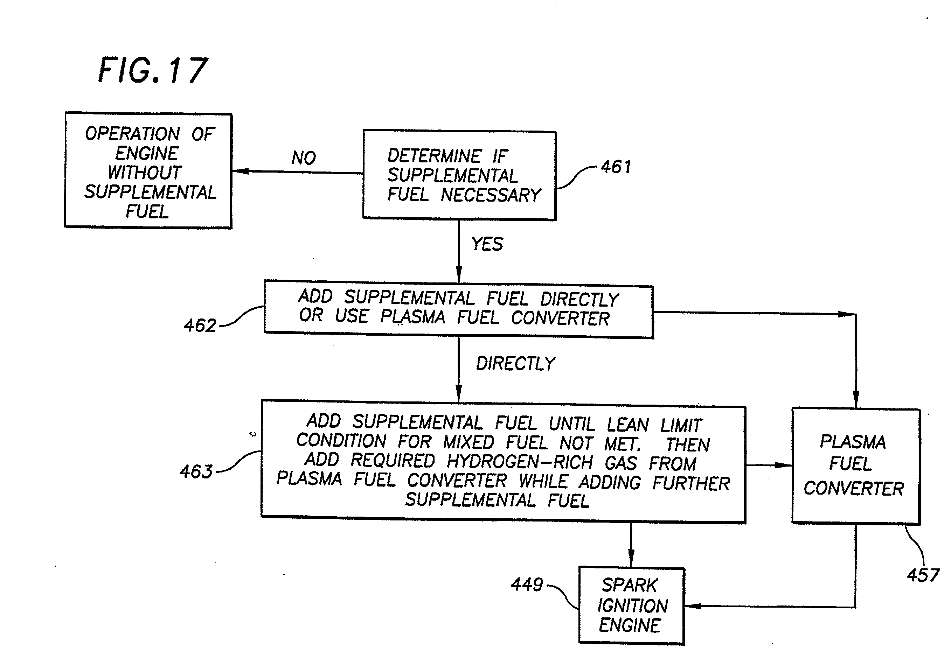

System **440** shown in **FIG. 16** is similar to system **440** shown in **FIG. 15**, but includes plasma fuel converter **457** (the use of which may be automatically controlled as shown for example in **FIG. 17**). While not shown in FIG. 16, it will be appreciated that system **440** can be employed using engine induction system/turbocharger **445** (as shown in **FIG. 15**) and plasma fuel converter **457.**

As further shown in **FIG. 16,** plasma fuel converter **457** can supply additional hydrogen-rich gas **460** to spark ignition engine **449.** This may be desirable or necessary where the amount of hydrogen-rich gas **444** (and/or supplemental fuel **448**) is insufficient to power engine **449** in the desired lean operation mode or using high compression ratios.

Plasma fuel converter **457** receives supplemental fuel **459** from supplemental fuels source **458** and reforms the fuel **459** into hydrogen-rich gas **460.** Plasma fuel converters suitable for use in the present invention include, but are not limited to those disclosed in U.S. Patent Nos. 5,425,332 and 5,437,250, both to Rabinovich *et al.* U.S. Patent Nos. 5,425,332 and 5,437,250 are both incorporated herein by reference. Hydrogen-rich gas **444** and **460** can therefore be used to ensure operation of engine **449** in a lean mode.

The present invention thus allows various combinations of supplying fuel to engine **449** to ensure operation in a lean mode and/or using high compression ratios, thereby providing highly efficient, cost effective and environmentally attractive systems. For example, hydrogen-rich gas **444** from waste conversion unit **441** can be used alone to supply fuel to engine **449.** Alternatively, hydrogen-rich gas **444** can be combined with supplemental fuel **448** (such as natural gas) in engine **449** in proportions such that lean operation of engine **449** is maintained. Plasma fuel converter **457** can also be utilized to supply additional hydrogen-rich gas **460** to engine **449** with hydrogen-rich gas **444** or with hydrogen-rich gas **444** and supplemental fuel **448.**

An exemplary automatic control system for determining when supplemental fuel and/or operation of the plasma fuel converter is desirable or necessary is shown in **FIG. 17**. If supplemental fuel is determined to be necessary in step **461**, it is then determined in step **462** if supplemental fuel is to be added directly into engine **449** or if supplemental fuel is to be added to plasma fuel converter **457** for production of hydrogen-rich gas **760.**

If supplementary fuel is added directly to engine **449** (step **463**), supplemental fuel is added until a lean limit condition for mixed fuel operation is not met. Additional hydrogen-rich gas **444** and/or hydrogen-rich gas **460** can then be added as appropriate.

The addition of hydrogen-rich gas into engine **449** can be controlled by step **493**. For example, supplemental fuel can be automatically controlled to be introduced directly to engine **449** and/or plasma fuel converter **457** based on predetermined conditions.

As discussed above, electricity generated in generator **454** can be can be used to supply some or all of the electricity requirements **456a** for waste conversion unit **441**. Electricity can also be used for other electricity requirements in the system *(see e.g.* to supply electricity **456b** to plasma fuel converter **457** as illustrated in **FIG. 16**). Electricity **458** can be used for sale.

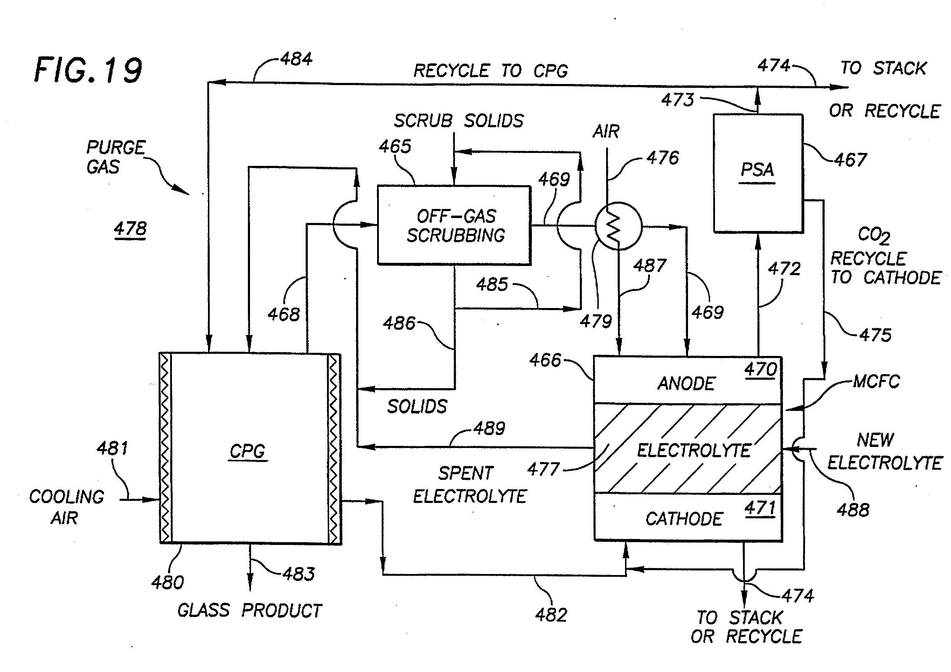

In an alternative embodiment of the present invention, the off-gas from the waste conversion unit can be used in a non-combustion process. This can be accomplished by an integrated controlled plasma glassification-fuel cell (CPG-FC) non-combustion system *(see* **FIGS. 18** and **19**). The controlled plasma glassification (CPG) system can be integrated with fuel cell systems for the efficient and environmentally favorable production of electrical energy from waste processed in the controlled plasma glassification system.

As used herein, a "controlled plasma glassification unit" includes the waste conversion units of the present invention. In addition, "controlled plasma glassification" and/or a "plasma enhanced melter" (PEM) refers to the process of treating waste in the waste conversion units of the present invention.

For example, a molten carbonate fuel cell (MCFC) can be used in conjunction with the waste conversion units of the present invention to produce electricity from the waste conversion unit off-gases in a non-combustion process. The controlled plasma glassification will produce a product gas or off-gas composed primarily of hydrogen, carbon monoxide, methane, carbon dioxide and traces of other gases when processing carbonaceous materials. The gases produced from the controlled plasma glassification system may be ideally suited for the fuel of a molten carbonate fuel cell. (with contaminants from the waste stream being removed).

The controlled plasma glassification-fuel cell (CPG-FC) system provides a completely non-combustion process for the conversion of waste materials into useful electrical energy. Contrary to combustion systems such as incinerators coupled to steam turbine generator systems, or other combustion techniques such as gas turbine or internal combustion generator sets, the controlled plasma glassification system- fuel cell systems in accordance with the present invention convert the chemical energy of the fuel gas into electrical energy through electrochemical reactions.

The molten carbonate fuel cell involves the use of a mixture of alkali carbonates supported in a matrix which acts as the electrolyte of the electrochemical cell. While not to be construed as limiting, a lithiated aluminate matrix may be utilized in the present invention. At the cathode of the cell, oxygen reacts with carbon dioxide and electrons on a lithiated nickel oxide electrode surface to form carbonate ions as follows:

$$1/2 O_2 + CO_2 + 2e\text{-} \rightarrow CO_3^{2-} \tag{6}.$$

At the anode of the cell, oxidation of primarily hydrogen occurs when it reacts with the carbonate to form vapor and carbon dioxide as follows:

$$H_2 + CO_3{}^{2-} \rightarrow H_2O + CO_2 + 2e^{-} \qquad (7).$$

The $CO_2$ produced in the anode compartment of the cell is in practice recycled to the cathode using simple gas separation techniques such as pressure swing adsorption (PSA). As can be appreciated from reactions (6) and (7), electrons are taken from the circuit at the cathode of the cell, and electrons are released into the circuit at the anode. Using these primary reactions, the non-combustion conversion of hydrogen fuel to electrical energy can be accomplished.

Referring now to **FIG. 18,** a flow diagram for utilizing the controlled plasma glassification- fuel cell system in accordance with the present invention is illustrated. System **464** includes an off-gas clean up unit **465** for gases **468** exiting a waste conversion unit. A fuel cell **466**, such as a MCFC, is connected to the clean up unit **465** such that gases **469** from the clean up unit **465** can be used therein. Gases **469** are expected to primarily include hydrogen, carbon monoxide and methane. Additional gases, however, may also be included.

The molten carbonate fuel cell involves the use of a mixture of alkali carbonates supported in a matrix (*e.g.,* a lithiated aluminate matrix) which acts as the electrolyte **477** of the electrochemical cell **466**. Oxygen from air **476** reacts with carbon dioxide and electrons on a lithiated nickel oxide electrode surface at the cathode **471** of the fuel cell **466** as shown above in reaction (6). Carbonate ions are thus formed and electrons are consumed at the cathode **407**. Oxidation of primarily hydrogen occurs at the anode **470** of the fuel cell **466** when it reacts with the carbonate formed in the cathode **471**. Water vapor and carbon dioxide are thus formed and electrons are released into the circuit in accordance with reaction (7) set forth above.

The $CO_2$ produced in the anode **470** compartment of the fuel cell **466** is in practice recycled to the cathode **471**. This can be accomplished using simple gas separation techniques such as pressure swing adsorption (PSA). Thus, carbon dioxide and other gases **472** can be separated in unit **467** by pressure swing adsorption. Carbon dioxide **475** can then be recycled to cathode **471**. Carbon dioxide **475** can also be combined with predetermined amounts of air **476** prior to and/or during introduction to cathode **471**.

Gases **474** removed from the cathode **471** of the fuel cell **466** primarily contain $O_2$ and $CO_2$. Gases **473** from unit **467**, which may contain $O_2$ and $CO_2$ can be combined with gases **474** as the process exhaust. These gases can be treated as appropriate.

The gaseous emissions to the environment from a controlled plasma glassification-fuel cell system according to the present invention are expected to be extremely low. It is also expected that the controlled plasma glassification will have very low emissions of heavy metals, hazardous organics species such as dioxins and furans and particulates. There are no hazardous emissions from a fuel cell, such as for example a molten carbonate fuel cell (MCFC), operating on hydrogen and carbon monoxide. It is expected that the off-gas from the controlled plasma glassification process will have extremely low hazardous emissions and when this gas passes through a fuel cell, the gas actually will be further cleaned, thereby resulting in an extremely low emissions system.

The molten carbonate fuel cell (MCFC) has been demonstrated to have the capability to further process organic compounds in the anode region through steam reforming reactions. Any light hydrocarbon emissions from the controlled plasma glassification therefore are expected to be utilized as a fuel in the molten carbonate fuel cell. In some circumstances, it is anticipated that the carbon monoxide emissions from the controlled plasma glassification may be in the range of about 10-50%.

Uncontrolled release of carbon monoxide is undesirable. The present invention, however, employs a molten carbonate fuel cell to utilize a large fraction of the CO as a fuel either directly or indirectly as indicated in reactions (8) or (9) below:

$$CO + CO_3{}^{2-} \rightarrow 2CO_2 + 2e\text{-} \qquad (8),$$

or

$$CO + H_2O \rightarrow H_2 + CO_2 \qquad (9).$$

Reaction (8) involves the direct electrochemical oxidation of the CO whereas reaction (9) involves a water-gas shift reaction to produce $H_2$, which is then efficiently used as fuel in the molten carbonate fuel cell as set forth above in reaction (7).

It is also anticipated that the controlled plasma glassification system of the present invention (*i.e.* the waste conversion units of the present invention) will have very low emissions of volatile metals due to the controlled operation of the arc plasma. The arc plasma of the controlled plasma glassification process is only operated at the power levels necessary to convert the incoming feed material into a useful gas (*i.e.* $H_2$, CO and $CH_4$) and to preheat the inorganic substances for dissolution into the glass melt. Other plasma systems and partial oxidation pyrolysis processes suffer high particulate emissions of volatile metals. Volatile heavy metals are a major concern in the operation of the molten carbonate fuel cell. Metals such as lead, mercury, arsenic, and selenium are all known to cause significant degradation in performance of the molten carbonate fuel cell. Other heavy metals will also cause performance degradation, but to a lessor degree as these. The coupling of a pyrolytic process such as the controlled plasma glassification according to the present invention (i.e. the waste conversion units of the present invention) with the molten carbonate fuel call therefore is expected to have major advantages over that of other waste processing technologies.

The molten carbonate fuel cell and solid oxide fuel cells are the only fuel cells which can tolerate low levels of contaminates in the fuel and oxidant gas streams. Therefore, even though the controlled plasma glassification is expected to have very low emissions, there may still be levels of contaminates present that may render a fuel cell such as the alkaline fuel cell (AFC), phosphoric acid fuel cell (PAFC), or proton transfer membrane (PEM) fuel cell inoperative (although such contaminates could be removed prior to being introduced into the fuel cell in order that such fuel cell could be used). It is also possible to convert the mixture of hydrogen and carbon monoxide into a purified stream of hydrogen using the water gas shift reaction (*i.e.* $CO + H_2O \rightarrow H_2 + CO_2$) and pressure swing adsorption to remove the $CO_2$ and produce a purified hydrogen stream. This allows other types of fuel cells such as the AFC, PAFC and PEM systems to be integrated with the controlled plasma glassification technology.

A high temperature gas cleaning system can be used with the controlled plasma glassification process to provide relatively clean fuel gas to a fuel cell. For example, the dry $Ca(OH)_2$ scrubbing technologies commercially available may be used in accordance with the present invention. The major advantage in this embodiment of the invention is that the incoming gas to the fuel cell may not require preheating as would be the case in most wet scrubber systems. Because the controlled plasma glassification process is expected to have low volatile metal emissions, a hot dry scrubbing technique is possible. Other plasma systems would require additional gas cleaning to ensure that the volatile metals would not reach and contaminate the fuel cell.

The efficiency of the molten carbonate fuel cell has been demonstrated in the range of 50-65% (i.e. chemical to AC power). This compares very favorably to that of state of the art gas turbine generator sets which are approaching 45% efficiency with a bottoming cycle. In an illustrative prophetic example, the controlled plasma glassification system can produce at least two times the net electrical energy when compared to using a 40% efficient gas turbine generator system. **Table 8** provides a summary of the expected efficiency improvement that can be realized using the controlled plasma glassification-fuel cell system in accordance with the present invention.

Table 8.

| Waste Type | Energy in Waste (kWh/ton) | CPG Energy Requirements (kWh/ton) | Net Energy Produced Using Gas Turbine ($\in$= 0.4) (kWh/ton) | Net Energy Produced Using MCFC ($\in$=0.65) (kWh/ton) |
|---|---|---|---|---|
| MSW | 2520 | 600 | 400 | 1020 |
| Tires | 8790 | 1600 | 1916 | 4114 |
| Medical | 5860 | 1000 | 1344 | 2809 |

The controlled plasma glassification-fuel cell (CPG-FC) system could also work synergistically with respect to electrolyte management. The molten carbonate fuel cell, although less susceptible to contamination issues than other types of fuel cells, may show degradation in performance when contaminated with sulfur and chlorine. An alternative approach to the standard operation of the molten carbonate fuel cell is to allow the continuous replenishing of the electrolyte and incorporation of spent electrolyte into the glass product in the controlled plasma glassification melt chamber.

Other unique aspects of the controlled plasma glassification-fuel cell (CPG-FC) system include the possible utilization of waste heat from the controlled plasma glassification chamber to idle the molten carbonate fuel cell and eliminate or minimize thermal cycling of the fuel cell. Thermal cycling is known to introduce failures in the molten carbonate fuel cells in the form of leaks and cracking of ceramic components. The controlled plasma glassification will in most cases be idled and waste heat from the controlled plasma glassification chamber could easily be routed to the fuel cell in the form of a controlled plasma glassification cooling gas (air) stream and through the anode and cathode gas distributors. The hot gas will transfer enough energy to the fuel cell to avoid thermal cycling.

The integration of the controlled plasma glassification and the molten carbonate fuel cell is illustrated in **FIG.**

**19**. It can be seen from **FIG. 19** how the controlled plasma glassification system can be integrated into a molten carbonate fuel cell system in a synergistic manner such that the total system has major advantages over either operating independently of one another.

System **478** includes a waste conversion unit **480** in accordance with the present invention, an off gas scrubbing unit **465**, a fuel cell **466** and a separation unit **467** (such as a pressure swing adsorption unit).

Cooling air **481** can be used (with or without water) to cool the furnace or waste conversion unit **480** (also referred to herein as the controlled plasma glassification unit). In some instances, unit **480** may also be cooled using only water. Vitrified or vitrifiable products **483** formed in unit **480** can be removed therefrom as discussed above. Gases **482** can be introduced directly from unit **480** to fuel cell **466**. Gases **482** primarily include air and are preheated in a cooling jacket to eliminate thermal shock to the cathode, and to maintain idling temperature of the fuel cell. Preferably, gases **482** are introduced into the cathode **471** of the fuel cell **466**. Gases **482** can also be combined with carbon dioxide recycle **475** prior to or during introduction into the cathode of the fuel cell.

Gases **468**, which primarily contain hydrogen, carbon monoxide and methane, exit unit **480** and are scrubbed in unit **465**. Solids and/or particulates from scrubber or unit **465** can be further treated. For example, solids **486** (which may include spent electrolyte **489** from fuel cell **466**) can be recycled to unit **480** for treatment therein, while scrubber solids **485** can be recycled and retreated in clean up unit **465**.

Gases **469** are introduced into fuel cell **466** at the anode. Idle heating air **479**, as discussed herein, may be heated by heat from unit **480**. Air **487** may be introduced directly into fuel cell **466** from heat exchanger **479.**

The gases are treated in fuel cell **466** as discussed above. New electrolyte **488** is added to fuel cell **466** as needed or desired. Gases **474** are transported to the stack or are recycled to unit **467**. Gases **472** are transported to unit **467** (e.g. pressure swing adsorption unit). Carbon dioxide **475** is recycled to cathode **471** and gases **473** are transported to the stack or are recycled to unit **480**.

Depending on the feed rate to unit **480**, a portion of gas **474** can be recycled to unit **480** as purge gas **484**.

A normal approach to providing fuel to a molten carbonate fuel cell is through the use of partial oxidation reforming or through steam reforming using methane as the fuel both in the reforming feed and in the flame that provides the heat energy to the reformer. The controlled plasma glassification- fuel cell system is expected to provide enhanced non-combustion waste to energy conversion. The ultra low emissions from the controlled plasma glassification-fuel cell system are expected to enable the siting of these systems over that of combustion processes such as incineration or pyrolysis systems which fuel combustion electrical generation systems. The high efficiency of the molten carbonate fuel cell for converting the useful chemical energy of the waste material into electrical energy makes the controlled plasma glassification-fuel cell system an improved process in maximizing the recovery of resources from waste. This benefits society from many standpoints. The recovery of the most useful recyclable in most wastes is energy. To maximize the recovery of energy will be a major benefit. In addition to maximizing the energy recovery, the controlled plasma glassification can convert a portion of the waste into stable nonleachable glass and will minimize the emissions of hazardous effluents. The coupling of the molten carbonate fuel cell with the waste conversion units of the present invention will act to further minimize the effluents to an ultra low level providing the optimum process for clean conversion of waste to energy and recyclable products.

It should be appreciated by those skilled in the art that the specific embodiments disclosed above may readily be utilized as a basis for modifying or designing other structures for carrying out the same purpose of the present invention. It should also be realized by those skilled in the art that such equivalent constructions do not depart from the spirit and scope of the invention as set forth in the appended claims.

**Claims**

**1.** A waste conversion unit, comprising:

first, second and third arc plasma electrodes;
a first power supply source connected to the first, second and third arc plasma electrodes and **characterized in that** arc plasmas generated between each of the arc plasma electrodes and a molten pool in the unit are on top of or within the molten pool;
first, second and third joule heating electrodes; and
a second power supply source connected to the first, second and third joule heating electrodes and configured to provide volumetric joule heating in the molten pool;

wherein the first and second power supply sources are configured such that each is separately and independently controlled in response to a sensed process parameter without detrimental electrical interaction with one another.

2. The waste conversion unit of claim 1, and either:

a) wherein the first power supply source supplies direct current to the first, second and third arc plasma electrodes;

b) wherein the second power supply source supplies alternating current to the first, second and third joule heating electrodes;

c) wherein the first power supply source supplies alternating current to the first, second and third arc plasma electrodes, in which case, optionally,

wherein the second power supply source supplies alternating current to the first, second and third joule heating electrodes;

d) further including a port for gases formed in the unit to exit therefrom, in which case, optionally,

wherein the port is positioned proximate to a top of the unit, in which case, further optionally, either:

i) further including a second port for gases formed in the unit to exit therefrom,

ii) wherein the second port is positioned on a side surface of the unit and proximate to a top of the unit, or

iii) wherein the second port is positioned proximate to a top of the unit;

e) wherein the first power supply source supplies direct current to the first, second and third arc plasma electrodes, the first power supply source comprising:

a transformer having first, second and third primary windings and first, second and third secondary windings, the first, second and third primary windings connected to an AC power source that provides an AC current and an AC voltage;

first, second and third current limiting reactors respectively connected to the first, second and third secondary windings;

first, second and third switches respectively connected in series to the first, second and third current limiting reactors;

first, second and third rectifiers for converting the AC power to DC power having a DC current and a DC voltage, the rectifiers each having first and second outputs; and

first, second and third DC inductors, each inductor having first and second ends, the first ends of the first, second and third inductors respectively connected to the first outputs of the first, second and third rectifiers, and the second ends of the first, second and third inductors respectively connected to the first, second and third arc plasma electrodes, in which case, optionally, either:

i) wherein the second outputs of the first, second and third rectifiers are connected to a counter electrode in the unit,

ii) wherein the first, second and third rectifiers are diode bridge rectifiers,

iii) wherein the first, second and third switches are silicon controlled rectifier switches, in which case, further optionally,

wherein the silicon controlled rectifier switches each include first and second thyristors, in which case, yet further optionally,

wherein the silicon controlled rectifier switches each further include a load limiting reactor connected in parallel with the first and second thyristors of each switch, in which case yet further optionally,

further including a snubber circuit connected in parallel with the first and second thyristors of each switch, in which case, yet further optionally, wherein the snubber circuit comprises a capacitor connected in series with a resistor;

iv) wherein the first, second and third secondary windings are connected in wye, in which case, optionally,

wherein the first, second and third primary windings are connected in delta, or

wherein a neutral of the wye connected secondary windings is connected to a counter electrode in the unit, in which latter case, yet further optionally,

further including at least one capacitor having first and second terminals, the first terminal connected to the neutral and the second terminal connected to the counter electrode and ground, or

further including a capacitor having first and second terminals and a resistor having first and second terminals, wherein the first terminal of the capacitor is connected to the neutral and the second terminal of the capacitor is connected to the first terminal of the resistor and wherein the second terminal of the resistor is connected to the counter electrode and ground; or

f) wherein the second power supply source supplies alternating current to the first, second and third arc plasma electrodes, the second power supply source comprising:

a transformer having first, second and third primary windings and first, second and third secondary windings, the first, second and third primary windings connected to an AC power source that provides an AC current and an AC voltage;

first, second and third current limiting reactors each having first and second ends, the first ends of the first, second and third current limiting reactors respectively connected to the first, second and third secondary windings;

first, second and third capacitors reactors respectively connected to the second ends of the first, second and third current limiting reactors; and

first, second and third switches respectively connected in series to the first, second and third capacitors and respectively connected to the first, second and third joule heating electrodes, in which case, optionally, either:

i) wherein the first, second and third switches are silicon controlled rectifier switches, in which case, further optionally,

wherein the silicon controlled rectifier switches each include first and second thyristors, in which case yet further optionally,

further including a snubber circuit connected in parallel with the first and second thyristors of each switch, in which case, yet further optionally,

wherein the snubber circuit comprises a capacitor connected in series with a resistor; or

ii) wherein the first, second and third secondary windings are connected in wye, in which case, optionally,

wherein the first, second and third primary windings are connected in delta, or

wherein a neutral of the wye connected secondary windings is connected to a counter electrode in the unit, in which latter case, optionally either:

A) further including at least one capacitor connected to the neutral, in which case optionally,

further including at least one resistor connected to the neutral and to the capacitor, or

B) further including at least one switch connected to the neutral, in which case, optionally,

wherein the switch is a silicon controlled rectifier switch, in which case further optionally,

wherein the silicon controlled rectifier switch includes first and second thyristors, in which case, yet further optionally,

further including a snubber circuit connected in parallel with the first and second thyristors, in which case, yet further optionally,

wherein the snubber circuit comprises a capacitor connected in series with a resistor.

3. A power supply source for supplying direct current to first, second and third arc plasma electrodes in a waste conversion unit, the power supply source comprising:

a transformer having first, second and third primary windings and first, second and third secondary windings, the first, second and third primary windings connected to an AC power source that provides an AC current and an AC voltage;

first, second and third current limiting reactors respectively connected to the first, second and third secondary windings;

first, second and third switches respectively connected in series to the first, second and third current limiting reactors;

first, second and third rectifiers for converting the AC power to DC power-having a DC current and a DC voltage, the rectifiers each having first and second outputs; and

first, second and third DC inductors, each inductor having first and second ends, the first ends of the first, second and third inductors respectively connected to the first outputs of the first, second and third rectifiers, and the second ends of the first, second and third inductors respectively connected to the first, second and third arc plasma electrodes.

4. The power supply source of claim 3, and either:

a) wherein the second outputs of the first, second and third rectifiers are connected to a counter electrode in the unit;

b) wherein the first, second and third rectifiers are diode bridge rectifiers;

c) wherein the first, second and third switches are silicon controlled rectifier switches, in which case, optionally,

wherein the silicon controlled rectifier switches each include first and second thyristors, in which case, further optionally,

wherein the silicon controlled rectifier switches each further include a load limiting reactor connected in parallel with the first and second thyristors of each switch, in which case, yet further optionally,

further including a snubber circuit connected in parallel with the first and second thyristors of each switch, or

wherein the snubber circuit comprises a capacitor connected in series with a resistor; or

d) wherein the first, second and third secondary windings are connected in wye, in which case, optionally,

wherein the first, second and third primary windings are connected in delta, or

wherein a neutral of the wye connected secondary windings is connected to a counter electrode in the unit, in which case, further optionally,

further including at least one capacitor connected to the neutral, or

further including at least one resistor connected to the neutral and to the capacitor.

5. A power supply source for supplying alternating current to first, second and third arc plasma electrodes, the power supply source comprising:

a transformer having first, second and third primary windings and first, second and third secondary windings, the first, second and third primary windings connected to an AC power source that provides an AC current and an AC voltage;

first, second and third current limiting reactors each having first and second ends, the first ends of the first, second and third current limiting reactors respectively connected to the first, second and third secondary windings;

first, second and third capacitors reactors respectively connected to the second ends of the first, second and third current limiting reactors; and

first, second and third switches respectively connected in series to the first, second and third capacitors and respectively connected to the first, second and third joule heating electrodes.

6. The power supply source of claim 5, wherein either:

a) the first, second and third switches are silicon controlled rectifier switches, and, optionally,

wherein the silicon controlled rectifier switches each include first and second thyristors, in which case, further optionally,

further including a snubber circuit connected in parallel with the first and second thyristors of each switch, in which case, further optionally,

wherein the snubber circuit comprises a capacitor connected in series with a resistor, or

b) wherein the first, second and third secondary windings are connected in wye, in which case, optionally, either

wherein the first, second and third primary windings are connected in delta, or

wherein a neutral of the wye connected secondary windings is connected to a counter electrode in the unit, in which latter case, optionally, either

i) further including at least one capacitor connected to the neutral, in which case, further optionally,

further including at least one resistor connected to the neutral and to the capacitor, or

ii) further including at least one switch connected to the neutral, in which case, optionally,

wherein the switch is a silicon controlled rectifier switch, in which case, optionally,

wherein the silicon controlled switch includes first and second thyristors, in which case, further optionally,

further including a snubber circuit connected in parallel with the first and second thyristors, in which case, yet further optionally,

wherein the snubber circuit comprises a capacitor connected in series with a resistor.

7. A power supply source for supplying direct current to first and second arc plasma electrodes in a waste conversion unit, the power supply source comprising:

a transformer having first, second and third primary windings and first, second and third secondary windings, the first, second and third primary windings connected to an AC power source that provides an AC current and an AC voltage;

first, second and third current limiting reactors respectively connected to the first, second and third secondary windings;

first, second and third switches respectively connected in series to the first, second and third current limiting reactors;

a diode bridge rectifier for converting the AC current and the AC voltage to DC power having a DC current and a DC voltage, the rectifier having first, second and third inputs and first and second outputs, the first, second and third inputs respectively connected to the first, second and third switches;

first ends of the first inductors, each inductor having first and second ends, the first ends of the first and second inductors respectively connected to the first and second outputs of the rectifier, and the second ends of the first and second inductors respectively connected to the first and second arc plasma electrodes.

8. The power supply source of claim 7, and either:

a) wherein the first, second and third secondary windings are connected in wye, in which case, optionally,
wherein a neutral of the wye connected secondary windings is connected to a counter electrode;
b) wherein the first, second and third switches each include first and second thyristors, in which case, optionally,
further including first, second and third metal oxide varistors connected in parallel with the first and second thyristors of each switch, in which case, further optionally,
further including first, second and third load limiting reactors respectively connected in parallel with the first and second thyristors of each switch and respectively connected in parallel with the first, second and third metal oxide varistors, in which case, yet further optionally,
wherein the load limiting reactors are air gap reactors, or
further including first, second and third current transformers respectively connected to the load limiting reactors; or
c) further including a clamping diode connected between the first and second outputs of the diode bridge rectifier and the first and second DC inductors, in which case, optionally, either:

i) wherein the first, second and third secondary windings are connected in wye, in which case, further optionally,
wherein a neutral of the wye connected secondary windings is connected to a counter electrode; or
ii) wherein the first, second and third switches each include first and second thyristors, in which case, optionally,
further including first, second and third metal oxide varistors connected in parallel with the first and second thyristors of each switch, in which case, further optionally,
further including first, second and third load limiting reactors respectively connected in parallel with the first and second thyristors of each switch and respectively connected in parallel with the first, second and third metal oxide varistors, in which case, further optionally,
wherein the load limiting reactors are air gap reactors, or
further including first, second and third current transformers respectively connected to the load limiting reactors.

9. A power supply source for supplying direct current to first and second arc plasma electrodes in a waste conversion unit, the power supply source comprising:

a first transformer having first, second and third primary windings and first, second and third secondary windings, the first, second and third primary windings connected to an AC power source that provides an AC current and an AC voltage;

first, second and third current limiting reactors respectively connected to the first, second and third secondary windings;

a thyristor rectifier having first, second and third inputs and first and second outputs, the first, second and third thyristor rectifier inputs respectively connected to the first, second and third current limiting reactors;

first and second DC inductors, each inductor having first and second ends, the first ends of the first and second inductors respectively connected to the first and second outputs of the thyristor rectifier, and the second ends of the first and second inductors respectively connected to the first and second arc plasma electrodes;

a second transformer having first, second and third primary windings and first, second and third secondary windings, the first, second and third primary windings respectively connected to the first, second and third secondary windings of the first transformer;

first, second and third linear inductors respectively connected to the first, second and third secondary windings of the second transformer; and

a diode bridge rectifier having first, second and third inputs and first and second outputs, the first, second and third inputs respectively connected to the first, second and third linear inductors, the first output connected to the first DC inductor and the second output connected to the second DC inductor.

10. The power supply source of claim 9, further including a neutral connected to the first, second and third secondary windings of the first transformer and connected to a counter electrode, and, optionally either:

a) further including a neutral connected to the first, second and third secondary windings of the second transformer and connected to a counter electrode;

b) further including a neutral connected to the first, second and third secondary windings of the first transformer is connected to a counter electrode and further including a neutral connected to the first, second and third secondary windings of the second transformer and connected to the counter electrode; or

c) further including a plurality of current transformers.

11. A power supply source for supplying direct current to first and second arc plasma electrodes in a waste conversion unit, the power supply source comprising:

a transformer having first, second and third primary windings and first, second and third secondary windings, the first, second and third primary windings connected to an AC power source that provides an AC current and an AC voltage;

first, second and third current limiting reactors respectively connected to the first, second and third secondary windings;

a thyristor rectifier having first, second and third inputs and first and second outputs, the first, second and third thyristor rectifier inputs respectively connected to the first, second and third current limiting reactors;

first, second, third and fourth DC inductors, each inductor having first and second ends, the first ends of the first and second inductors respectively connected to the first and second outputs of the thyristor rectifier, the second ends of the first and second inductors respectively connected to the first and second ends of the third and fourth inductors and the second ends of the third and fourth inductors respectively connected to the first and second arc plasma electrodes;

first, second and third linear inductors respectively connected to the first, second and third secondary windings of the transformer; and

a diode bridge rectifier having first, second and third inputs and first and second outputs, the first, second and third inputs respectively connected to the first, second and third linear inductors, the first output connected to the first DC inductor and the second output connected to the second DC inductor.

12. The power supply source of claim 11, and either:

a) further including a neutral connected to the first, second and third secondary windings of the transformer and connected to a counter electrode;

b) wherein the first, second and third secondary windings are connected in delta; in which case optionally, further including a neutral connected to the first, second and third secondary windings of the transformer and connected to a counter electrode; or

c) further including a plurality of current transformers.

13. A system for treating waste, the system comprising:

a waste conversion unit which produces gases; and

a fuel cell connected to the waste conversion unit such that gases from the waste conversion unit are introduced into the fuel cell for producing electrical energy.

14. The system of claim 13, and either:

a) wherein the fuel cell is a molten carbonate fuel cell, in which case, optionally, either:

i) wherein the fuel cell includes an electrolyte, in which case, further optionally,

wherein the electrolyte comprises a mixture of alkali carbonates supported in a lithiated aluminate matrix;

ii) further comprising a gas separation unit connected to the fuel cell, in which case, further optionally,

wherein the gas separation unit is a pressure swing adsorption unit;

iii) further including a gas cleanup unit connected to the waste conversion unit and the fuel cell such that gases exiting the waste conversion unit are cleaned in the gas cleanup unit prior to introduction in the fuel cell;

b) wherein the fuel cell is an alkaline fuel cell;

c) wherein the fuel cell is a phosphoric acid fuel cell;

d) wherein the fuel cell is a proton transfer membrane;

e) wherein the fuel cell includes an electrolyte; in which case, optionally,

wherein the electrolyte comprises a mixture of alkali carbonates supported in a lithiated aluminate matrix;

f) further comprising a gas separation unit connected to the fuel cell; in which case, optionally,

wherein the gas separation unit is a pressure swing adsorption unit; or

g) further including a gas cleanup unit connected to the waste conversion unit and the fuel cell such that gases exiting the waste conversion unit are cleaned in the gas cleanup unit prior to introduction in the fuel cell.

15. A system for treating waste, the system comprising:

a waste conversion unit which produces gases;

a gas cleanup unit connected to the waste conversion unit for cleaning gases from the waste conversion unit; and

a fuel cell connected to the gas cleanup unit such that gases from the gas cleanup unit are introduced into the fuel cell for producing electrical energy.

16. The system of claim 15, and either:

a) wherein the fuel cell is a molten carbonate fuel cell, in which case, optionally,

wherein the fuel cell includes an electrolyte, in which case, further optionally,

wherein the electrolyte comprises a mixture of alkali carbonates supported in a lithiated aluminate matrix, in which case, further optionally,

further comprising a gas separation unit connected to the fuel cell, in which case, yet further optionally,

wherein the gas separation unit is a pressure swing adsorption unit;

b) wherein the fuel cell includes an electrolyte, in which case, optionally,

wherein the electrolyte comprises a mixture of alkali carbonates supported in a lithiated aluminate matrix; or

c) further comprising a gas separation unit connected to the fuel cell, in which case, optionally,

wherein the gas separation unit is a pressure swing adsorption unit.

FIG.1A

FIG.1B

FIG.1C

EP 1 375 628 A2

FIG.1D

EP 1 375 628 A2

# FIG.1E

20

77

**AC POWER SUPPLY**

**ARC POWER SUPPLY**

70

83    23

(+)

27b

(−)

21    24b    27a

31    24a

32    82

66a

32    66b    30a

30    66a    69

36    33    35    30

68    67

25

37    26

## FIG.1F

FIG.1G

EP 1 375 628 A2

# FIG.1H

FIG.1I

## FIG. 1J

## FIG.1K

EP 1 375 628 A2

# FIG.1L

FIG.2

EP 1 375 628 A2

# FIG.3A

158

160

24a  24b  24c

162a  162b  162c

159  161a  161b  161c

163a  163b  163c

24d  24e  24f

# FIG.3B

150

(−)  157a  156c  156a  155a  154a  153

27a

156e  155b  154b

27b  156f  155c  154c

(+)  157b  156d  156b

28  CLOSED

GROUND  OPEN

164  165

## FIG.4A

## FIG.4B

EP 1 375 628 A2

FIG.4D

FIG.4C

FIG.5

## FIG.6

FIG.7A-1

TO FIRING CIRCUIT CONTROL TRANSFORMER

TO FIG. 7A-2

FIG.7A-2

FROM FIG. 7A-1

FIG.7B  260

480 V SECONDARY

TO FIRING CIRCUIT CONTROL TRANSFORMER

FURNACE SHELL

DC CT-7

DC CT-8

FIG.8A

FIG.8B

FIG.8C-1  251

TO FIG. 8C-2

# FIG.8C-2

242a

242c

242e

242

243a

243b

243c

(−)

(−)

(−)

66a    27a

66b    27b

66c    27c

21

(+)

244    28

EP 1 375 628 A2

FIG.8D

# FIG.8E

# FIG.9A

FIG.9B

# FIG.9C

FIG.9D-1

233a    233b    233c

232a    232b    232c

277a    277c

A    C

275

276

B    277b

N

279

278a    278b    278c

A    B    C
SEC    SEC    SEC

271

1

236a    236b    236c

TO FIG.9D-2

FIG.9D-2

EP 1 375 628 A2

*FIG.9E-1*

280

250

232a 232b 232c
233a 233b 233c
248a 248 248b 248c

271 1

SEC C
249a 281a
239b 246a 238a 239a 237a 245a
238b 239d 246b 239c 237b 245b

2 282
281b
SEC B
249b 246c
239f 238c 239e 237c 245c
238d 239g 237d 245d
239h 246d 245d

TO FIG.9E-2

FIG.9E-2

FIG.10A

FIG.10B

EP 1 375 628 A2

83

FIG.10C

FIG.10D-1

FIG.10D-2

EP 1 375 628 A2

FIG.10E-1

TO FIG.10E-2

FROM FIG.10E-1

FIG.10E-2

# FIG.10F-1

FIG.10F-2

# FIG. 10F-3

345

363

A

B

C

346g  346h  346i

369  348n  348p  346r  362

360

358  359  361

357  348q

348m  348o

347c

371c  366

27c

66c

21

28

FROM FIG. 10F-2

FIG. 11A

FIG.11B

## FIG.11C

# FIG.11D

# FIG.11E

FIG.11F-1

398
401
375c
375b
375a
374a 374b 374c
X Y Y
399a 399b 399c
378d
379d
400b
402b SEC B
378c
379c
378b
379b
400a
402a SEC A
378a
379a

TO FIG. 11F-2

FIG.11F-2

FROM FIG. 11F-1

FIG.11G

403

# FIG.11H-1

406

SEC
A

407a 405a

378a 378b

379a 379b

382a 382b

381b 381d

381a 381c

380a 383a 380b 383b

21

24a 24b

28

TO FIG.
11H-2

# FIG.11H-2

FROM FIG.
11H-2

TO FIG.
11H-3

## FIG.11H-3

FROM FIG.
11H-2

# FIG.11I

FIG.12

MEDIUM VOLTAGE
UTILITY POWER

480 VOLT
AC POWER

UTILITY COMPANY
METERING

GAS TURBINE
OR
INTERNAL
COMBUSTION
ENGINE

$H_2O$

EP 1 375 628 A2

FIG.13A

FIG.13B

FIG.14A

# FIG.14B

EP 1 375 628 A2

# FIG.15

440

WASTE TREATMENT UNIT (441)
442 →
GAS CLEAN UP UNIT (443)
444b →
444a
ENGINE INDUCTION SYSTEM/TURBO (445) — 446a
447
SPARK IGNITION ENGINE — 446b, 448
450
OXIDATION CATALYST (451) → 452
453 → GENERATOR (454)
455
456

EP 1 375 628 A2

# FIG.16

# FIG.17

OPERATION OF ENGINE WITHOUT SUPPLEMENTAL FUEL

NO ← DETERMINE IF SUPPLEMENTAL FUEL NECESSARY — 461

YES

462 — ADD SUPPLEMENTAL FUEL DIRECTLY OR USE PLASMA FUEL CONVERTER

DIRECTLY

463 — ADD SUPPLEMENTAL FUEL UNTIL LEAN LIMIT CONDITION FOR MIXED FUEL NOT MET. THEN ADD REQUIRED HYDROGEN-RICH GAS FROM PLASMA FUEL CONVERTER WHILE ADDING FURTHER SUPPLEMENTAL FUEL

PLASMA FUEL CONVERTER — 457

449 — SPARK IGNITION ENGINE

EP 1 375 628 A2

# FIG.18

EP 1 375 628 A2

FIG.19

EP 1 375 628 A2